# EUROPÄISCHE PATENTANMELDUNG

(11) **EP 4 104 974 A1**
(43) Veröffentlichungstag der Anmeldung: **21.12.2022**
(21) Anmeldenummer: 22184297.4
(22) Anmeldetag: 27.09.2018
(51) Int. Cl.: B25F 5/00, B23D 59/00

(54) **MOBILE WERKZEUGMASCHINE**

(30) Priorität: 29.09.2017 DE 102017122742; 13.12.2017 DE 102017129812
(62) Teilanmeldung aus: 18782915.5
(71) Anmelder: Festool GmbH, 73240 Wendlingen am Neckar (DE)
(72) Erfinder: Frank, Josua, 73660 Urbach (DE)
(74) Vertreter: Patentanwälte Bregenzer und Reule Partnerschaftsgesellschaft mbB

(57) **Zusammenfassung**

Die Erfindung betrifft eine mobile Werkzeugmaschine (10), nämlich eine Hand-Werkzeugmaschine oder halbstationäre Werkzeugmaschine, zur Bearbeitung eines Werkstücks (W), wobei die Werkzeugmaschine (10) ein insbesondere plattenartiges Führungselement (30) mit einer Führungsfläche (32) zum Führen der Werkzeugmaschine (10) an dem Werkstück (W) oder des Werkstücks (W) an der Werkzeugmaschine (10) aufweist, wobei die Werkzeugmaschine (10) eine Antriebseinheit (11) mit einem Antriebsmotor (13) zum Antreiben einer an der Antriebseinheit (11) angeordneten Werkzeugaufnahme (14) zur Aufnahme eines Arbeitswerkzeugs (15) aufweist, wobei die Werkzeugmaschine (10) einen Werkzeugsensor (61, 62) aufweist, dessen Erfassungsbereich (EB1, EB2) zumindest teilweise durch Partikel belastet ist, die bei einer Bearbeitung eines Werkstücks (W) anhand des Arbeitswerkzeugs (15) erzeugt werden. Es ist vorgesehen, dass die Werkzeugmaschine mindestens ein Optimierungsmittel (OPT) zur Verringerung der Auswirkung der im Erfassungsbereich (EB1, EB2) befindlichen Partikel auf ein Werkzeugsensorsignal des Werkzeugsensors (61, 62) aufweist.

## Beschreibung

Die Erfindung betrifft eine mobile Werkzeugmaschine, nämlich eine Hand-Werkzeugmaschine oder halbstationäre Werkzeugmaschine, zur Bearbeitung eines Werkstücks, wobei die Werkzeugmaschine ein insbesondere plattenartiges Führungselement mit einer Führungsfläche zum Führen der Werkzeugmaschine an dem Werkstück oder des Werkstücks an der Werkzeugmaschine aufweist, wobei die Werkzeugmaschine eine Antriebseinheit mit einem Antriebsmotor zum Antreiben einer an der Antriebseinheit angeordneten Werkzeugaufnahme zur Aufnahme eines Arbeitswerkzeugs aufweist, wobei die Werkzeugmaschine einen Werkzeugsensor aufweist, dessen Erfassungsbereich zumindest teilweise durch Partikel belastet ist, die bei einer Bearbeitung eines Werkstücks anhand des Arbeitswerkzeugs erzeugt werden.

Eine derartige Werkzeugmaschine ist beispielsweise in EP 1 980 363 A1 beschrieben.

Der Erfassungsbereich des Werkzeugsensors, beispielsweise einer Kamera, ist also auf den Arbeitsbereich bzw. den Werkstückkontaktbereich des Arbeitswerkzeugs mit dem Werkstück gerichtet. Dort entstehen Späne, Staub und dergleichen andere Partikel, die jedenfalls das Werkzeugsensorsignal des Werkzeugsensors deutlich beeinträchtigen.

Es ist daher die Aufgabe der vorliegenden Erfindung, eine verbesserte Werkzeugmaschine bereit zu stellen, die eine verbesserte sensorische Erfassung des Werkzeugsensors bereitstellt.

Zur Lösung der Aufgabe ist bei einer Werkzeugmaschine der eingangs genannten Art vorgesehen, dass sie mindestens ein Optimierungsmittel zur Verringerung der Auswirkung der im Erfassungsbereich befindlichen Partikel auf ein Werkzeugsensorsignal des Werkzeugsensors aufweist.

Es ist möglich, dass der Erfassungsbereich mindestens eines Werkzeugsensors zumindest teilweise durch Partikel belastet ist, die bei einer Bearbeitung eines Werkstücks anhand des Arbeitswerkzeugs erzeugt werden. In diesem Fall ist vorteilhaft vorgesehen, dass die Werkzeugmaschine mindestens ein Optimierungsmittel zur Verringerung der Auswirkung der im Erfassungsbereich befindlichen Partikel auf ein Werkzeugsensorsignal des Werkzeugsensors aufweist.

Das Werkzeugsensorsignal kann das Ausgangssignal des Werkzeugsensors oder ein anhand eines Ausgangssignals des Werkzeugsensors erzeugtes oder erzeugbares Signal sein. Das Ausgangssignal des Werkzeugsensors wird also anhand der Optimierungsmittel bereits verbessert, um das Werkzeugsensorsignal zu erzeugen.

Es ist also ein Grundkonzept des Optimierungsmittels oder der Optimierungsmittel, dass die ohnehin im Erfassungsbereich unvermeidlichen Partikel, beispielsweise Späne, Staub oder dergleichen, anhand des mindestens einen Optimierungsmittels sozusagen optisch ausgeschaltet oder in ihrer Wirkung auf das Werkzeugsensorsignal reduziert werden. Dies schließt natürlich nicht aus, dass auch weitere Maßnahmen zur Verbesserung der Bildqualität vorgesehen sind, so dass beispielsweise Spülluft den Partikeleintrag im Erfassungsbereich des Werkzeugsensors vermindert oder dort befindliche Partikel möglichst optimal wegspült. Beispielsweise kann ein Spülluftstrom in Gestalt von einem Saugstrom oder Kühlluftstrom vorgesehen sein, der Partikel aus dem Erfassungsbereich sozusagen herausspült. Es ist nämlich insbesondere möglich, dass der Erfassungsbereich des Werkzeugsensors von Spülluft beispielsweise von einem Saugstrom und/oder einem Kühlluftstrom, des Antriebsmotors durchströmt ist.

Allerdings ist das mindestens eine Optimierungsmittel zweckmäßigerweise ein von der Spülluft, beispielsweise einem Saugstrom oder Kühlluftstrom, separates Mittel.

Das mindestens eine Optimierungsmittel umfasst zweckmäßigerweise ein digitales Signalverarbeitungsmittel oder ist dadurch gebildet, wobei das Signalverarbeitungsmittel zur Verarbeitung oder Bildung des Werkzeugsensorsignals vorgesehen oder ausgestaltet ist. Somit kann also beispielsweise ein Signal, welches der Werkzeugsensor erzeugt, durch das Signalverarbeitungsmittel bearbeitet oder verarbeitet werden, um das Werkzeugsensorsignal zu bilden.

Beispielsweise umfasst das digitale Signalverarbeitungsmittel mindestens einen digitalen Filter zur Filterung von durch die Partikel erzeugten Bildpunkten oder ist dadurch gebildet. Die Bildpunkte sind beispielsweise Störinformationen, die von dem digitalen Filter ausgefiltert werden. Der digitale Filter ist beispielsweise durch einen Programmcode abgebildet, der durch einen Prozessor der Werkzeugmaschine ausführbar ist.

Das digitale Signalverarbeitungsmittel kann zweckmäßigerweise einen Rangordnungsfilter umfassen. Aber auch ein Histogrammfilter, ein Helligkeitsfilter oder dergleichen sind ohne weiteres vorteilhaft. Weiter ist es möglich, dass die vorgenannten Filter miteinander kombiniert werden, d.h. dass beispielsweise ein Helligkeitsfilter angesetzt wird und anschließend ein Rangordnungsfilter.

Bei dem Rangordnungsfilter ist es vorteilhaft, dass er einen sogenannten Medianfilter umfasst oder dadurch gebildet ist. Wird beispielsweise in einer definierten Umgebung eines Pixels weitere Bildinformation gesammelt und dann ein mittlerer Grauwert, also ein Median, dieser sortieren Liste gewählt, wobei dann das Störpixel durch einen mittleren Wert, insbesondere einen Grauwert oder Farbwert, ersetzt wird.

Vorteilhaft können aber auch andere Filter, beispielsweise ein Gauß-Filter und/oder ein Bilateral-Filter und/oder ein Mittelwertfilter/Averaging-Filter vorgesehen sein. Ein Gauß-Filter ist beispielsweise ein sogenannter Frequenz-Filter, bei welchem eine jeweilige Sprungantwort keine Überschwingung aufweist und gleichzeitig eine maximale Flankensteilheit im Übergangsbereich erzielt wird. Die Übertragungsfunktion und die Impulsantwort haben beispielsweise den Verlauf einer sogenannten Gauß'schen Glockenkurve.

Ein bilateraler Filter ist beispielsweise ein nichtlinearer Filter, der genutzt wird, um Bilder weich zu zeichnen, gleichzeitig aber Objektkanten zu erhalten. Eine Objektkante kann beispielsweise ein Sägeschnitt in das Werkstück sein. Aber auch eine Oberfläche oder Kante des Arbeitswerkzeugs kann auf diesem Wege gefiltert werden.

Ein Histogramm-Filter oder Histogramm-Ausgleich ist vorteilhaft, um beispielsweise eine gleichmäßigere oder bessere Helligkeitsverteilung zu erzielen. Mithin wird also das Signal des Werkzeugsensors anhand des Histogramm-Abgleichs hinsichtlich seiner Helligkeitsverteilung und/oder Farbverteilung gleichmäßiger.

An einer Frontseite oder einer transparenten Abdeckung des Werkzeugsensors ist vorzugsweise eine Gleitbeschichtung vorgesehen, an der die Partikel entlang gleiten oder von der die Partikel abgleiten können. Die transparente Abdeckung wird beispielsweise von einer Frontlinse des Werkzeugsensors gebildet. Es kann auch ein Filter oder eine transparente Scheibe als transparente Abdeckung vorgesehen sein.

Das mindestens eine Optimierungsmittel kann aber auch eine Beleuchtungseinrichtung umfassen oder dadurch gebildet sein. Somit wird also der Erfassungsbereich sozusagen gezielt durch die Beleuchtungseinrichtung aufgehellt oder ausgeleuchtet, was die Bilderfassung deutlich verbessert.

Die Beleuchtungseinrichtung ist zweckmäßigerweise zur Beleuchtung des Erfassungsbereiches in einem Winkel quer zu einer optischen Achse des Werkzeugsensors, insbesondere einer Kamera, angeordnet. Insbesondere ist vorgesehen, dass die Beleuchtungseinrichtung die ausschließliche Beleuchtung des Erfassungsbereichs darstellt oder bildet. Somit wird also gezielt der Erfassungsbereich nicht in oder nahe bei der optischen Achse des Werkzeugsensors ausgeleuchtet, so dass es zu störenden Reflexionen kommt. Die Partikel würden nämlich in diesem Fall das Licht der Beleuchtungseinrichtung sozusagen in die optische Achse bzw. die Erfassungsachse des Werkzeugsensors zurückspiegeln oder zurückreflektieren.

Die vorgenannten Winkel zwischen der optischen Achse des Werkzeugsensors und der Lichtquelle sind zweckmäßigerweise bezüglich mindestens einer Ebene vorgesehen, vorzugsweise bezüglich mehrerer Ebenen. Beispielsweise sind die Winkel in Bezug auf eine zu der Führungsfläche parallele und/oder auf eine zu der Führungsfläche winkelige, beispielsweise rechtwinkelige, Ebene vorgesehen.

Bei dem Winkel ist es vorteilhaft, wenn er mindestens 30° beträgt. Steilere Winkel, beispielsweise 45°, mindestens 60° oder dergleichen, sind jedoch vorteilhafter. Ein Winkel von beispielsweise etwa 80-120°, insbesondere etwa 90°, ist besonders günstig.

Mithin ist also eine Mittelachse oder Lichtkegel-Mittelachse in einem Winkel von beispielsweise 30°, 40°, 60° oder besonders bevorzugt 80-90° angeordnet. Mithin wird also der Erfassungsbereich sozusagen quer zur optischen Achse des Werkzeugsensors angeleuchtet.

Bei der Beleuchtungseinrichtung ist es zweckmäßig, wenn sie zu einer diffusen Ausleuchtung des Erfassungsbereiches ausgestaltet ist. Beispielsweise umfasst die Beleuchtungseinrichtung eine oder mehrere Lichtquellen, die hinter einer Streuscheibe, beispielsweise einer Fresnel-Linse, einer mattierten Scheibe oder dergleichen, angeordnet ist oder sind. Somit werden beispielsweise starke und/oder punktuelle Reflexionen vermieden, beispielsweise an den Partikeln, einer Werkstückoberfläche oder Komponenten der Werkzeugmaschine.

Ein vorteilhaftes Konzept sieht vor, dass die Beleuchtungseinrichtung zur Beleuchtung des Erfassungsbereichs des Werkzeugsensors voneinander entgegengesetzten Seiten angeordnet ist. Die Beleuchtungseinrichtung weist beispielsweise Leuchtmittel an einander entgegengesetzten Seiten des Erfassungsbereichs auf, insbesondere LEDs oder dergleichen. Wenn voneinander entgegengesetzten Seiten beleuchtet wird, ist es vorteilhaft, wenn wiederum ein Winkel zwischen den Lichtkegeln oder den Hauptabstrahlungsachsen eines jeweiligen Leuchtmittels und die optische Achse des Werkzeugsensors mindestens 30°, vorzugsweise mindestens 45° beträgt. Besonders günstig ist es, wenn die Hauptachsen oder Lichtkegelachsen der Leuchtmittel oder der Beleuchtungseinrichtung etwa 80-120°, insbesondere etwa 90°, winkelig zur optischen Achse des Werkzeugsensors angeordnet sind. Durch die Beleuchtung voneinander entgegengesetzten oder beiden Seiten rechtwinkelig beispielsweise zum Sägeblatt oder sonstigem Arbeitswerkzeug wird ein Schattenwurf oder Schlagschatten vermieden oder jedenfalls verringert.

Weiterhin ist es vorteilhaft, wenn die Werkzeugmaschine eine Abdeckungseinrichtung zur Abdeckung des Erfassungsbereichs gegenüber Fremdlicht-Einflüssen aufweist. Somit ist also der Erfassungsbereich sozusagen vor Fremdlicht-Einflüssen geschützt. Wenn in dem Erfassungsbereich dann die vorgenannte Beleuchtungseinrichtung angeordnet ist, ist eine gezielte Beleuchtung des Erfassungsbereiches möglich, so dass eine optimale Abstimmung der Beleuchtungseinrichtung und dem Werkzeugsensor möglich ist. So kann beispielsweise eine bestimmte Lichtfarbe erzeugt werden, die von dem Werkzeugsensor optimal erfassbar ist.

Die Abdeckungseinrichtung kann sozusagen eine dediziert den Erfassungsbereich abdeckende Abdeckungseinrichtung sein, d.h. beispielsweise eine Blende oder dergleichen. Es ist aber auch möglich, dass zum Schutz des Arbeitswerkzeugs oder für andere Maßnahmen erforderliche Komponenten der Werkzeugmaschine, beispielsweise eine Staubabdeckung oder dergleichen, einen Teil der Abdeckungseinrichtung bilden oder die Abdeckungseinrichtung als Ganzes darstellen.

Der Erfassungsbereich kann dann, wenn die Werkzeugmaschine vom Werkstück entfernt ist oder das Werkstück von der Werkzeugmaschine entfernt ist, zumindest teilweise für Fremdlicht offen sein. Bevorzugt ist es jedoch, wenn die Abdeckungseinrichtung und das Werkstück beim Betrieb der Werkzeugmaschine den Erfassungsbereich gegenüber Fremdlicht-Einflüssen abdecken, zumindest im Wesentlichen abdecken. Wenn dann in dem sozusagen dunklen, abgedeckten Bereich die Beleuchtungseinrichtung aktiv wird, ist eine optimale Bilderfassung und/oder Bildauswertung möglich. Beispielsweise kann vorgesehen sein, dass sich die vorgenannte Abdeckungseinrichtung bis zu der Führungsfläche der Werkzeugmaschine erstreckt und nur im Bereich der Führungsfläche eine Öffnung vorhanden ist, vor die das Arbeitswerkzeug in zumindest einem Betriebszustand oder in einer Stellung des Antriebsaggregats relativ zu der Führungsfläche vorsteht.

Der Werkzeugsensor kann beispielsweise an einem Staubluftkanal zur Abfuhr von mit Partikeln beladener Staubluft der Werkzeugmaschine angeordnet sein. Beispielsweise erstreckt sich der Staubluftkanal an dem Arbeitswerkzeug und/oder um das Arbeitswerkzeug herum. Der Staubluftkanal ist vorteilhaft ganz oder teilweise von einer Abdeckungseinrichtung oder durch eine Abdeckungseinrichtung begrenzt, wobei die Abdeckungseinrichtung das Arbeitswerkzeug ganz oder partiell abdeckt oder einhaust.

Zweckmäßigerweise ist im Bereich des Werkzeugsensors eine Luftführungseinrichtung, beispielsweise mit einem oder mehreren Leitwänden oder Leitblechen oder dergleichen, vorgesehen. Die Luftführungsanordnung ist derart ausgestaltet und/oder angeordnet, dass sie einen Partikel enthaltenden Partikelstrom von dem Werkzeugsensor ablenkt.

Die folgende vorteilhafte Ausgestaltung kann im Zusammenhang mit den oberbegrifflichen Merkmalen des Anspruches 1 auch eine an sich eigenständige Erfindung darstellen.

Vorteilhaft ist vorgesehen, dass der Werkzeugsensor oder mehrere Werkzeugsensoren unter einer das Arbeitswerkzeug zumindest partiell abdeckenden und/oder einhausenden Abdeckungseinrichtung und/oder Schutzabdeckung angeordnet ist. An sich behindert eine derartige Abdeckungseinrichtung oder Schutzabdeckung eine sensorische Erfassung des Werkzeugsensors, beispielsweise eine Erfassung der Umgebung der Werkzeugmaschine, insbesondere eines Werkstückkontaktbereichs. Ein Vorteil ist jedoch, dass die Abdeckungseinrichtung beispielsweise Fremdlichteinflüsse vermindern und/oder einen Schutz für den Werkzeugsensor darstellen kann. Bei der Abdeckungseinrichtung handelt es sich beispielsweise um eine Abdeckhaube, Schutzhaube oder dergleichen.

Die oder eine Abdeckungseinrichtung für das Arbeitswerkzeug kann einen Träger oder Halter für den Werkzeugsensor bilden. Mithin ist also der Werkzeugsensor beispielsweise an der Abdeckungseinrichtung angeordnet oder von dieser gehalten.

Vorteilhaft ist vorgesehen, dass der Erfassungsbereich des Werkzeugsensors aus der Abdeckungseinrichtung oder Schutzabdeckung heraus gerichtet ist, beispielsweise auf einen Werkstückkontaktbereich, in welchem das Arbeitswerkzeugs in Kontakt mit dem Werkstück ist oder gelangen kann. Der Erfassungsbereich des beispielsweise optischen oder als Kamera ausgestalteten Werkzeugsensors ist also beispielsweise aus einer Abdeckhaube oder Schutzhaube heraus orientiert. Der Erfassungsbereich des Werkzeugsensors ist vorzugsweise so orientiert und/oder ausgestaltet, dass auch das Arbeitswerkzeug in dem Erfassungsbereich ist.

Ohne weiteres ist es möglich, dass mehrere Werkzeugsensoren, beispielsweise zwei Werkzeugsensoren, unter der Abdeckungseinrichtung oder Schutzabdeckung angeordnet sind, die unterschiedliche Erfassungsbereiche aufweisen. Beispielsweise sind zwei Werkzeugsensoren vorgesehen, die an einander entgegengesetzten Seiten des Arbeitswerkzeugs angeordnet sind und/oder zwischen denen das Arbeitswerkzeug angeordnet ist.

Bevorzugt ist es, wenn der mindestens eine Werkzeugsensor, vorzugsweise mindestens zwei Werkzeugsensoren, außerhalb eines Abstands zwischen der Führungsfläche und einer Drehachse des Arbeitswerkzeugs, zumindest wenn dieses vor die Führungsfläche vorsteht, angeordnet ist. Dabei ist es möglich, dass der Werkzeugsensor außerhalb oder unterhalb einer Abdeckungseinrichtung, die das Arbeitswerkzeug abdeckt, angeordnet ist. Zum Einschneiden oder Eingreifen in das Werkstück taucht das Arbeitswerkzeug beispielsweise aus der Abdeckungseinrichtung aus und/oder steht weiter vor die Führungsfläche vor. Beim Einschneiden oder Eingreifen in das Werkstück ist die Drehachse des Arbeitswerkzeugs, beispielsweise eine Sägeblatts, näher bei der Führungsfläche oder dem Werkstück als in einer Ruheposition, in der das Arbeitswerkzeugs nicht in das Werkstück eindringt oder weniger weit oder nicht vor die Führungsfläche vorsteht.

Der Werkzeugsensor umfasst zweckmäßigerweise eine Kamera oder ist dadurch gebildet. Aber auch andere sensorische Prinzipien sind möglich, beispielsweise eine Messung mit einem optischen Sensor, kapazitiven Sensor oder dergleichen. Auch hier können die Partikel eine gewisse Störung verursachen.

Der Erfassungsbereich des Werkzeugsensors beträgt zweckmäßigerweise mindestens 45°, vorzugsweise mindestens 60°, besonders bevorzugt mindestens 70°. Der Werkzeugsensor umfasst beispielsweise ein Weitwinkelobjektiv.

Bevorzugt ist der Werkzeugsensor sehr nahe beim Arbeitswerkzeug angeordnet, beispielsweise in einem Abstand von weniger als 5cm, insbesondere weniger als 4cm oder 3cm. Gerade dann ist eine Erfassung anhand eines Weitwinkelobjektivs besonders vorteilhaft.

Ein an sich unabhängiges, auch im Zusammenhang mit der obigen Erfindung vorteilhaftes Konzept oder eine an sich eigenständige Erfindung sieht vor, dass die Werkzeugmaschine ein Verschmutzungsprüfmittel zur Prüfung einer Verschmutzung des Werkzeugsensors durch Partikel aufweist. Die Werkzeugmaschine ist zur Verarbeitung des Werkzeugsensorsignals in Abhängigkeit von einem Verschmutzungsgrad des Werkzeugsensors und/oder zur Ausgabe einer Warnung, beispielsweise einer optischen oder akustischen Warnung, in Abhängigkeit von einem Verschmutzungsgrad des Werkzeugsensors ausgestaltet. Beispielsweise erzeugt das Verschmutzungsprüfmittel ein Sensorsignal oder Ausgabesignal, welches den Verschmutzungsgrad repräsentiert. Das Verschmutzungsprüfmittel kann aber auch durch die Bildverarbeitung oder Signalverarbeitungseinrichtung, die Signale des Werkzeugsensors verarbeitet und das Werkzeugsensorsignal bereitstellt, realisiert sein. Somit kann beispielsweise ein Helligkeitswert des Werkzeugsensorsignals, insbesondere über einen Histogrammausgleich, angepasst werden. Wenn ein vorbestimmter oder einstellbarer Schwellwert der Helligkeit unterschritten ist, gibt die Werkzeugmaschine eine Warnung aus, beispielsweise an einem Bildschirm, anhand einer LED-Anzeige, anhand eines Signaltons, über einen Lautsprecher oder dergleichen.

Ein bevorzugtes Konzept sieht vor, dass das Verschmutzungsprüfmittel zur Ermittlung des Verschmutzungsgrads mindestens einen Helligkeitswert in dem Werkzeugsensorsignal und/oder einem für die Ermittlung des Werkzeugsensorsignals vorgesehenen Ausgangssignal des Werkzeugsensors ausgestaltet ist.

Bevorzugt ist es, wenn das Verschmutzungsprüfmittel mindestens eine Lichtquelle, beispielsweise eine oder mehrere Lichtquellen der vorgenannten Beleuchtungseinrichtung oder eine separate Lichtquelle, zur Beleuchtung einer Frontseite des Werkzeugsensors sowie mindestens einen Lichtsensor zur Ermittlung einer Reflexion der Frontseite des Werkzeugsensors in Abhängigkeit von einem Verschmutzen der Frontseite durch Partikel aufweist. Es ist vorteilhaft, wenn die Frontseite des Werkzeugsensors, beispielsweise eine Objektiv-Frontseite, ein Filterelement oder dergleichen, durch die Lichtquelle beleuchtet wird, beispielsweise durch eine LED.

Die Lichtquelle und der Lichtsensor sind zweckmäßigerweise entsprechend einem Einfallswinkel sowie einem Ausfallswinkel relativ zu der Frontseite des Werkzeugsensors angeordnet. Die Beleuchtung erfolgt zweckmäßigerweise unterhalb einer Totalreflexion. Wenn also der Lichtsensor, beispielsweise eine Fotodiode, das durch die Frontseite des Werkzeugsensors bzw. die daran befindlichen Partikel reflektierte Licht erfasst, kann beispielsweise bei einer durch Partikel verschmutzten Frontseite eine erhöhte oder verringerte Reflexion als Indiz bzw. als Maß für den Verschmutzungsgrad durch den Lichtsensor erfasst werden.

Weiterhin ist es möglich, dass die Beleuchtung in einem Farbspektrum erfolgt, welches durch den Werkzeugsensor nicht erfassbar ist oder die Erfassung nicht stört. Die Lichtquelle erzeugt beispielsweise Licht in einem nicht sichtbaren Bereich und/oder einem Infrarot-Bereich. Typische Kameras, die als Werkzeugsensor vorteilhaft sind, können beispielsweise Infrarot-Licht nicht erkennen, sodass die vorgenannte Helligkeitsprüfung anhand einer Infrarot-Lichtquelle und einem entsprechenden Lichtsensor die Erfassung des Werkstückkontaktbereichs nicht stört.

Ein Erfassungsbereich des Werkzeugsensors umfasst zweckmäßigerweise einen Werkstückkontaktbereich, in welchem das Arbeitswerkzeug in Kontakt mit dem Werkstück ist, beispielsweise eine durch die Bearbeitung des Werkstücks anhand des Arbeitswerkzeugs entstandene oder entstehende Bearbeitungskante, und/oder einen in einer Arbeitsrichtung vorderen Bereich. In der Arbeitsrichtung ist die Werkzeugmaschine an dem Werkstück entlang führbar oder das Werkstück an der Werkzeugmaschine entlang führbar. In der Arbeitsrichtung schneidet das Arbeitswerkzeug beispielsweise in das Werkstück ein.

Weiterhin ist es zweckmäßig, wenn der Werkzeugsensor zur Erfassung einer an dem Werkstück angeordneten Werkstückmarkierung ausgestaltet und/oder ausgerichtet ist. Beispielsweise ist der Erfassungsbereich des Werkzeugsensors auf einen in Arbeitsrichtung vorgelagerten Bereich des Werkstücks bzw. auf einen Bearbeitungsbereich gerichtet, der sich vor dem Arbeitswerkzeug in Arbeitsrichtung befindet.

Somit umfasst der Erfassungsbereich des Werkzeugsensors einerseits vorteilhaft den eigentlichen Eingriffsbereich oder Kontaktbereich des Arbeitswerkzeugs mit dem Werkstück, zudem aber auch den in Arbeitsrichtung vorgelagerten Bereich. Der Bediener hat dadurch eine optimale Kontrolle des Arbeitsvorgangs.

Ferner ist es zweckmäßig, wenn die Werkzeugmaschine oder eine Werkzeugmaschine gemäß der Erfindung, zur Bereitstellung mindestens einer Funktion in Abhängigkeit von einer Erfassung einer an dem Werkstück angeordneten Werkstückmarkierung ausgestaltet ist. So kann beispielsweise eine Kantendetektion oder Liniendetektion bei der Auswerteeinrichtung vorgesehen sein, die die Werkstückmarkierung erkennt. Bei der Werkstückmarkierung handelt es sich beispielsweise um eine Anrisslinie, einen Strich oder dergleichen.

Die mindestens eine Funktion umfasst beispielsweise die Anzeige eines Abstandes einer aktuellen Bearbeitungskante von der Werkstückmarkierung. Die Anzeige erfolgt beispielsweise an einer Anzeigeeinrichtung oder der Anzeigeeinrichtung, so dass der Bediener Kontrolle darüber hat, wieweit die aktuelle Bearbeitungskante des Arbeitswerkzeugs bezüglich des Werkstücks noch von der Werkstückmarkierung entfernt ist.

Es ist aber auch ein automatisches Konzept möglich, bei dem die Werkzeugmaschine in Abhängigkeit von einem Erreichen der Werkstückmarkierung motorische, bremsende oder aktuatorische Funktionen ausführt. So kann beispielsweise bei Erreichen der Werkstückmarkierung das Arbeitswerkzeug abgebremst werden. Dabei ist eine antizipierende Vorgehensweise vorteilhaft, d.h., dass die Werkzeugmaschine sozusagen die Antriebseinheit bereits langsamer laufen lässt, wenn sich die Bearbeitungskante in der Nähe der Werkstückmarkierung befindet. Weiterhin kann auch ein Stellantrieb der Werkzeugmaschine zum Verstellen der Antriebseinheit relativ zu der Führungseinheit vorgesehen sein, beispielsweise ein Stellantrieb, mit dem die Antriebseinheit relativ zum Führungselement verschwenkt oder verschoben wird. In Abhängigkeit von einem Erreichen der Werkstückmarkierung steuert die Werkzeugmaschine, beispielsweise die Auswerteeinrichtung, einen entsprechenden Stellantrieb an. So kann beispielsweise bei Erreichen oder vor Erreichen der Werkstückmarkierung das Arbeitswerkzeug aus dem Werkstück durch den Stellantrieb heraus bewegt werden. Selbstverständlich ist es vorteilhaft, wenn die Funktion auch eine Ansteuerung der Antriebseinheit, beispielsweise eine Einstellung einer Motordrehzahl des Antriebsmotors in Abhängigkeit von einem Erreichen der Werkstückmarkierung umfasst.

Bevorzugt ist es, wenn die Werkzeugmaschine mindestens einen Werkzeugsensor, insbesondere eine Kamera, an einer von der Antriebseinheit, insbesondere dem Antriebsmotor, abgewandten Seite des Arbeitswerkzeugs aufweist. Der Werkzeugsensor befindet sich beispielsweise an einer freien Stirnseite oder Flachseite des Arbeitswerkzeugs. Das Arbeitswerkzeug ist zusagen zwischen dem Werkzeugsensor und der Antriebseinheit, insbesondere deren Antriebsmotor, angeordnet. Der Werkzeugsensor ist beispielsweise an einem Deckel einer Abdeckung des Arbeitswerkzeugs angeordnet.

Alternativ oder ergänzend ist aber auch eine Ausführungsform möglich, bei der mindestens ein Werkzeugsensor an einer der Antriebseinheit, beispielsweise dem Antriebsmotor, zugewandten Seite des Arbeitswerkzeugs vorgesehen ist. Der Werkzeugsensor befindet sich also beispielsweise in dem Staubabfuhrkanal oder an einer sonstigen Position.

Weiterhin ist es zweckmäßig, wenn der mindestens eine Werkzeugsensor oberhalb der Führungsfläche angeordnet ist und/oder nicht seitlich vor die Führungsfläche vorsteht. Dadurch ist der Werkzeugsensor bei einer Werkstückbearbeitung nicht im Wege. Der Werkzeugsensor befindet sich also oberhalb einer Projektionsfläche bezüglich der Führungsfläche, insbesondere im Bereich der Antriebseinheit.

Es ist möglich dass ein Werkzeugsensor bezüglich des Führungselements ortsfest ist, d.h. am Führungselement angeordnet ist. Insbesondere ist ein derartiger Werkzeugsensor, beispielsweise eine Kamera, im Bereich einer Längsseite der Führungsfläche angeordnet, so dass sein Erfassungsbereich auf den Werkstücckontaktbereich gerichtet ist.

Es ist weiterhin vorteilhaft, wenn mindestens ein Werkzeugsensor an der Antriebseinheit angeordnet ist, so dass er Bewegungen der Antriebseinheit relativ zu dem Führungselement mitmacht, d.h. sein Erfassungsbereich sozusagen mit der Antriebseinheit verstellt wird.

Die Werkzeugmaschine weist vorteilhaft eine Auswerteeinrichtung zur Auswertung eines von dem Werkzeugsensor erzeugten Werkzeugsensorsignals auf. Die Werkzeugmaschine weist als Werkzeugsensor z.B. eine Kamera auf, deren Bild an einem Display angezeigt wird. Je nach Anordnung und Ausrichtung der Kamera ändert sich das Bild am Display. Es besteht also eine hochgradige Abhängigkeit des angezeigten Bildes von der Ausrichtung der Kamera.

Vorteilhaft ist vorgesehen, dass in dem Erfassungsbereich des Werkzeugsensors eine durch den Werkzeugsensor erfassbare Referenzmarkierung angeordnet ist und die Auswerteeinrichtung zur Ermittlung mindestens eines Korrekturwerts für das Werkzeugsensorsignal in Abhängigkeit von der Referenzmarkierung ausgestaltet ist.

Es ist ein Grundgedanke dabei, dass die Referenzmarkierung von dem Werkzeugsensor sozusagen selbst erfasst wird und die Auswerteeinrichtung, die auch einen Bestandteil des Werkzeugsensors bilden kann, mindestens einen Korrekturwert anhand der Referenzmarkierung ermittelt. Mit dem mindestens einen Korrekturwert kann das Werkzeugsensorsignal entsprechend korrigiert werden, beispielsweise die Ausrichtung einer anhand des Werkzeugsensorsignals erzeugten Ausgabeinformation beispielsweise an eine Ausgabeeinrichtung, zum Beispiel einen Bildschirm bzw. einem Display, angepasst werden. Eine Ausrichtung eines Bildes eines Werkstückkontaktbereichs kann somit beispielsweise bezüglich weiterer Komponenten, beispielsweise einer Seitenkante des Führungselements, in Einklang gebracht werden. Der Bediener kann also beispielsweise einen Arbeitsfortschritt an der Ausgabeeinrichtung anhand eines Bildes erkennen, welches optimal auf die übrigen Komponenten der Werkzeugmaschine ausgerichtet ist.

Bevorzugt ist es, wenn die Referenzmarkierung eine Linie oder ein Muster umfasst oder dadurch gebildet ist.

Die Referenzmarkierung umfasst zweckmäßigerweise eine Linie oder eine Anordnung von Linien, ein Muster oder dergleichen. Insbesondere vorteilhaft ist ein Schachbrettmuster. Es können aber auch beispielsweise Strichkodierungen oder sonstige geometrische Muster als Referenzmarkierung verwendet werden. Es ist auch möglich, dass die Referenzmarkierung einen oder mehrere Punkte umfasst. So kann beispielsweise die Relation von verschiedenen Referenzpunkten von der Auswerteeinrichtung zur Ermittlung des mindestens einen Korrekturwertes herangezogen werden.

Weiterhin ist es vorteilhaft, wenn die Referenzmarkierung eine eineindeutige Referenzmarkierung ist, beispielsweise eine Kodierung darstellt.

Die Referenzmarkierung kann beispielsweise ein QR-Code (QR = Quick Response) oder ein vergleichbares Muster sein oder aufweisen.

Besonders bevorzugt ist es, wenn sich die mindestens eine Referenzmarkierung von einer funktionellen Komponente der Werkzeugmaschine in der Umgebung der Referenzmarkierung, die nicht die Funktion der Referenzmarkierung erfüllt, hinsichtlich Größe und/oder Geometrie und/oder Ausdehnung und/oder Farbe und/oder Kontrast unterscheidet. Die funktionelle Komponente der Werkzeugmaschine ist beispielsweise ein Abschnitt des Führungselements oder des Maschinengehäuses. Beispielsweise hat die Referenzmarkierung eine andere Farbe oder ein anderes Farbspektrum als eine Wandfläche, an der sie angeordnet ist.

Vorteilhaft ist vorgesehen, dass die Referenzmarkierung mindestens eine Farbe und/oder mindestens einen Kontrast aufweist, die sich von einem typischen Farbspektrum einer Umgebung der Referenzmarkierung um ein vorbestimmtes Maß bzw. der sich von einem typischen Kontrastbereich einer Umgebung der Referenzmarkierung um einen vorbestimmten Wert unterscheidet. Beispielsweise ist ein Farbabstand mindestens einer Farbe der Referenzmarkierung um einen vorbestimmten Wert unterschiedlich zu der Farbtemperatur der Umgebung der Referenzmarkierung. Ein euklidischer Abstand beträgt beispielsweise mindestens 0,5-1,0 zwischen den Farben der Referenzmarkierung und der Umgebung, sodass er für ein geübtes Auge bemerkbar ist. Der euklidische Abstand kann aber auch größer sein, beispielsweise in einem Wertebereich von 2-4 liegen. Die Hell-Dunkel-Kontraste der Umgebung der Referenzmarkierung, beispielsweise einer Wandfläche neben der Referenzmarkierung, betragen beispielsweise 5 zu 1 oder 10 zu 1, während die Kontraste der Referenzmarkierung höher sind, beispielsweise mindestens doppelt so groß oder dreimal so groß. Dies ist beispielsweise bei einem Schachbrettmuster oder einem QR-Code mit weißen und schwarzen oder dunkelgrauen Flächen der Fall.

Besonders bevorzugt ist es, wenn die Referenzmarkierung eine eigens zum Zwecke der Ermittlung des Korrekturwerts vorgesehene Prüfmarkierung, beispielsweise ein Prüfmuster, eine Linienanordnung oder dergleichen, aufweist oder dadurch gebildet ist. Bei der Prüfmarkierung handelt es sich beispielsweise um eine geometrische Struktur, die ausschließlich oder eigens für die Ermittlung des Korrekturwerts an der Werkzeugmaschine angeordnet ist. Die Prüfmarkierung oder das Prüfmuster ist beispielsweise als eine Lackierung, Beschichtung, Folie oder dergleichen ausgestaltet oder vorgesehen. Die Prüfmarkierung dient vorzugsweise als Referenzmarkierung ausschließlich zum Zwecke der Ermittlung des Korrekturwerts und hat ansonsten keine Funktion, beispielsweise keine mechanische Stützfunktion oder den Zweck, eine Aussparung zu begrenzen.

Es ist aber auch möglich, dass eine oder mehrere Komponenten, die sozusagen ohnehin Bestandteile der Werkzeugmaschine bilden, als Referenzmarkierung nutzbar sind. So sieht eine Variante der Erfindung vor, dass die Referenzmarkierung durch mindestens eine Kontur mindestens einer mechanisch funktionellen Komponente der Werkzeugmaschine, beispielsweise mindestens eine Kontur des Arbeitswerkzeugs und/oder des Führungselements, gebildet ist oder die mindestens eine Kontur umfasst. Eine mechanisch funktionelle Komponente der Werkzeugmaschine ist beispielsweise eine Antriebskomponente, eine Führungskomponente, eine Stützstrukturen oder dergleichen. Eine lediglich optische Markierung in Gestalt beispielsweise einer farbigen und/oder strukturierten Fläche, die eigens für den Zweck der Ermittlung des Korrekturwerts angebracht ist, wird demgegenüber in diesem Zusammenhang nicht als mechanisch funktionelle Komponente verstanden.

Beispielsweise kann eine Kante des Arbeitswerkzeugs, des Führungselements oder dergleichen eine derartige Kontur bilden oder aufweisen. Wenn mehrere Maschinenteile im Erfassungsbereich, insbesondere Sichtbereich, des jeweiligen Werkzeugsensors sind, können diese einzeln oder insgesamt die Referenzmarkierung bilden. Möglich ist beispielsweise, dass eine Kante des Führungselements, beispielsweise eines Sägetisches oder Arbeitstisches, und gleichzeitig eine Kante des Arbeitswerkzeugs als Referenzmarkierung(en) dienen.

Ein bevorzugtes Konzept sieht vor, dass die Auswerteeinrichtung zur Analyse eines Krümmungsverlaufs eines geradlinigen Abschnitts der Referenzmarkierung für die Ermittlung des mindestens einen Korrekturwertes ausgestaltet ist. So kann beispielsweise eine gerade Linie aufgrund einer optischen Verzerrung des Werkzeugsensors bzw. eines Objektivs des Werkzeugsensors einen gekrümmten Verlauf aufweisen. Die Auswerteeinrichtung ermittelt anhand der Krümmungswerte bzw. geometrischen Werte der gekrümmten, optisch erfassten Linie der Referenzmarkierung Abweichungen von einer geraden Linie, um anschließend das Werkzeugsensorsignal anhand dieser Korrekturwerte oder des mindestens einen Korrekturwertes entsprechend zu korrigieren. So können beispielsweise im Werkzeugsensorsignal enthaltene Bildinformationen anhand der Korrekturwerte, die von dem Krümmungsverlauf abgeleitet sind, sozusagen optisch gerade gerückt werden. Die Auswerteeinrichtung ist also beispielsweise zu einer Entzerrung von Bildsignalen, die im Werkzeugsensorsignal enthalten sind oder in Rohsignalen des Werkzeugsensors enthalten sind, ausgestaltet. So kann beispielsweise das Werkzeugsensorsignal, welches von der Auswerteeinrichtung bearbeitet oder verarbeitet ist, sozusagen optisch entzerrt sein.

Ein bevorzugtes Konzept sieht vor, dass der Werkzeugsensor eine Kamera umfasst oder dadurch gebildet ist. Die Kamera ist beispielsweise eine digitale Kamera.

Bevorzugt ist weiterhin, wenn der Werkzeugsensor, insbesondere die vorgenannte Kamera intrinsisch kalibriert ist. Die intrinsische Kalibrierung ist vorzugsweise mehrachsig, also beispielsweise zweiachsig oder dreiachsig / räumlich.

Vorteilhaft ist auch, wenn der Werkzeugsensor, insbesondere die Kamera, extrinsisch kalibriert ist. Auch die extrinsische Kalibrierung kann eine zweiachsige oder dreiachsige bzw. räumliche Kalibrierung sein.

Es ist auch möglich, dass die Auswerteeinrichtung zur intrinsischen Kalibrierung des Werkzeugsensors ausgestaltet ist. So kann beispielsweise vorgesehen sein, dass eine Anordnung eines oder mehrerer Prüfmuster auf einem Untergrund als ein Kalibriermittel bereitgestellt wird, insbesondere einen Systembestandteil der Werkzeugmaschine bildet. Die Auswerteeinrichtung kann beispielsweise mehrere Abbildungen des Prüfmusters oder der Prüfmuster erfassen und dadurch intrinsische Kalibrierwerte für den Werkzeugsensor, insbesondere die Kamera ermitteln.

Bei der intrinsischen Kalibrierung ist es beispielsweise möglich, dass Ungenauigkeiten, Krümmungen oder dergleichen andere optische Fehler durch die Kalibrierung sozusagen egalisiert werden oder ausgeglichen werden. Somit kann der Werkzeugsensor korrigierte / kalibrierte Werte liefern. Es ist auch möglich, dass die Auswerteeinrichtung das Werkzeugsensorsignal sozusagen anhand der durch die intrinsische Kalibrierung gewonnenen Werte selbstständig korrigiert / kalibriert, bevor das Werkzeugsensorsignal beispielsweise an der Anzeigeeinrichtung angezeigt wird.

Die bereits intrinsisch kalibrierte Kamera oder der intrinsisch kalibrierte Werkzeugsensor ist anschließend zu einer optimalen Auswertung der Referenzmarkierung der Werkzeugmaschine ausgestaltet. Anhand der intrinsische kalibrierten Kamera oder dem intrinsisch kalibrierten Werkzeugsensor kann beispielsweise die Auswerteeinrichtung eine relative Ausrichtung und/der Orientierung der Kamera oder des Werkzeugsensors bezüglich der Referenzmarkierung ermitteln.

Bevorzugt ist eine sogenannte extrinsische Kalibrierung des mindestens einen Werkzeugsensors bezüglich der Referenzmarkierung.

Beispielsweise kann die Auswerteeinrichtung ein durch die Referenzmarkierung gegebenes, insbesondere globales, zweidimensionales oder dreidimensionales Koordinatensystem in ein lokales, auf die jeweilige Pose, also Orientierung und Positionierung der Kamera oder des Werkzeugsensors im Raum, bezogenes Koordinatensystem umrechnen oder transformieren.

Vorzugsweise ist vorgesehen, dass die Auswerteeinrichtung dazu ausgestaltet ist, anhand der intrinsisch kalibrierten Kamera oder des intrinsisch kalibrierten Werkzeugsensors eine sogenannte extrinsische Kalibrierung, nämlich eine Kalibrierung bezüglich der mindestens einen Referenzmarkierung der Werkzeugmaschine, durchzuführen. Somit ist beispielsweise eine Ausrichtung und/oder Orientierung des Prüfbereichs anhand der Referenzmarkierung durch die Auswerteeinrichtung realisierbar.

Ein bevorzugtes Konzept sieht vor, dass die Auswerteeinrichtung zur Ermittlung eines Prüfbereiches innerhalb des Erfassungsbereiches anhand der Referenzmarkierung ausgestaltet ist. So kann beispielsweise anhand der Referenzmarkierung ein Prüfbereich ermittelt werden, innerhalb dessen sich eine Schnittkante oder Bearbeitungskante ausbildet, die bei einer Werkstückbearbeitung anhand des Arbeitswerkzeugs entsteht. Innerhalb des, beispielsweise recht großen, Erfassungsbereiches wird also ein gegenüber dem Erfassungsbereich kleinerer Prüfbereich ermittelt, der für eine detaillierte Auswertung herangezogen wird. So können Störinformationen, die sich außerhalb des Prüfbereichs befinden, beispielsweise Späne, Lichtreflexionen oder dergleichen, sozusagen ausgeblendet werden. Die Auswerteeinrichtung "konzentriert" sich sozusagen auf den wesentlichen für die Auswertung anstehenden Bereich, nämlich den Prüfbereich.

Unabhängig von einer Montageposition und/oder Ausrichtung des jeweiligen Werkzeugsensors ist somit der Prüfbereich ermittelt oder ermittelbar. Wenn also beispielsweise ein Werkzeugsensor, insbesondere eine Kamera, abweichend von einer idealen Montageposition und/oder Ausrichtung am Maschinengehäuse oder im Maschinengehäuse oder einer sonstigen Komponente der Werkzeugmaschine montiert ist, ermittelt die Werkzeugmaschine den Prüfbereich auch für diese nicht ideale Montageposition und/oder Ausrichtung des Werkzeugsensors. Montagetoleranzen oder Toleranzen des Werkzeugsensors an sich, beispielsweise eine Einbaulage eines digitalen Bildsensors bezüglich einer Kameraachse oder dergleichen, werden sozusagen automatisch ausgeglichen.

Die Ermittlung des oder eines Prüfbereichs kann bei von dem Werkstück entferntem Arbeitswerkzeug, beispielsweise anhand eines Sägeschnittes oder einer sonstigen Bearbeitungskontur, erfolgen. In dieser Situation ist beispielsweise eine Ausrichtung des Prüfbereichs, zum Beispiel der Verlauf einer Sägekante oder sonstigen Bearbeitungskante, besonders einfach zu realisieren.

Bevorzugt ist es, wenn die Auswerteeinrichtung zur Ermittlung des Prüfbereichs oder eines Prüfbereichs innerhalb des Erfassungsbereichs des Werkzeugsensors anhand einer durch das Arbeitswerkzeug hergestellten Bearbeitungskontur an dem Werkstück, zum Beispiel einer Sägekante, die in Arbeitsrichtung der Werkzeugmaschine verläuft, ausgestaltet ist. Anhand insbesondere einer Filterung, einer Kantenerkennung oder dergleichen, ist eine derartige Bearbeitungskontur ohne weiteres ermittelbar. Der Prüfbereich wird beispielsweise an der Bearbeitungskontur ausgerichtet. Die Bearbeitungskontur ergibt sich beispielsweise durch eine Art Prüfbearbeitung des Werkstücks, beispielsweise einen Sägeschnitt, wobei die Prüfbearbeitung nur oder vorzugsweise zur Kalibrierung und/oder Ausrichtung des Prüfbereichs an dem Werkstück vorgenommen wird. Die Anordnung und/oder Ausrichtung und/oder geometrische Gestalt der Bearbeitungskontur hängt beispielsweise davon ab, ob die Werkzeugmaschine mit einer Führungsschiene oder eine Führungseinrichtung oder ohne eine solche verwendet wird. Weiterhin wirkt sich beispielsweise die Art und Geometrie des Arbeitswerkzeugs, Verschleiß des Arbeitswerkzeugs oder der Führungseinrichtung und dergleichen auf die Bearbeitungskontur aus. Derartige Einflüsse auf die Bearbeitungskontur werden durch die Auswerteeinrichtung sozusagen berücksichtigt, wenn die Bearbeitungskontur zur Ermittlung des Prüfbereichs verwendet wird.

Ohne weiteres können mehrere Prüfbereiche bei der Werkzeugmaschine oder der Auswerteeinrichtung eingerichtet und/oder gespeichert sein. So können beispielsweise ein Prüfbereich mit Führungsschiene und ein Prüfbereich ohne Führungsschiene ermittelbar oder ermittelt sein.

Ein bevorzugtes Konzept sieht vor, dass die Werkzeugmaschine, beispielsweise die Auswerteeinrichtung, zur Ausrichtung einer anhand des Werkzeugsensorsignals erzeugten oder erzeugbaren optischen Information relativ zu der Referenzmarkierung ausgestaltet ist. So kann beispielsweise eine optische Information, die den Kontaktbereich des Arbeitswerkzeugs mit dem Werkstück repräsentiert, anhand des mindestens einen Korrekturwerts sozusagen relativ zur übrigen Werkzeugmaschine ausgerichtet werden.

Zweckmäßigerweise ist vorgesehen, dass die Werkzeugmaschine eine Höhenmesseinrichtung zur Erkennung einer Höhe des Werkstücks aufweist, wobei die Höhe einem Abstand zwischen einer zum Eindringen des Arbeitswerkzeugs vorgesehenen Werkstückoberseite und einer zu der Werkstückoberseite entgegengesetzten Werkstückunterseite des Werkstücks entspricht.

Es ist ein Grundgedanke dabei, dass dem Bediener sozusagen eine optimale Einstellung der Eindringtiefe des Arbeitswerkzeugs in das Werkstück gelingt, indem er eine Angabe über eine Höhe des Werkstücks erhält. Die Höhenmesseinrichtung ist an Bord der Werkzeugmaschine, was eine vereinfachte Handhabung darstellt. Der Bediener braucht also nicht beispielsweise einen Meterstab oder eine sonstige Messeinrichtung an das Werkstück anzulegen, um dessen Höhe zu ermitteln. Die Bedienung ist komfortabel.

Eine Erfassung einer Höhe des Werkstücks hat beispielsweise Vorteile, um eine optimale Schnittqualität und/oder eine optimale Staubabsaugung zu erzielen. Weiterhin können bei einer bezüglich der Höhe des Werkstücks optimal eingestellten Werkzeugmaschine geringere Bearbeitungskräfte, zum Beispiel Schnittkräfte, ausreichen.

Die Höhenmesseinrichtung ist zweckmäßigerweise zur Erfassung einer Werkstückoberkante zwischen einer Stirnseite des Werkstücks und der Werkstückoberseite und/oder zur Erfassung einer Werkstückunterkante zwischen einer Stirnseite des Werkstücks und der Werkstückunterseite ausgestaltet. Die Stirnseite ist vorzugsweise rechtwinkelig zur Werkstückoberseite und/oder Werkstückunterseite. Es ist vorteilhaft, wenn die Höhenmesseinrichtung beide Werkstückkanten, nämlich die obere und die untere Werkstückkante erfassen kann, wobei dies nicht in allen Fällen notwendig ist. Das wird später noch deutlich. Zur Erfassung einer jeweiligen Werkstückkante hat die Höhenmesseinrichtung beispielsweise Kontrast-Filter, Medianfilter oder dergleichen andere Filter, um den Verlauf einer Kante zu ermitteln. So hat beispielsweise eine Auswerteeinrichtung der Höhenmesseinrichtung eine Logik, um eine gerade Linie, mithin also eine Werkstückkante, zu erfassen. Zudem ist die Auswerteeinrichtung vorzugsweise so ausgestaltet, dass sie nur quer zur Arbeitsrichtung verlaufende Linien als Werkstückkanten erkennt.

Die Höhenmesseinrichtung ist vorteilhaft dazu ausgestaltet, die Höhe des Werkstücks in einer Richtung oder Achse orthogonal zu einer Werkstückoberseite oder Werkstück-Oberseitenfläche und/oder zu einer Werkstückunterseite oder Werkstück-Unterseitenfläche, zu bestimmen.

Bevorzugt ist die Höhenmesseinrichtung so positioniert, dass die Werkzeugmaschine mit einem möglichst großen Abschnitt der Führungsfläche auf dem Werkstück aufliegt oder, bei einer halbstationären Werkzeugmaschine, das Werkstück großflächig auf der Führungsfläche aufliegen kann, wenn die Höhenmesseinrichtung die Messung vornimmt. So sieht eine bevorzugte Ausführungsform vor, dass sich vor der Höhenmesseinrichtung ein Abschnitt der Führungsfläche erstreckt, mit dem die Führungsfläche an der Werkstück Oberseite oder einer auf der Werkstückoberseite aufliegenden Führungseinrichtung, beispielsweise einer Führungsschiene, abstützbar ist. Es ist auch möglich, dass auf diesem Abschnitt der Führungsfläche das Werkstück abstützbar ist, insbesondere bei einer halbstationären Werkzeugmaschine.

Ein bevorzugtes Ausführungsbeispiel sieht vor, dass die Höhenmesseinrichtung, an einem, beispielsweise hinteren, Längsendbereich der Führungsfläche angeordnet ist und ein Erfassungsbereich, beispielsweise eine optische Achse, der Höhenmesseinrichtung in Richtung des anderen Längsendbereiches der Führungsfläche orientiert ist. So kann beispielsweise die Höhenmesseinrichtung oberhalb der Führungsfläche angeordnet sein und nach schräg unten, in Richtung der Führungsfläche, ihren Erfassungsbereich aufweisen.

Die Höhenmesseinrichtung weist vorzugsweise mindestens einen berührungslos erfassenden oder messenden Sensor oder ausschließlich berührungslos erfassenden oder messende Sensoren.

Bei der Höhenmesseinrichtung sind verschiedenen Messprinzipien möglich, beispielsweise kapazitive, induktive oder sonstige Messprinzipien.

Bevorzugt ist jedoch ein optisches System. Die Höhenmesseinrichtung umfasst zweckmäßigerweise mindestens einen optischen Sensor und/oder eine Kamera. Der optische Sensor könnte beispielsweise einen Helligkeitssensor oder mehrere Helligkeitssensoren umfassen. Anhand eines Helligkeitssensors kann beispielsweise ein Überfahren einer Werkstückkante ermittelt werden. Wenn also beispielsweise eine Referenzmarkierung ermittelt werden soll, kann anhand des optischen Sensors, beispielsweise des Helligkeitssensors, ermittelt werden, wenn die Werkzeugmaschine die jeweilige Werkstückkante überfährt.

Weiterhin ist es zweckmäßig, wenn die Höhenmesseinrichtung mindestens einen Abstandssensor aufweist. Anhand des Abstandssensors ist beispielsweise ein Abstand zwischen einem Sensor zur Erfassung einer Werkstückkante und dem Werkstück ermittelbar.

Die Höhenmesseinrichtung umfasst zweckmäßigerweise mindestens eine Referenzlichtquelle zur Erzeugung einer Referenzmarkierung an dem Werkstück. Die Referenzmarkierung ist zweckmäßigerweise besonders schmal oder punktförmig, insbesondere linienförmig oder punktförmig. Die Referenzmarkierung kann beispielsweise von einem optischen Sensor oder einer Kamera der Höhenmesseinrichtung erfasst werden, um auf diesem Weg eine Werkstückkante des Werkstücks anhand einer Lichtreflexion des durch die Referenzlichtquelle erzeugten Referenzlichts zu ermitteln. Wenn also beispielsweise das Referenzlicht zunächst am Werkstück vorbei ausgerichtet ist und anschließend das Werkstück und die Werkzeugmaschine relativ zueinander bewegt werden, so dass im Zuge dieser Bewegung das Licht der Referenzlichtquelle auf das Werkstück auftritt, so ist dies im Bereich der Werkstückunterkante zunächst der Fall. Anhand der "erstmaligen" Reflexion der Referenzmarkierung an dem Werkstück, nämlich im Bereich der Werkstückunterkante, kann die Höhenmesseinrichtung die Werkstückunterkante ermitteln.

Ein bevorzugtes Konzept sieht vor, dass die Höhenmesseinrichtung zur Ermittlung der Höhe des Werkstücks anhand einer Richtungsänderung und/oder Geschwindigkeitsänderung einer Lichtreflexion des durch die Referenzlichtquelle erzeugten Referenzlichts bei einer dynamischen Bewegung der Werkzeugmaschine bezüglich des Werkstücks, beispielsweise quer zu einer Werkstückkante des Werkstücks, ausgestaltet ist. Wenn also die Werkzeugmaschine relativ zu dem Werkstück bewegt wird, sodass die Werkstückseite des Werkstücks, deren Höhe zu messen ist, im Erfassungsbereich der Höhenmesseinrichtung ist, beispielsweise im Bereich des optischen Sensors oder der Kamera ist, beleuchtet das Referenzlicht die Werkstückseite. Die Werkzeugmaschine wird beispielsweise entlang einer ersten Richtung, insbesondere typischen Arbeitsrichtung, über das Werkstück vorwärts bewegt. Die Lichtreflexion des Referenzlichts läuft dabei beispielsweise von einer unteren Werkstückkante zu einer oberen Werkstückkante des Werkstücks und weist dabei eine zu der ersten Richtung winkelige zweite Richtung relativ zu dem Sensor der Werkzeugmaschine auf, beispielsweise eine schräge Bewegungsrichtung. Wenn der Lichtstrahl der Referenzlichtquelle über die obere Werkstückkante hinweg läuft, wird er von der Werkstückoberfläche sozusagen kontinuierlich reflektiert, sodass die Lichtreflexion bezüglich des Sensors mit Bezug auf das bewegte System, nämlich die bewegte Werkzeugmaschine, sozusagen ortsfest ist, also keine Richtungsänderung und/oder keine Relativbewegung mehr aufweist. Anhand dieser Information kann die Höhenmesseinrichtung dann die Höhe des Werkstücks ermitteln.

Bevorzugt ist vorgesehen, dass die Höhenmesseinrichtung zur Ermittlung der Höhe des Werkstücks anhand einer von der Lichtreflexion durchlaufenden Distanz quer zu einer Richtung, entlang derer die Werkzeugmaschine relativ zu dem Werkstück bewegt wird, ausgestaltet ist. Beispielsweise kann die Höhenmesseinrichtung anhand der Länge der Bewegung in der zweiten Richtung sowie vorteilhaft einer Zusatzinformation, beispielsweise einer Tabelle und/oder einer Zuordnungsfunktion, die Höhe des Werkstücks ermitteln. Die Länge der Bewegung der zweiten Richtung ist beispielsweise in einer Bildfolge, einem einzelnen Bild oder dergleichen, der Höhenmesseinrichtung gespeichert. Es ist möglich, dass die Höhenmesseinrichtung die einzelnen Bilder unmittelbar auswertet, ohne sie abzuspeichern oder zwischen zu speichern, um die Länge der Bewegung in der zweiten Richtung zu ermitteln, z.B. als sogenannter Livestream. Es ist aber auch möglich, dass die Werkzeugmaschine beispielsweise anhand einer Relation zwischen der Bewegung in der ersten Richtung und der Bewegung der Lichtreflexion in der zweiten Richtung die Höhe des Werkstücks ermittelt.

Bevorzugt ist es, wenn die Referenzlichtquelle oder der optische Sensor oder beide einen optischen Filter aufweisen, beispielsweise einen UV-Filter, einen Farbfilter, einen Polarisationsfilter oder dergleichen. Die optischen Filter sind vorzugsweise aufeinander abgestimmt derart, dass beispielsweise der optische Sensor auf Lichtfarbe und/oder Lichthelligkeit und/oder Polarisation einer Reflexion des Referenzlichts der Referenzlichtquelle optimal abgestimmt ist. So kann beispielsweise durch eine Anordnung zweier Polarisationsfilter an der Referenzlichtquelle und einem optischen Sensor, insbesondere der Kamera, die aufeinander abgestimmt sind, Fremdlicht, welches nicht von der Referenzlichtquelle stammt, sozusagen ausgefiltert werden. Beispielsweise können so störende Reflexionen durch Sonneneinstrahlung oder sonstiges Fremdlicht eliminiert werden.

Bevorzugt ist es, wenn die Höhenmesseinrichtung keinen separaten Sensor braucht, sondern wenn ein ohnehin an Bord der Werkzeugmaschine befindlicher Sensor, beispielsweise ein Werkzeugsensor, für die Höhenmessung genutzt wird. Der Sensor oder ein einziger Sensor der Höhenmesseinrichtung wird zweckmäßigerweise durch einen Werkzeugsensor, zum Beispiel eine Kamera, einen optischen Sensor, einen kapazitiven Sensor oder dergleichen, zur Erfassung eines Werkstückkontaktbereichs, in welchem das Arbeitswerkzeug in Kontakt mit dem Werkstück ist und/oder zur Erfassung eines in einer Arbeitsrichtung vor dem Arbeitswerkzeug liegenden Abschnitt des Werkstücks gebildet. Mit dem Sensor kann also beispielsweise der Bereich erfasst werden, wo ein Sägeblatt oder sonstiges Arbeitswerkzeug in das Werkstück einschneidet. Aber auch eine Erfassung des in Arbeitsrichtung vorderen Abschnitts des Werkstücks ist zweckmäßig. Beispielsweise ist eine Kamera nach vorn in Richtung des zu bearbeitenden Werkstücks gerichtet und dient gleichzeitig als eine Komponente oder einzige Komponente für die Höhenmesseinrichtung.

Weiterhin ist es vorteilhaft, wenn die Höhenmesseinrichtung zur Erfassung einer durch eine Bearbeitung des Werkstücks durch das Arbeitswerkzeug gebildeten Bearbeitungskante ausgestaltet ist. Die Höhenmesseinrichtung kann also gleichzeitig noch eine Bearbeitungskante, beispielsweise eine Schnittkante, ermitteln. Auch hierfür können optische Verfahren, die schon bei der Ermittlung einer Werkstückkante des Werkstücks vorteilhaft sind, sozusagen weiter genutzt werden. So kann beispielsweise eine Kontrastfilterung, eine Kantenerkennung oder dergleichen, die an Bord der Höhenmesseinrichtung ohnehin vorhanden ist, zur Ermittlung einer Bearbeitungskante genutzt werden.

Die Werkzeugmaschine weist zweckmäßigerweise eine Anzeigeeinrichtung, zum Beispiel ein Display, grafisches Display oder dergleichen, insbesondere einen Bildschirm, zur Anzeige einer von der Höhenmesseinrichtung bereitgestellten Information auf. Selbstverständlich kann auch eine einfache Anzeigeeinrichtung, beispielsweise oder mehrere LEDs oder dergleichen zum Abgleich oder zur Anzeige der Höhe des Werkstücks vorgesehen sein. Es ist auch möglich, dass die Werkstückhöhe beispielsweise mit einer LCD-Anzeige oder einer Segmentanzeige für den Bediener einfach erkennbar signalisiert wird.

Die von der Höhenmesseinrichtung bereitgestellte Information, die an der Anzeigeeinrichtung anzeigbar ist, umfasst zweckmäßigerweise mindestens eine eine Werkstückkante anzeigende oder repräsentierende Markierung. Die Information kann auch, insbesondere ergänzend zu der Markierung, zumindest einen Teilbereich des Werkstücks, beispielsweise dessen Stirnseite, anzeigen. So kann der Bediener beispielsweise erkennen, ob die Markierung, die die Werkstückkante anzeigen soll, tatsächlich eine Werkstückoberkante ist, indem er die Markierung mit der synoptisch angezeigten Abbildung des Werkstücks vergleicht. Die Information kann aber auch eine Höhenangabe für eine Höhe des Werkstücks, beispielsweise eine Skala, Zahlenangabe oder dergleichen, umfassen. Die Markierung wird zweckmäßigerweise von der Höhenmesseinrichtung anhand einer Erkennung der Werkstückoberkante und/oder der Werkstückunterkante erzeugt. Somit erkennt der Bediener also anhand der Markierung, ob die Höhenmesseinrichtung die Werkstückoberkante oder Werkstückunterkante richtig erkannt hat und entsprechend als Markierung an der Anzeigeeinrichtung ausgibt.

Bevorzugt ist es, wenn die Werkzeugmaschine zur Ermittlung einer Vorgabe-Eindringtiefe des Arbeitswerkzeugs anhand der durch die Höhenmesseinrichtung ermittelten Höhe des Werkstücks ausgestaltet ist. Mithin gibt die Werkzeugmaschine sozusagen eine optimale Eindringtiefe vor. Der Bediener kann sich an diese Empfehlung halten, indem er beispielsweise das Arbeitswerkzeug nur bis zu der Vorgabe-Eindringtiefe in das Werkstück hinein verstellt.

Besonders komfortabel ist ein servomotorisches oder halbautomatisches Konzept. Vorteilhaft ist ein Stellantrieb zur Verstellung der Antriebseinheit relativ zu dem Führungselement in Abhängigkeit von der Vorgabe-Eindringtiefe vorgesehen. Die Werkzeugmaschine ist ausgestaltet, den Stellantrieb entsprechend der Vorgabe-Eindringtiefe anzusteuern, so dass die Antriebseinheit und somit die Werkzeugaufnahme mit dem Arbeitswerkzeug in die idealen Vorgabe-Eindringtiefe verstellt werden.

Es ist aber auch eine halbmanuelle oder manuelle Tiefeneinstellung möglich. Bevorzugt hat die Werkzeugmaschine eine Tiefeneinstelleinrichtung zur Einstellung einer Eindringtiefe des Arbeitswerkzeugs in das Werkstück mit mindestens einem entsprechend der Vorgabe-Eindringtiefe einstellbaren Anschlagelement. Der Bediener kann das Anschlagelement entsprechend der Vorgabe-Eindringtiefe an beispielsweise einer Haltekontur der Tiefeneinstelleinrichtung festlegen. Auch hier ist ein servomotorisches Konzept möglich, d.h., dass beispielsweise das Anschlagelement durch einen Stellantrieb in eine der Vorgabe-Eindringtiefe entsprechende Stellung bezüglich einer Haltekontur der Tiefeneinstelleinrichtung verstellt wird.

Eine geschützte Anordnung der Höhenmesseinrichtung ist vorteilhaft. Die Höhenmesseinrichtung ist zweckmäßigerweise in einem Staubabfuhrbereich und/oder unterhalb einer Abdeckung angeordnet.

Zur Ausrichtung der Werkzeugmaschine für eine Höhenmessung des Werkstücks können beispielsweise sozusagen mechanische Markierungen vorgesehen sein. So sieht eine Variante vor, dass die Höhenmesseinrichtung zur Ausrichtung der Werkzeugmaschine an einer Werkstückkante, beispielsweise der Werkstückoberkante, des Werkstücks eine an dem Führungselement oder einem Gehäuse, insbesondere Antriebseinheit, der Werkzeugmaschine angeordnete Markierung aufweist. Bei der Markierung handelt es sich beispielsweise um eine Linienmarkierung, einen Vorsprung, eine Vertiefung oder dergleichen. Insbesondere vorteilhaft ist es, eine derartige Markierung an einer Schmalseite des Führungselements vorzusehen. Weiterhin können beispielsweise Leuchtdioden oder dergleichen andere Lichtquellen im Bereich der Markierung vorgesehen sein, sodass dem Bediener eine Referenzposition zur Ausrichtung der Werkzeugmaschine am Werkstück angezeigt wird.

Zur Ausrichtung der Werkzeugmaschine am Werkstück eignet sich aber auch an einer Anzeigeeinrichtung eingeblendete Markierung. So sieht ein Ausführungsbeispiel vor, dass die Höhenmesseinrichtung zur Anzeige einer optischen Markierung, beispielsweise einer Linie, mindestens eines einzelnen Punktes oder dergleichen, sowie einer sozusagen synoptischen Abbildung der Werkstückkante an einer Anzeigeeinrichtung ausgestaltet ist. Der Bediener kann also auf diesem Wege die optische Markierung in Deckung mit der angezeigten Werkstückkante bringen, sodass im Ergebnis die Werkzeugmaschine für die Höhenmessung am Werkstück ausgerichtet ist.

Ein bevorzugtes Konzept sieht vor, dass die Höhenmesseinrichtung zu einer dynamischen Erfassung mindestens einer Werkstückkante, beispielsweise einer Werkstückoberkante oder einer Werkstückunterkante, des Werkstücks während einer Relativbewegung des Werkstücks und der Werkzeugmaschine ausgestaltet ist. Bevorzugt ist es dabei, dass die Werkzeugmaschine am Werkstück oder das Werkstück an der Werkzeugmaschine entlang geführt wird, indem das Werkstück an der Führungsfläche anliegt. Insbesondere liegt die Werkstückoberseite oder die Werkstückunterseite an der Führungsfläche an. Die Höhenmesseinrichtung kann beispielsweise dynamisch erkennen, wenn die Werkstückkante an einer Referenzposition ist.

Es ist möglich, dass die Höhenmesseinrichtung dynamisch beide Werkstückkanten erfasst und zudem vorteilhaft noch einen Relativabstand des erfassenden Sensors von der Stirnseite des Werkstücks ermittelt, sodass die Höhenmesseinrichtung anhand des Relativabstandes und eines Abstands zwischen den erfassten Werkstückkanten oder eines Abstands zwischen Abbildungen der Werkstücckanten die Höhe des Werkstücks ermittelt.

Bevorzugt ist vorgesehen, dass die Antriebseinheit anhand einer Lageranordnung an dem Führungselement zur Einstellung mindestens zweier Stellpositionen der Werkzeugaufnahme relativ zu der Führungsfläche verstellbar gelagert ist, wobei mindestens eine Stellposition einer Werkstückbearbeitungsposition entspricht, in der das an der Werkzeugaufnahme angeordnete Arbeitswerkzeug in dem Werkstückkontaktbereich in Kontakt mit dem Werkstück ist und insbesondere in das Werkstück einschneidet.

Vorteilhaft ist vorgesehen, dass die Werkzeugmaschine mindestens einen Werkzeugsensor zur Erfassung des Werkstückkontaktbereichs und mindestens einen von dem Werkzeugsensor separaten Positionssensor zur Erfassung einer Relativposition der Antriebseinheit relativ zu dem Führungselement aufweist, und dass die Werkzeugmaschine eine Auswerteeinrichtung zur Auswertung von Sensorsignalen des Positionssensors und des Werkzeugsensors aufweist.

Die von dem Positionssensor erfassbare Relativposition kann eine eingestellte oder einstellbare Relativposition der Antriebseinheit relativ zum Führungselement sein. Die Relativposition kann eine Ist-Relativposition, mithin eine aktuelle Stellung der Antriebseinheit relativ zum Führungselement, oder eine Soll-Relativposition sein, beispielsweise eine anhand eines Anschlags einstellbare Relativposition, die die Antriebseinheit bei einem Anschlagen an den Anschlag relativ zum Führungselement einnimmt.

Der Positionssensor kann einen oder mehrere Positionssensoren umfassen. Gleiches gilt selbstverständlich auch für den Werkzeugsensor, der einen oder mehrere Werkzeugsensoren umfassen kann. Man könnte den Positionssensor gemäß der Ansprüche auch als "mindestens einen Positionssensor" und den Werkzeugsensor als "mindestens einen Werkzeugsensor" bezeichnen.

Die Grundkonzeption der Werkzeugmaschine geht davon aus, dass zum einen mit einem Werkzeugsensor der Arbeitsbereich direkt erfassbar ist, beispielsweise um dem Bediener eine leichte Handhabung zu ermöglichen, eine Position des Arbeitswerkzeugs zu ermitteln oder dergleichen. Der Bediener kann beispielsweise dadurch erkennen, dass und wo das Arbeitswerkzeug in Eingriff mit dem Werkstück gelangt. Ein weiterer Sensor, nämlich der Positionssensor, kann die Relativposition der Arbeitseinheit relativ zu dem Führungselement ermitteln, so dass beispielsweise eine aktuelle und/oder eingestellte Arbeitstiefe oder Eindringtiefe des Arbeitswerkzeugs in das Werkstück überwacht werden kann. Beispielsweise ist es möglich, dass der Positionssensor an einer Skala, die an einem Display der Werkzeugmaschine vorgesehen ist, die jeweilige Relativposition der Antriebseinheit und/oder eine sozusagen zukünftige, einstellbare Relativposition der Antriebseinheit relativ zum Führungselement und somit auch die zugeordnete Stellposition der Antriebseinheit und des Arbeitswerkzeugs relativ zum Werkstück anzeigt.

Die Auswerteeinrichtung verfügt vorzugsweise über eine optische Anzeigeeinrichtung, insbesondere einen Bildschirm, ein LCD-Display, eine LED-Anzeige oder dergleichen, zur Anzeige mindestens einer optischen Information, die anhand eines Sensorsignals des Positionssensors und/oder eines Sensorsignals des Werkzeugsensors erzeugt ist oder erzeugbar ist. Somit kann also beispielsweise der Werkzeugsensor, wenn er eine Kamera beinhaltet, ein Abbild des Werkstücckontaktbereichs an der optischen Anzeigeeinrichtung anzeigen. Der Positionssensor kann beispielsweise ein Positionssignal erzeugen, welches als Markierung, Lichtsignal, Skalenanzeige oder dergleichen, in die Anzeigeeinrichtung eingeblendet bzw. oder von der Anzeigeeinrichtung angezeigt wird.

Im einen Fall handelt es sich bei der optischen Anzeigeeinrichtung um einzelne Lichtsignale, beispielsweise LEDs oder dergleichen. Auch Leuchtbalken oder Reihenanordnungen von Leuchten, insbesondere LEDs, sind ohne weiteres möglich. Eine komfortable Anzeige wird beispielsweise durch ein LCD-Display erreicht. Weiterhin ist es vorteilhaft, dass ein graphisches Display als Anzeigeeinrichtung vorgesehen ist oder dass die Anzeigeeinrichtung ein graphisches Display umfasst, so dass beispielsweise ein reales Abbild des Werkstückkontaktbereichs an der Anzeigeeinrichtung anzeigbar ist.

Die an der optischen Anzeigeeinrichtung anzeigbare optische Information umfasst beispielsweise eine Stellpositionsinformation zur Anzeige einer Stellposition der Antriebseinheit relativ zu dem Führungselement und/oder relativ zu dem Werkstück. Die Auswerteeinrichtung erzeugt die Stellpositionsinformation anhand eines Positionssignals des Positionssensors. Die Stellpositionsinformation kann beispielsweise eine Liniendarstellung, eine Punktdarstellung oder dergleichen umfassen oder dadurch gebildet sein. Die Stellpositionsinformation kann aber auch eine Skalenanzeige oder Maßanzeige sein oder umfassen. Durch die Stellpositionsinformation wird beispielsweise die Relativposition der Antriebseinheit zu der Führungsfläche oder zur Oberfläche des Werkstücks signalisiert. Der Bediener kann somit beispielsweise erkennen, wieweit das Arbeitswerkzeug bereits in das Werkstück eingedrungen ist, beispielsweise bei einem Trennschnitt, einer Fräsbearbeitung oder dergleichen.

Die Stellpositionsinformation ist zweckmäßigerweise eine eingestellte Ist-Relativposition der Antriebseinheit relativ zu dem Führungselement. Wenn also die Antriebseinheit relativ zum Führungselement verstellt ist, wird dies durch die Ist-Relativposition bzw. die Stellpositionsinformation dargestellt. Es ist aber auch möglich, dass die Stellpositionsinformation durch eine Verstellung der Antriebseinheit relativ zu dem Führungselement einstellbare Soll-Relativposition umfasst. So kann beispielsweise eine Anschlagsposition oder eine vorgegebene oder vorgebbare Soll-Stellposition, die Antriebseinheit relativ zum Führungselement einnehmen soll, durch die Stellpositionsinformation angezeigt werden.

Eine vorteilhafte Ausführungsform der Erfindung kann nämlich vorsehen, dass durch einen bezüglich des Führungselementes ortsfesten oder ortsfest festlegbaren Anschlag die Soll-Stellposition der Antriebseinheit relativ zum Führungselement vorgebbar ist. Wenn die Antriebseinheit relativ zum Führungselement verstellt wird, schlägt sie beispielsweise an dem Anschlag an, wobei die durch den Anschlag vorgegebene Soll-Stellposition der Antriebseinheit als Stellpositionsinformation an der Anzeigeeinrichtung angezeigt wird. Der Anschlag kann ortsfest sein, d.h. beispielsweise durch einen Vorsprung oder eine Fläche am Führungselement gebildet sein. Es ist aber auch möglich, dass der Anschlag relativ zum Führungselement verstellbar ist, beispielsweise zur Einstellung einer Eindringtiefe oder Arbeitstiefe des Arbeitswerkzeugs in das Werkstück.

Die optische Anzeigeeinrichtung ist zweckmäßigerweise zur Anzeige einer an dem Werkstück angeordneten Werkstückmarkierung und/oder zur Wiedergabe einer durch den Werkzeugsensor erfassten, den Werkstückkontaktbereich abbildenden Bildinformation ausgestaltet und/oder vorgesehen. So kann beispielsweise von dem Werkzeugsensor die Werkstückmarkierung, insbesondere ein Strich oder eine andere optische Markierung am Werkstück, erfasst werden, wobei diese an der Anzeigeeinrichtung angezeigt wird. Wie bereits erwähnt, kann aber auch der Werkstückkontaktbereich vom Werkzeugsensor abgebildet oder erfasst und als Bildinformation ausgegeben werden, wobei die Bildinformation von der Anzeigeeinrichtung für den Bediener sichtbar gemacht wird.

Die Bildinformation über den Werkstückkontaktbereich und/oder die Markierung am Werkstück wird zweckmäßigerweise synoptisch mit der bereits erwähnten Stellpositionsinformation an der Anzeigeeinrichtung angezeigt.

Bevorzugt ist eine Kalibrierung des Positionssensors und/oder dessen Positionssignals:
Zweckmäßigerweise umfasst die Auswerteeinrichtung ein Kalibriermittel zum Kalibrieren eines von dem Positionssensor ermittelten Positionssignals anhand eines durch den Werkzeugsensor ermittelten Werkzeug-Ist-Positionssignals. Der Positionssensor bzw. dessen Positionssignal ist also anhand des Werkzeug-Ist-Positionssignals kalibrierbar. Der Positionssensor kann beispielsweise nicht-lineare Positionswerte oder Positionssignale ausgeben, die anhand des Werkzeug-Ist-Positionssignals sozusagen kalibriert und in lineare und/oder eine jeweilige Stellposition, beispielsweise Tiefeneinstellposition, der Antriebseinheit relativ zum Führungselement repräsentierende Werte umgesetzt werden. Das Werkzeug-Ist-Positionssignal umfasst beispielsweise den realen Eingreifbereich des Arbeitswerkzeugs in das Werkstück, beispielsweise einen Sägeschnitt, einen Trennschnitt oder dergleichen. Es ist also beispielsweise möglich, dass das Positionssignal nicht linear ist und anhand des Werkzeug-Ist-Positionssignals linearisiert wird. Es ist auch möglich, dass das Positionssignal beispielsweise aufgrund einer Bewegungskinematik der Antriebseinheit relativ zum Führungselement nicht die tatsächliche Eintauchtiefe oder Eindringtiefe des Arbeitswerkzeugs in das Werkstück repräsentiert. Wenn also beispielsweise die Antriebseinheit um eine Achse relativ zum Führungselement und somit relativ zum Werkstück schwenkt, beschreibt das Arbeitswerkzeug beispielsweise eine Kreisbogenbahn mit einem zu der Führungsebene orthogonalen Bewegungsvektor und einem zu der Führungsebene parallelen Bewegungsvektor, die abhängig vom jeweiligen Kreis Bogenabschnitt unterschiedliche Beträge aufweisen, was unterschiedliche Auswirkungen beispielsweise auf eine vordere und/oder hintere Bearbeitungskante des Arbeitswerkzeugs beim Einschneiden oder Eingriff in das Werkstück zur Folge hat.

Das Werkzeug-Ist-Positionssignal kann beispielsweise einen Randbereich des Arbeitswerkzeugs und/oder eine durch eine Bearbeitung des Werkstücks anhand des Arbeitswerkzeugs ausgebildete Bearbeitungskante, insbesondere eine Schnittkante, an dem Werkstück repräsentieren. So ist beispielsweise eine in Arbeitsrichtung des Arbeitswerkzeugs vordere oder hintere Schnittkante oder Bearbeitungskante durch den Werkzeugsensor erfassbar und durch das Werkzeug-Ist-Positionssignal repräsentiert.

Bei der Erfassung des Werkzeug-Ist-Positionssignals und/oder dessen Verarbeitung sind vorteilhafte Maßnahmen vorgesehen:
Die Auswerteeinrichtung umfasst zweckmäßigerweise zur Ermittlung des Werkzeug-Ist-Positionssignals mindestens einen optischen Filter und/oder einen digitalen Filter oder wendet einen derartigen Filter an. So kann beispielsweise durch eine optische Filterung, eine Grauwertfilterung, eine Polarisationsfilterung oder dergleichen, ein besseres Werkzeug-Ist-Positionssignal ermittelt werden. Auch eine digitale Filterung, bei der beispielsweise Unschärfen, Schwingungen oder dergleichen durch Software-Filter oder dergleichen ausgefiltert werden, ist im Zusammenhang mit der Ermittlung des Werkzeug-Ist-Positionssignals zweckmäßig.

Eine weitere vorteilhafte Maßnahme sieht vor, dass das Kalibriermittel zur Erzeugung einer Zuordnungsinformation ausgestaltet ist.

Die Auswerteeinrichtung ist vorteilhaft zur Ermittlung einer Information über eine durch eine Bearbeitung des Werkstücks anhand des Arbeitswerkzeugs ausgebildete oder sich ausbildenden Bearbeitungskante an dem Werkstück, beispielsweise eine Schnittkante, anhand der Zuordnungsinformation und einer an der Werkzeugmaschine eingestellten oder einstellbaren Stellposition der Antriebseinheit relativ zu dem Führungselement ausgestaltet ist. Die Zuordnungsinformation umfasst beispielsweise eine Zuordnungstabelle, eine mathematische Zuordnungsfunktion oder beides. Die eingestellte oder einstellbare Stellposition der Antriebseinheit relativ zu dem Führungselement ist zweckmäßigerweise durch den Positionssensor erfasst oder erfassbar.

Die Zuordnungsinformation dient zweckmäßigerweise dazu, dass die Auswerteeinrichtung eine insbesondere anhand des Positionssensors erfasste Stellposition der Antriebseinheit relativ zu dem Führungselement dazu zu nutzen, eine Information über eine durch eine Bearbeitung des Werkstücks anhand des Arbeitswerkzeugs sich ausbildende oder bereits ausgebildete Bearbeitungskante an dem Werkstück zu ermitteln. Wenn also beispielsweise ein Anschlag eine einstellbare Einstellposition der Antriebseinheit darstellt, wird diese Stellposition durch den Positionssensor erfasst. Die Auswerteeinheit ermittelt anhand des Positionssignals und der Zuordnungsinformation eine Information, die der tatsächlichen sich ausbildenden Bearbeitungskante an dem Werkstück entspricht, nämlich eine Soll-Position. Wenn der Bediener die Antriebseinheit relativ zum Führungselement bis zu der Stellposition einstellt, die durch den Anschlag vorgegeben ist, schneidet das Arbeitswerkzeug bis zu der auf diesem Wege ermittelten und/oder angezeigten Soll-Position in das Werkstück ein, so dass sich die Bearbeitungskante oder Schnittkante ausbildet. Der Bediener kann also anhand der Information, die vorzugsweise an der Anzeigeeinrichtung angezeigt wird, bereits erkennen, in welcher Tiefe und/oder bis zu welchem Ort er in das Werkstück einschneiden wird.

Es ist aber auch möglich, dass die anhand des Positionssignals und der Zuordnungsinformation ermittelte Information eine tatsächliche, sich bereits bei der aktuellen Bearbeitung des Werkstücks ausbildende Schnittkante oder Bearbeitungskante repräsentiert. Wenn also der Werkzeugsensor beispielsweise bei der Werkstückbearbeitung sozusagen keine Sicht auf den Werkstückkontaktbereich hat, d.h. dass dieser beispielsweise durch Sicherheitselemente, Abdeckungen oder dergleichen, Stäube etc. verdeckt ist, ermittelt die Auswerteeinrichtung eine Information anhand des Positionssignals und der Zuordnungsinformation, wo sich das Arbeitswerkzeug tatsächlich befindet, um diese Information beispielsweise an der Anzeigeeinrichtung anzuzeigen oder in sonstiger Weise für die weitere Werkstückbearbeitung zu verwenden.

Die Genauigkeit wird durch die vorstehenden Maßnahmen deutlich erhöht. Mechanische Toleranzen, beispielsweise bei der Montage der Werkzeugmaschine, in der Lageranordnung, bei der Montage des Positionssensors und/oder des Werkzeugsensors, werden sozusagen überbrückt oder ausgeglichen oder ausgeschaltet. Anhand der Zuordnungsinformation kann sozusagen das Positionssignal als ein solches Positionssignal interpretiert werden, das die tatsächliche Stellposition der Antriebseinheit relativ zum Führungselement oder eine eingestellte Position, beispielsweise eines Anschlags für die Antriebseinheit, repräsentiert.

Die Zuordnungsinformation ist vorteilhaft auf mindestens zwei zueinander winkelige Zuordnungskoordinaten oder Zuordnungsachsen bezogen.

Die Zuordnungsinformation ist also zweckmäßigerweise mehrachsig, insbesondere in Bezug auf zwei zueinander winkelige, insbesondere rechtwinkelige Zuordnungsachsen ausgestaltet. So enthält beispielsweise das Werkzeugsensorsignal des Werkzeugsensors Bildinformationen oder Pixel, die in zueinander winkeligen Richtungen, beispielsweise einer x-Richtung und einer y-Richtung, vorgesehen sind. Die Zuordnungsinformation für das Positionssignal ist dementsprechend sowohl auf die eine Zuordnungsachse, beispielsweise die x-Achse, als auch auf die andere Zuordnungsachse, beispielsweise die y-Achse, insbesondere auf zueinander rechtwinkelige Zuordnungsachsen, bezogen. Wenn also beispielsweise die Bildinformation des Werkzeugsensors nicht exakt mit einer Arbeitsrichtung der Werkzeugmaschine bezüglich des Werkstücks, entlang der das Werkstück an der Werkzeugmaschine entlang oder umgekehrt die Werkzeugmaschine an dem Werkstück entlang führbar ist, fluchtet, wird durch die Zuordnung der Bildinformation auf eine x- und eine y-Zuordnungsachse oder jedenfalls zwei zueinander winkelige Zuordnungsachsen dennoch eine eindeutige Zuordnungsinformation für das Positionssignal ermittelt.

Somit kann also beispielsweise das Positionssignal eine eingestellte Bearbeitungskante, beispielsweise eine vordere oder hintere Bearbeitungskante, des Arbeitswerkzeugs relativ zum Werkstück exakt, z.B. 0,1 bis 0,5 mm genau, repräsentieren, wobei die Genauigkeit lediglich durch die Auflösung des Werkzeugsensors, beispielsweise dessen digitale Auflösung, und die Auflösung der Anzeigeeinrichtung oder des Positionssensors beschränkt ist. Eventuelle mechanische Toleranzen, die bei der Werkzeugmaschine, dem Arbeitswerkzeug oder dergleichen auftreten können, sind somit quasi eliminiert. Zu den mechanischen Toleranzen, die schon angesprochen wurden, ist noch nachzutragen, dass diese beispielsweise auch durch einen Verschleiß des Arbeitswerkzeugs entstehen können.

Ein zweckmäßiges Konzept sieht vor, dass der Positionssensor und der Werkzeugsensor zwei voneinander verschiedene physikalische Messprinzipien aufweisen.

Weiterhin ist es vorteilhaft, wenn der Werkzeugsensor eine Kamera umfasst oder dadurch gebildet ist und der Positionssensor keine Kamera ist. An dieser Stelle sei aber erwähnt, dass beide, der Positionssensor und der Werkzeugsensor, durch Kameras gebildet sein können oder Kameras umfassen. Es können auch beide, der Positionssensor und der Werkzeugsensor nicht durch Kameras gebildet sein, sondern beispielsweise durch optische Sensoren mit unterschiedlichen Messprinzipien, induktive Sensoren oder dergleichen oder derartige Sensoren umfassen.

Ein bevorzugtes Konzept sieht vor, dass die Werkzeugmaschine eine Beleuchtungseinrichtung zur Beleuchtung des Werkstückkontaktbereichs aufweist. Anhand der Beleuchtungseinrichtung, insbesondere einer LED-Anordnung oder dergleichen ist der Werkstückkontaktbereich gut sichtbar, was die Erfassung durch den Werkzeugsensor erleichtert oder verbessert.

Bevorzugt ist es, wenn dem Werkzeugsensor mindestens ein Filter, insbesondere ein Polarisationsfilter und/oder ein Farbfilter und/oder ein Graufilter, vorgeschaltet ist. Der Werkzeugsensor ist in diesem Fall beispielsweise ein optischer Sensor, eine Kamera oder dergleichen. Anhand eines Polarisationsfilters, insbesondere eines linearen Polarisationsfilters oder eines zirkularen Polarisationsfilters, können beispielsweise Reflexionen gefiltert werden, sodass das Signal des Werkzeugsensors durch Reflexionen weniger oder nicht beeinflusst ist. Ein Farbfilter kann beispielsweise das vom Werkzeugsensor erfassbare Farbspektrum begrenzen, sodass nicht relevante Farben, beispielsweise eine Farbe eines Holzes oder dergleichen, von vornherein ausgefiltert werden. Ein Graufilter, der eine einzige Graustufe oder auch einen Grauverlauf oder starke und weniger lichtdurchlässige Zonen aufweisen kann, kann helle Bereiche sozusagen ausblenden.

Eine vorteilhafte Beleuchtungseinrichtung beleuchtet den Werkstückkontaktbereich und/oder den Erfassungsbereich des Werkzeugsensors oder die Erfassungsbereiche der Werkzeugsensoren vorzugsweise mit einer Helligkeit, die größer als eine Helligkeit eine Umgebung der Werkzeugmaschine ist. Möglich ist beispielsweise eine Beleuchtung mit einer Helligkeit, die in Arbeitsräumen typischerweise nicht überschritten wird. Somit kann beispielsweise ein Störeinfluss von Umgebungslicht minimiert oder vermieden werden, was die Erfassungsqualität des Werkzeugsensors verbessert.

Bei einer vorteilhaften Beleuchtungseinrichtung kann die Helligkeit einstellbar sein. Dies ist beispielsweise mit einem Einstellelement oder einer grafischen Bedienoberfläche möglich, die die Werkzeugmaschine aufweist. Es ist aber auch eine automatische Helligkeitsadaption vorteilhaft, d. h. dass die Werkzeugmaschine mindestens einen Helligkeitssensor, insbesondere für ein Umgebungslicht um die Werkzeugmaschine herum, aufweist und zur Einstellung einer Helligkeit der Beleuchtungseinrichtung in Abhängigkeit von der Helligkeit der Umgebung der Werkzeugmaschine ausgestaltet ist.

Der Werkzeugsensor und/oder der Positionssensor können unterschiedliche Sensoren oder Messprinzipien umfassen oder dadurch gebildet sein. Exemplarisch seien beispielsweise genannt, wobei Kombinationen dieser Sensoren oder Messprinzipien ohne weiteres beim Werkzeugsensor und beim Positionssensor möglich sind:
Eine Kamera, ein induktiver Sensor, ein kapazitiver Sensor, ein optischer Sensor, ein Neigungssensor, ein Beschleunigungssensor, ein Abstandssensor, ein elektrischer Messwiderstand oder dergleichen.

So kann beispielsweise ein elektrischer Messwiderstand an einer Führung der Antriebseinheit relativ zum Führungselement vorgesehen sein. Auch ein optischer Sensor, beispielsweise ein Sensor mit einem Laser, einer Photozelle oder dergleichen, kann zur Positionserfassung vorgesehen sein. Weiterhin ist ein Neigungssensor vorteilhaft, der beispielsweise eine Neigung oder Schwenklage der Antriebseinheit relativ zum Führungselement erfassen kann. Anhand von induktiven Messprinzipien oder kapazitiven Messprinzipien ist es möglich, eine Position beispielsweise des Arbeitswerkzeugs relativ zum Führungselement zu erfassen.

Es ist vorteilhaft, wenn an der Lageranordnung mindestens ein Positionssensor vorgesehen ist.

Der Positionssensor umfasst beispielsweise einen an einer Winkeleinstelleinrichtung zur Einstellung einer Winkellage der Arbeitseinheit relativ zu dem Führungselement angeordneten Positionssensor. So kann beispielsweise an einer Winkel-Führung oder dergleichen ein Positionssensor vorgesehen sein.

Weiterhin ist es vorteilhaft, wenn der Positionssensor einen an einer Tiefeneinstelleinrichtung zur Einstellung einer Eindringtiefe des Arbeitswerkzeugs in das Werkstück angeordneten Positionssensor umfasst oder dadurch gebildet ist. So kann beispielsweise der Positionssensor die Position eines Anschlags, der an der Tiefeneinstelleinrichtung beweglich gelagert ist, erfassen.

Weiterhin ist es vorteilhaft, wenn der Positionssensor einen an einer Führungseinrichtung, beispielsweise einer Linearführung, einer Schwenkführung, einer Bogenführung oder dergleichen, angeordneten Positionssensor aufweist, wobei die Führung zur Führung der Antriebseinheit relativ zu dem Führungselement vorgesehen ist.

Weiterhin ist es möglich, einen Positionssensor an einem Schwenklager oder Schiebelager der Lageranordnung vorzusehen.

Selbstverständlich können mehrere der vorgenannten Positionssensoren vorgesehen sein, beispielsweise ein Positionssensor an der Führungseinrichtung und ein Positionssensor an der Lageranordnung.

Bevorzugt hat die Werkzeugmaschine eine Tiefeneinstelleinrichtung zur Einstellung einer Eindringtiefe des Arbeitswerkzeugs in das Werkstück. Die Tiefeneinstelleinrichtung umfasst eine Haltekontur, die am Führungselement angeordnet ist. An der Haltekontur ist ein Anschlagelement beweglich gelagert und/oder in einer jeweiligen Stellposition der Werkzeugaufnahme relativ zu der Führungsfläche / zu dem Werkstück oder der Werkstückoberfläche zugeordneten Einstellposition fixierbar. An dem Anschlagelement schlägt die Antriebseinheit in der jeweiligen Einstellposition an. Somit kann also der Bediener eine jeweils gewünschte Eindringtiefe oder Bearbeitungstiefe des Arbeitswerkzeugs in das Werkstück anhand der Tiefeneinstelleinrichtung einstellen. Eine derartige Tiefeneinstelleinrichtung eignet sich beispielsweise zur Einstellung einer Soll-Stellposition der Antriebseinheit relativ zu dem Führungselement.

Bevorzugt ist es, wenn der Positionssensor einen Positionssensor zur Erfassung der Einstellposition des Anschlagelementes bezüglich der Haltekontur umfasst oder dadurch gebildet ist. Beispielsweise ist an der Haltekontur ein elektrischer Messwiderstand angeordnet, der die Position des Anschlagelementes erfassen kann. Aber auch ein optisches Prinzip, mit dem das Anschlagelement erfassbar ist bzw. die Position des Anschlagelementes relativ zu der Haltekontur und somit zum Führungselement, ist zweckmäßig. Andere Messprinzipien, beispielsweise induktive, kapazitive oder sonstige Messprinzipien sind bei dem Positionssensor, der das Anschlagelement bzw. dessen Position erfasst, ohne weiteres auch möglich.

Die Auswerteeinrichtung ist zweckmäßigerweise zur Ansteuerung des Antriebsmotors und/oder eines Stellantriebs zur Verstellung der Antriebseinheit relativ zu dem Führungselement in Abhängigkeit von einem Sensorsignal des mindestens einen Positionssensors und/oder des Werkzeugsensors ausgestaltet. Somit kann beispielsweise der Antriebsmotor automatisch abgeschaltet werden oder die Antriebseinheit automatisch verstellt werden, wenn eine jeweilige Soll-Stellposition erreicht ist. Ohne weiteres ist es aber möglich, dass auch bei dieser Ausgestaltung die vorgenannte optische Anzeigeeinrichtung vorhanden ist, d.h. dass der Bediener beispielsweise anhand der optischen Anzeigeeinrichtung sieht, was die Maschine automatisch macht oder dass der Bediener die Maschine aus einem automatischen Modus, bei dem die Auswerteeinrichtung den Antriebsmotor oder den Stellantrieb ansteuert, in einen Manuelmodus umschalten kann, wo er sozusagen anhand der optischen Anzeigeeinrichtung das Werkstück bearbeitet. Beispielsweise kann die Auswerteeinrichtung den Antriebsmotor abschalten, wenn ein Sägeschnitt oder eine sonstige Werkstückbearbeitung abgeschlossen ist. Weiterhin ist es möglich, dass die Auswerteeinrichtung den Stellantrieb dazu ansteuert, dass beispielsweise das Arbeitswerkzeug vom Werkstück weg oder zum Werkstück hin bewegt wird.

Bevorzugt ist es, wenn die Werkzeugmaschine nicht nur einen Werkzeugsensor, sondern mehrere, insbesondere mindestens zwei Werkzeugsensoren aufweist.

Bevorzugt ist eine Werkzeugsensoranordnung vorgesehen, die mindestens zwei Werkzeugsensoren zur Erfassung eines jeweiligen Werkstückkontaktteilbereichs des Werkstückkontaktbereichs an einander entgegengesetzten Seiten des Arbeitswerkzeugs aufweist. An jedem Werkstückkontaktteilbereich greift ein Abschnitt des Arbeitswerkzeugs in das Werkstück ein. So kann beispielsweise eine in Arbeitsrichtung vordere und eine in Arbeitsrichtung hintere Seite des Arbeitswerkzeugs durch jeweils einen Werkzeugsensor erfasst werden. Die vorgenannten Zuordnungsinformationen oder dergleichen sein somit deutlich genauer ermittelbar, weil nämlich nicht nur ein Werkzeugsensor, sondere mehrere Werkzeugsensoren beispielsweise die jeweilige Eindringtiefe des Arbeitswerkzeugs in das Werkstück erfassen können.

Es ist nämlich vorteilhaft, wenn die Auswerteeinrichtung ein Kalibriermittel, insbesondere das vorgenannte und erläuterte Kalibriermittel, zum Kalibrieren eines von dem Positionssensor ermittelten Positionssignals anhand von durch die den Werkstückkontaktteilbereich des Werkstückkontaktbereichs zugeordneten Werkzeugsensoren ermittelten Werkstück-Ist-Positionssignalen aufweist. Dadurch ist eine deutlich höhere Genauigkeit erzielbar.

Es ist weiterhin vorteilhaft, wenn die Werkzeugmaschine, beispielsweise die Auswerteeinrichtung, zu einer Ermittlung einer Positionierung des Führungselements auf einer Führungseinrichtung, beispielsweise eine Führungsschiene, zum Führen des Führungselements ausgestaltet ist. An der Führungseinrichtung oder Führungsschiene kann das Führungselement beispielsweise in einer Arbeitsrichtung geradlinig geführt sein oder führbar sein. Eine Bearbeitungstiefe oder Eindringtiefe des Arbeitswerkzeugs in das Werkstück hängt davon ab, ob das Führungselement auf der Führungseinrichtung oder neben der Führungseinrichtung angeordnet ist. Beispielsweise muss die Antriebseinheit weiter in Richtung Führungselement geschwenkt werden, wenn das Führungselement auf der Führungsschiene/Führungseinrichtung und nicht auf dem Werkstück unmittelbar steht, um die gleiche Eindringtiefe oder Bearbeitungstiefe des Arbeitswerkzeugs in das Werkstück zu erzielen. Die Auswerteeinrichtung kann beispielsweise in Abhängigkeit von einer Positionierung des Führungselements auf der Führungseinrichtung oder abseits davon, beispielsweise unmittelbar auf dem Werkstück, die vorgenannte Kalibrierung, Zuordnung von Positionssignalen und Bildsignalen auf der Anzeigeeinrichtungen oder dergleichen, durchführen. Dadurch wird die jeweilige Höhe der Führungsschiene oder Führungseinrichtung, d. h. der Abstand von der Oberseite der Führungseinrichtung zu ihrer auf dem Werkstück aufliegenden Unterseite, in die Kalibrierung, Zuordnung von Signalen und dergleichen mehr durch die Werkzeugmaschine sozusagen automatisch einbezogen.

Für die Erkennung einer Führungsschiene können aber verschiedene sensorische Konzepte oder Konzepte der Bildverarbeitung zum Einsatz kommen, zum Beispiel die Relation einer Kante der Werkzeugmaschine zu dem Werkstück und/oder der Führungsschiene. Weiterhin kann eine Führungsschiene beispielsweise anhand eindeutiger optischer Merkmale, zum Beispiel deren geradlinigem Längsverlauf, ihrer Farbe, ihrer Musterung oder anhand einer an der Führungsschiene angeordneten eindeutigen Kennung, zum Beispiel ein Bitmuster oder Strichcode, ermittelt werden. Schließlich ist auch ein Bildvergleich oder Template-Vergleich möglich, bei dem das von der Führungsschiene durch den Werkzeugsensor ermittelte Bild mit einem Vergleichsbild verglichen wird.

Bevorzugt ist es, wenn ein Werkzeugsensor oder alle Werkzeugsensoren der Werkzeugmaschine einen größeren Abstand von der Führungsfläche aufweisen. Die Antriebseinheit erstreckt sich beispielsweise in einer maximalen Höhenerstreckung von der Führungsfläche weg. Die maximale Höhenerstreckung ist beispielsweise durch eine Oberseite eines Maschinengehäuses der Antriebseinheit definiert, während die Führungsfläche sozusagen die Unterseite der Werkzeugmaschine darstellt. Der Werkzeugsensor ist vorzugweise in einem Abstand von der Führungsfläche entfernt an der Werkzeugmaschine angeordnet, der mindestens 20 %, vorzugsweise 30 %, insbesondere sogar 40 % oder 50 % einer maximalen Höhenerstreckung beträgt, mit der sich die Antriebseinheit von der Führungsfläche weg erstreckt.

Eine vorteilhafte Ausführungsform sieht vor, dass die Werkzeugsensoranordnung mindestens zwei Werkzeugsensoren aufweist, deren Erfassungsbereiche verschiedenen Werkstückkontaktteilbereichen des Werkstückkontaktbereichs zugeordnet sind.

Vorteilhaft ist vorgesehen, dass das Arbeitswerkzeug zumindest teilweise zwischen die Erfassungsbereiche der Werkzeugsensoren eingreift, sodass der dem Werkstückkontaktteilbereich zugeordnete Erfassungsbereich des einen Werkzeugsensors für eine Erfassung durch den anderen Werkzeugsensor zumindest teilweise durch das Arbeitswerkzeug verdeckt ist.

Vorteilhaft ist bei der Werkzeugmaschine oder einer Werkzeugmaschine der eingangs genannten Art vorgesehen, dass die Werkzeugsensoranordnung mindestens zwei Werkzeugsensoren zur Erfassung eines jeweiligen Werkstückkontaktteilbereichs des Werkstückkontaktbereichs an einander entgegengesetzten Seiten des Arbeitswerkzeugs aufweist, wobei an jedem Werkstückkontaktteilbereich ein Abschnitt des Arbeitswerkzeugs in das Werkstück eingreift.

Die beiden Werkzeugsensoren (es können auch mehrere Werkzeugsensoren vorgesehen sein) erfassen somit jeweils Werkstückkontaktteilbereiche. Die Werkstückkontaktteilbereiche liegen optimal in den Erfassungsbereichen der jeweiligen Werkzeugsensoren, was eine deutlich verbesserte Sicht auf den Werkstückkontaktbereich ermöglicht. Eine "Sicht auf den Werkstückkontaktbereich" soll jedoch nicht so verstanden werden, dass nur mit einer Kamera oder einem optischen Sensor gearbeitet werden kann. Auch andere Messprinzipien für die Werkzeugsensoren sind an dieser Stelle vorteilhaft, beispielsweise kapazitive, induktive oder dergleichen andere, insbesondere berührungslos arbeitende oder funktionierende Messprinzipien oder Erfassungsprinzipien.

Bevorzugt ist es, wenn die Erfassungsbereiche einander entgegengesetzten Seiten des Arbeitswerkzeugs zugeordnet sind. Somit erfasst also jeder Werkzeugsensor an einer Seite des Arbeitswerkzeugs den jeweiligen Werkstückkontaktteilbereich.

Die Werkstückkontaktteilbereiche des Werkstückkontaktbereichs sind zweckmäßigerweise an einander entgegengesetzten Seiten des Arbeitswerkzeugs vorgesehen.

Die an einander entgegengesetzten Seiten des Arbeitswerkzeugs vorgesehenen Werkstückkontaktteilbereiche sind z.B. durch das Arbeitswerkzeug ganz oder teilweise verdeckt, so dass der Werkstückkontaktteilbereich, der dem einen Werkzeugsensor zugeordnet ist, nicht oder nur teilweise durch den jeweils anderen Werkzeugsensor erfassbar ist.

Es ist weiterhin möglich, dass die Werkzeugmaschine mehrere, d.h. mehr als zwei, Werkzeugsensoren zur Erfassung eines jeweiligen Werkstückkontaktteilbereichs aufweist. Die Werkzeugsensoren sind vorzugsweise in einer Reihe nebeneinander angeordnet. So ist es beispielsweise möglich, dass zwei Werkzeugsensoren einander entgegengesetzten Seiten des Arbeitswerkzeugs zugeordnet sind bzw. dort befindliche Werkstückkontaktteilbereiche erfassen und der Erfassungsbereich eines dritten oder weiteren Werkzeugsensors zwischen den Erfassungsbereichen der beiden vorgenannten Werkzeugsensoren liegt.

Zweckmäßigerweise ist vorgesehen, dass die Werkzeugmaschine mindestens drei Werkzeugsensoren aufweist, die in einer Reihenanordnung angeordnet sind, die in der Geometrie einer Außenumfangskontur des Arbeitswerkzeugs an dessen Außenumfangskontur verläuft. Somit ist es möglich, dass die Werkzeugsensoren beispielsweise an einem Außenumfang des Arbeitswerkzeugs in Reihe nebeneinander angeordnet sind. Eine Reihenanordnung der Werkzeugsensoren korreliert zweckmäßigerweise mit einer Außenumfangskontur oder entspricht zweckmäßigerweise einer Außenumfangskontur des Arbeitswerkzeugs. So können beispielsweise bei einem geradlinigen Arbeitswerkzeug die Werkzeugsensoren in einer Reihenanordnung entlang einer geraden Linie angeordnet sein. Bei einem gekrümmten oder bogenförmigen Arbeitswerkzeug sind die Werkzeugsensoren entlang einer gekrümmten oder bogenförmigen Reihe angeordnet.

Somit kann jeder Werkzeugsensor optimal den ihm jeweils zugeordneten Werkstückkontaktteilbereich erfassen. So kann beispielsweise am Außenumfang eines Fräswerkzeugs eine Reihenanordnung von drei oder mehreren Werkzeugsensoren vorgesehen sein.

Eine vorteilhafte Maßnahme sieht vor, dass der eine Werkstückkontaktteilbereich einem Eintrittsbereich des Arbeitswerkzeugs in das Werkstück und der andere Werkstückkontaktbereich einem Austrittsbereich des Arbeitswerkzeugs aus dem Werkstück entspricht. Eine derartige Anordnung ist insbesondere bei Tauchsägen oder dergleichen anderen Werkzeugmaschinen vorteilhaft, deren Arbeitswerkzeug sozusagen von oben her in das Werkstück eindringt, wobei der jeweils in Eingriff mit der Werkstückoberfläche des Werkstücks befindliche Außenumfang des Arbeitswerkzeugs mit zunehmender Eindringtiefe des Arbeitswerkzeugs in das Werkstück zunimmt. Der Bediener kann somit beide Bereiche, den Eintrittsbereich und den Austrittsbereich, optimal überwachen.

Zweckmäßigerweise ist vorgesehen, dass die Werkzeugaufnahme relativ zu der Führungsfläche zur Verstellung einer Eindringtiefe des Arbeitswerkzeugs in das Werkstück verstellbar gelagert ist und dass die Werkzeugsensoren im Bereich eines größten Abstands der Werkstückkontaktteilbereiche bei maximaler Eindringtiefe des Arbeitswerkzeugs in das Werkstück angeordnet sind. Zwischen den Werkzeugsensoren ist also ausreichend Abstand vorhanden, dass das Arbeitswerkzeug in den Zwischenraum zwischen den Werkzeugsensoren bei maximaler Eindringtiefe in das Werkstück passt. Somit sind also beispielsweise die Werkzeugsensoren im Bereich eines maximalen radialen Außenumfangs des Arbeitswerkzeugs angeordnet.

Denkbar ist es, dass mindestens ein Werkzeugsensor an einer der Führungsfläche zugewandten Seite des Führungselements angeordnet ist. So kann beispielsweise ein Ausleger oder Arm vom Führungselement aus Richtung der Arbeitseinheit vorstehen und sozusagen die von der Antriebseinheit abgewandte Seite des Führungselements erfassen.

Vorteilhaft ist es aber, wenn mindestens ein Werkzeugsensor, vorzugsweise beide oder alle Werkzeugsensoren, an einer von der Führungsfläche abgewandten Seite des Führungselements angeordnet sind. In anderer Formulierung sind die Werkzeugsensoren oder der mindestens eine Werkzeugsensor an der der Antriebseinheit zugeordneten Seite des Führungselements angeordnet. Somit ist also die Führungsfläche sozusagen frei von Werkzeugsensoren, was die Handhabung der Werkzeugmaschine erleichtert. Die Führungsfläche ist für das Werkstück frei zugänglich.

Weiterhin vorteilhaft ist es, wenn mindestens ein Werkzeugsensor, vorzugsweise beide oder alle Werkzeugsensoren, in einem Staubabfuhrbereich und/oder unterhalb einer Abdeckung angeordnet sind. Weiterhin ist es für den einen oder für mehrere Werkzeugsensoren vorteilhaft, wenn Sie unterhalb einer Abdeckung angeordnet sind. Dadurch sind die Werkzeugsensoren geschützt. Insbesondere ist der Staubabfuhrbereich in der Regel nahe beim Arbeitswerkzeug vorgesehen, so dass die Werkzeugsensoren jeweils unmittelbar vor Ort, nämlich nahe beim Arbeitswerkzeug, den ihren jeweils zugeordneten Werkstückkontaktteilbereich erfassen können.

Eine vorteilhafte Maßnahme sieht vor, dass die Werkzeugmaschine eine Beleuchtungseinrichtung zur Beleuchtung des Werkstückkontaktbereichs aufweist. Die Beleuchtungseinrichtung umfasst beispielsweise eine LED-Anordnung oder eine sonstige Beleuchtungseinrichtung.

Bevorzugt ist es in diesem Zusammenhang, wenn die Beleuchtungseinrichtung für jeden Werkstückkontaktteilbereich ein Beleuchtungselement zu individuellen Beleuchtung des jeweiligen Werkstückkontaktteilbereichs aufweist. Somit wird also auch eine optimale Beleuchtung vor Ort gewährleistet. Die Leuchtwirkung des einen Beleuchtungselements kann nämlich optimal auf den Werkstückkontaktteilbereich bzw. den Erfassungsbereich des jeweiligen Werkzeugsensors abgestimmt werden, beispielsweise in Bezug auf Lichtfarbe, Wellenlänge, Beleuchtungsintensität oder dergleichen. Weiterhin kann das Arbeitswerkzeug den Lichtaustritt eines Beleuchtungselements zum Erfassungsbereich eines anderen Werkzeugsensors behindern oder verschatten.

Eine bevorzugte Variante sieht vor, dass die Werkzeugmaschine eine Anzeigeeinrichtung, beispielsweise einen Bildschirm, zur Anzeige von Sensorsignalen der Werkzeugsensoren aufweist. Beispielsweise können die Sensorsignale eine den jeweiligen Werkstückkontaktteilbereich abbildende Abbildinformation umfassen, die von der Anzeigeeinrichtung anzeigbar ist.

Ein bevorzugtes Konzept sieht vor, dass die Werkzeugmaschine eine Schalteinrichtung zum Umschalten zwischen den Sensorsignalen der Werkzeugsensoren aufweist, wobei die Umschalteinrichtung das Sensorsignal des einen Werkzeugsensors oder das Sensorsignal des anderen Werkzeugsensors vorrangig vor dem jeweils anderen Sensorsignal als Ausgangssignal in Abhängigkeit von mindestens einer Schaltbedingung ausgibt. Die Umschalteinrichtung kann beispielsweise ein Bestandteil des Displays oder der Anzeigeeinrichtung sein. Die Umschalteinrichtung kann auch von einer Auswerteeinrichtung zur Auswertung der Sensorsignale gebildet sein oder zumindest teilweise dadurch realisiert werden.

Die mindestens eine Schaltbedingung umfasst beispielsweise eine zeitliche Bedingung. So kann beispielsweise das Sensorsignal des einen Werkzeugsensors für eine vorbestimmte erste Zeitspanne und anschließend das Sensorsignal des anderen Werkzeugsensors ausgegeben werden, beispielsweise als Bildinformation an der Anzeigeeinrichtung. So kann beispielsweise beim Einschalten der Werkzeugmaschine zunächst das Sensorsignal des in Arbeitsrichtung hinteren Werkzeugsensors ausgegeben werden, so dass der Bediener Zeit hat, das Arbeitswerkzeug relativ zum Werkstück zu positionieren, also beispielsweise ein Sägeblatt in das Werkstück einzutauchen. Nach Ablauf der vorbestimmten ersten Zeitspanne schaltet die Umschalteinrichtung sozusagen auf die Bildinformation oder auf das sonstige Sensorsignal des in Arbeitsrichtung vorderen Werkzeugsensors um. So kann der Bediener beispielsweise bei einem Vorschub der Werkzeugmaschine entlang der Arbeitsrichtung am Werkstück entlang oder dem Werkstück entlang der Arbeitsrichtung an der Werkzeugmaschine entlang, den jeweiligen Einschnittbereich des Arbeitswerkzeugs oder Eingriffbereich des Arbeitswerkzeugs in das Werkstück kontrollieren.

Die Werkzeugmaschine kann aber auch ein manuell betätigbares Betätigungselement aufweisen, zum Beispiel einen Taster, welches von einem Bediener bedienbar ist. Das Betätigungselement erzeugt ein Schaltsignal, welches von der Umschalteinrichtung zum Umschalten zwischen den Sensorsignalen der Werkzeugsensoren ausgewertet wird.

An dieser Stelle sei bemerkt, dass eine vorrangige Ausgabe eines Sensorsignals nicht bedeutet, dass das andere Sensorsignal nicht ausgegeben wird. So kann beispielsweise das Sensorsignal des einen Werkzeugsensors als größere Abbildung an der Anzeigeeinrichtung als das Sensorsignal des anderen Werkzeugsensors ausgegeben werden.

Weiterhin ist es vorteilhaft, wenn die Schaltbedingung ein Beschleunigungssignal umfasst oder dadurch gebildet ist. So kann beispielsweise eine Vorwärtsbewegung oder eine Bewegung der Werkzeugmaschine entlang der Arbeitsrichtung als eine Beschleunigung erfasst werden. Es ist auch möglich, dass eine Eintauchbewegung der Antriebseinheit relativ zu dem Führungselement bzw. relativ zu dem Werkstück als ein Beschleunigungssignal interpretiert wird. So kann bei der vorgenannten Eintauchbewegung beispielsweise die Eintauchbewegung als solche durch den Beschleunigungssensor detektiert werden. In Abhängigkeit von einem Beschleunigungssignal, nämlich beispielsweise dem Beschleunigungssignal dieses Beschleunigungssensors, kann dann beispielsweise die Anzeigeeinrichtung zunächst das Sensorsignal des in Arbeitsrichtung hinteren Werkzeugsensors anzeigen. Wenn dann keine weitere Beschleunigung zum Werkstück hin von dem Beschleunigungssensor detektiert wird, ist der Eintauchvorgang abgeschlossen. Sodann schaltet die Anzeigeeinrichtung beispielsweise auf das Sensorsignal des in Arbeitsrichtung vorderen Werkzeugsensors um.

Ein bevorzugtes Konzept, sieht vor, dass mindestens ein Werkzeugsensor, zweckmäßigerweise die oder beide Werkzeugsensoren, an dem Führungselement angeordnet ist bzw. sind. Die Werkzeugsensoren sind dadurch beispielsweise sehr nahe bei den Werkstückkontaktteilbereichen positioniert.

Bevorzugt ist es, wenn die Erfassungsbereiche der Werkzeugsensoren und/oder optische Achsen der Werkzeugsensoren in unterschiedlichen Winkeln relativ zu einem Außenumfang des Arbeitswerkzeugs angeordnet sind. So kann beispielsweise der eine Werkzeugsensor das Arbeitswerkzeug bzw. dessen Außenumfang in einem steileren Winkel als der andere Werkzeugsensor erfassen. Durch einen steileren Winkel kann eine genauere Kantendetektion erfolgen. Ein flacherer Winkel ermöglicht beispielsweise, dass ein größerer Bereich des Werkstücks neben dem Arbeitswerkzeug noch in den Erfassungsbereich des Werkzeugsensors fällt.

Weiterhin ist es zweckmäßig, wenn die Erfassungsbereiche der Werkzeugsensoren unterschiedliche Erfassungswinkel aufweisen, beispielsweise um 20-50% unterschiedliche Erfassungswinkel. So kann beispielsweise vorgesehen sein, dass ein in Arbeitsrichtung vorderer Werkzeugsensor mit einem Weitwinkelobjektiv oder einem Weitwinkel-Erfassungsbereich ausgestattet ist, während demgegenüber der andere, in Arbeitsrichtung hintere Werkzeugsensor, einen kleineren Erfassungswinkel aufweist. Der Erfassungswinkel des einen Werkzeugsensors kann aber noch deutlicher vom Erfassungswinkel des anderen Werkzeugsensors abweichen, beispielsweise mindestens um 80 %, besonders bevorzugt sogar um mindestens 100 % oder etwa 200 %, insbesondere 200% bis 300 %. Man erkennt also, dass der eine Werkzeugsensor sozusagen ein Werkzeugsensor mit normalem Erfassungsbereich ist, während der andere Werkzeugsensor eine Art Weitwinkel-Werkzeugsensor sein kann.

Der mindestens eine Werkzeugsensor und/oder der mindestens eine Positionssensor ist zweckmäßigerweise ein berührungslos arbeitender Sensor oder umfasst einen derartigen Sensor.

Die erfindungsgemäße mobile Werkzeugmaschine kann beispielsweise als Hand-Werkzeugmaschine relativ zum Werkstück geführt werden kann. Insbesondere ist die Werkzeugmaschine derart leicht, dass sie von einem Bediener ergriffen und am Werkstück entlang geführt werden kann. Eine derartige Werkzeugmaschine ist beispielsweise eine Trennmaschine, eine Säge, eine Fräsmaschine, insbesondere eine Oberfräse, eine Tauchsäge, eine Kappsäge, die beispielsweise eine Führungsschiene zum Anlegen an das Werkstück umfasst, eine Stichsäge oder dergleichen. Es ist auch möglich, dass die mobile Werkzeugmaschine eine sogenannte halbstationäre Werkzeugmaschine ist, d.h. eine Werkzeugmaschine, die an den Einsatzort bequem transportierbar ist, beispielsweise auf eine Baustelle. In diesem Fall handelt es sich bei der Werkzeugmaschine beispielsweise um eine Kappsäge, eine Zugsäge, eine Kapp-Zugsäge, eine Tischsäge oder dergleichen.

Bei dem Arbeitswerkzeug handelt es sich vorzugsweise um ein Trennwerkzeug, beispielsweise ein Sägeblatt, eine Trennscheibe oder dergleichen. Das Arbeitswerkzeug kann ein lang gestrecktes Sägeblatt, beispielsweise für eine oszillierende Säge, insbesondere eine Stichsäge, sein oder ein kreisförmiges Sägeblatt. Weiterhin kann das Arbeitswerkzeug auch ein Fräswerkzeug, Bohrwerkzeug oder dergleichen sein.

Nachfolgend werden Ausführungsbeispiele der Erfindung anhand der Zeichnung erläutert. Es zeigen:
- Figur 1: eine perspektivische Schrägansicht einer Werkzeugmaschine von schräg hinten, die in
- Figur 2: von schräg vorn perspektivisch dargestellt ist,
- Figur 3: eine Ansicht der Werkzeugmaschine gemäß Figuren 1, 2 von schräg oben,
- Figur 4: die Werkzeugmaschine gemäß vorstehenden Figuren von der Seite und von schräg unten, wobei ein Deckel abgenommen ist,
- Figur 5: ein Detail einer Beleuchtungseinrichtung der Werkzeugmaschine gemäß vorstehender Figuren,

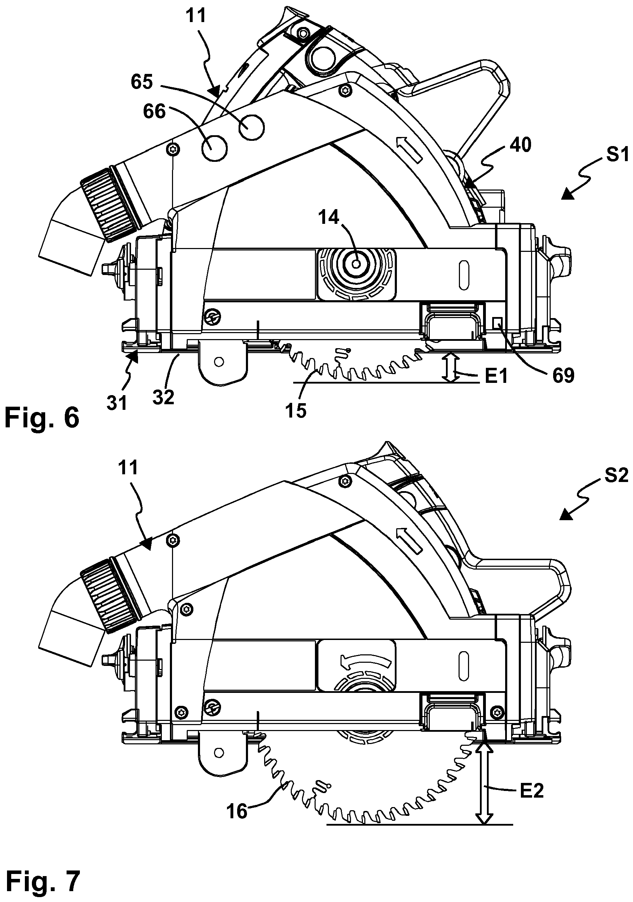

- Figur 6: eine Seitenansicht der Werkzeugmaschine gemäß vorstehender Figuren in einer mittleren Stellposition,
- Figur 7: die Ansicht gemäß Figur 6, wobei die Werkzeugmaschine jedoch eine untere Stellposition einnimmt,

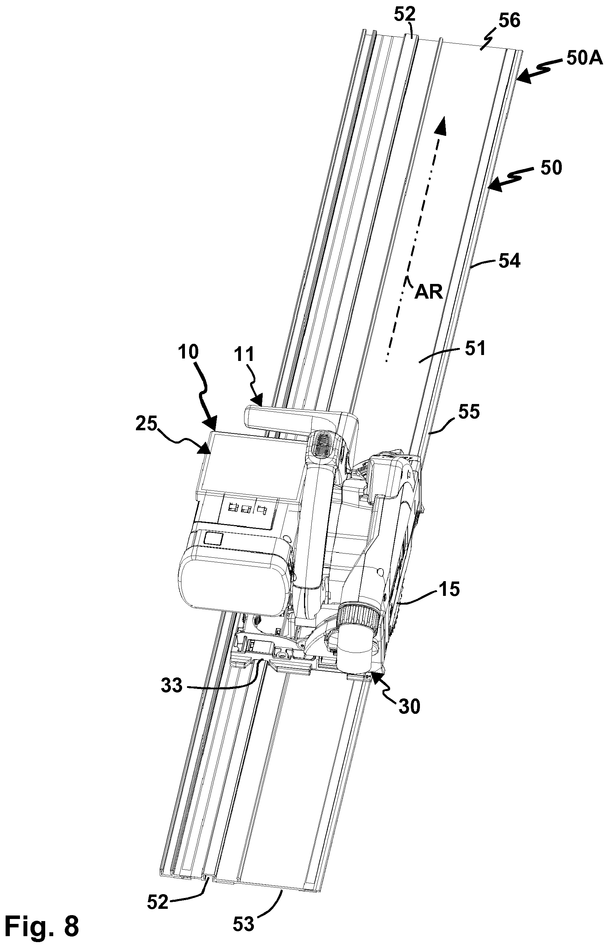

- Figur 8: eine perspektivische Ansicht der Werkzeugmaschine gemäß vorstehender Figuren sowie einer Führungsschiene dafür,
- Figur 9: die Werkzeugmaschine in einer oberen Stellposition bezüglich ihres Führungselementes in schematischer Darstellung,
- Figur 10: die Ansicht gemäß Figur 9, jedoch mit der Antriebseinheit etwa in der Stellposition gemäß Figur 6,
- Figur 11: eine Ansicht der Werkzeugmaschine entsprechend Figuren 9, 10, wobei die Antriebseinheit eine Stellposition etwa entsprechend Figur 7 einnimmt,
- Fig. 12-14: eine Anzeigeeinrichtung der Werkzeugmaschine gemäß vorstehender Figuren in den Figuren 9-11 dargestellten Stellpositionen,
- Fig. 15-17: ein durch die Werkzeugmaschine in den Stellpositionen gemäß Fig. 9-11 jeweils bearbeitetes Werkstück und die dabei ausgebildete Schnittlinie,
- Figur 18: eine schematische Darstellung eines Erfassungsbereiches eines Werkzeugsensors der Werkzeugmaschine bei der Erfassung einer in Arbeitsrichtung vorderen Schnittkante oder Bearbeitungskante,
- Figur 19: Verläufe von Bildpunkten relativ zu einem Positionssignal eines Positionssensors der Werkzeugmaschine im Zusammenhang mit der Darstellung gemäß Figur 18,
- Figur 20: einen Verlauf von optisch angezeigten Schnittkanten an der Anzeigeeinrichtung der Werkzeugmaschine im Zusammenhang mit der Darstellung gemäß Figur 18,
- Figur 21: eine schematische Darstellung zur Erläuterung einer Erfassung der in Figur 8 dargestellten Führungsschiene,
- Figur 22: ein schematisches Schaltbild der Werkzeugmaschine mit einem Prozessor,
- Figur 23: ein Ablaufdiagramm bei der Erzeugung beispielsweise der Informationen gemäß Figuren 19, 20,
- Figur 24: den Ablauf einer Bildverarbeitung bei einer Bearbeitungskantendetektion gemäß Figur 18,
- Figur 25: ein Ablaufdiagramm im Zusammenhang mit der Angabe einer Soll-Position der Antriebseinheit der Werkzeugmaschine relativ zu deren Führungselement,
- Figur 26: ein Ablaufdiagramm zur Ausgabe einer Ist-Relativposition der Antriebseinheit relativ zum Führungselement,
- Figur 27: eine Erfassungsbereich eines Werkzeugsensors der Werkzeugmaschine mit Referenzmarkierungen,
- Figur 28: eine Anordnung von Referenzmarkierungen für eine intrinsische Kalibrierung des Werkzeugsensors der Werkzeugmaschine,
- Figur 29: ein alternatives Ausführungsbeispiel einer erfindungsgemäßen Werkzeugmaschine in Gestalt einer halbstationären Werkzeugmaschine,
- Figur 30: eine schematische Ansicht der Werkzeugmaschine gemäß Figuren 9-11 mit einer Höhenmesseinrichtung,
- Figur 31: eine Anzeigeeinrichtung der Werkzeugmaschine gemäß Figur 30 mit Bildinformationen, die von der Höhenmessung bereitgestellt werden,
- Figur 32: eine stark schematisierte Darstellung der Werkzeugmaschine gemäß Figur 30 und der Höhenmesseinrichtung im Zusammenhang mit der Messung eines ersten Werkstücks,
- Figur 33: die Anordnung gemäß Figur 32 jedoch bei der Messung eines anderen, dünneren Werkstücks,
- Figur 34: ein Diagramm eines Verlaufs einer Pixelanzahl in Relation zu einer Werkstückhöhe, wobei die Pixelanzahl an der Anzeigeeinrichtung entsprechend Figur 31 anzeigbar ist,
- Figur 35: eine schematische Darstellung eines Erfassungsbereiches eines Werkzeugsensors der Werkzeugmaschine bei der Erfassung einer in Arbeitsrichtung hintere Schnittkante oder Bearbeitungskante,
- Figur 36: Verläufe von Bildpunkten relativ zu einem Positionssignal eines Positionssensors der Werkzeugmaschine, insbesondere im Zusammenhang mit der Darstellung gemäß Figur 35,
- Figur 37: einen Verlauf von optisch angezeigten Schnittkanten an der Anzeigeeinrichtung der Werkzeugmaschine,
- Figur 38: einen schematischen Bildausschnitt zur Veranschaulichung einer Höhenmessung eines Werkstücks.

Eine Werkzeugmaschinen 10 ist beispielsweise als eine Sägemaschine ausgestaltet. Insbesondere ist die Werkzeugmaschine 10 eine Tauchsäge.

Die Werkzeugmaschine 10 weist eine Antriebseinheit 11 mit einem Maschinengehäuse 12 auf, in welchem ein Antriebsmotor 13 aufgenommen ist. Der Antriebsmotor 13 treibt eine Werkzeugaufnahme 14 direkt oder über ein in der Zeichnung nicht dargestelltes Getriebe an, z.B. drehend um eine Drehachse DW. An der Werkzeugaufnahme 14 ist ein Arbeitswerkzeug 15 in der Zeichnung befestigt, jedenfalls lösbar befestigbar. Das Arbeitswerkzeug 15 umfasst beispielsweise ein Sägeblatt oder ein sonstiges Trennwerkzeug. An dieser Stelle sei erwähnt, dass das Ausführungsbeispiel auch für andere Werkzeugmaschinen mobiler Art steht, also beispielsweise handgeführte Trennschneider, Oberfräsen oder dergleichen.

Die Werkzeugmaschine 10 ist mobil, d.h. sie kann über einen Energieversorgungsanschluss 17 mit Strom versorgt werden. Der Antriebsmotor 13 ist eine elektrischer Antriebsmotor, wobei alternativ auch ein pneumatischer oder sonstiger Antriebsmotor ohne weiteres denkbar ist. Der Energieversorgungsanschluss 17 umfasst beispielsweise ein Netzkabel 17B, an welchem ein Stecker 18B zum Einstecken in ein Versorgungsnetz, beispielsweise ein 110V oder 230V Wechselstromnetz, ein Gleichstromversorgungsnetz oder dergleichen angeordnet ist. Im konkreten Ausführungsfall ist jedoch das Netzkabel 17B als Option zu verstehen, d.h. die Werkzeugmaschine 10 ist kabellos bzw. ohne Netzkabel betreibbar. Der Energieversorgungsanschluss 17 umfasst nämlich beispielsweise Steckkontakte, die man in der Zeichnung nicht sieht, um einen Energiespeicher 18, insbesondere einen sogenannten Akkupack, lösbar zu befestigen. Der Energiespeicher 18 versorgt die Werkzeugmaschine 10 mit elektrischer Energie. Somit ist die Werkzeugmaschine 10 optimal mobil.

An der Antriebseinheit 11 ist eine Handgriffanordnung zum Ergreifen der Werkzeugmaschine 10 angeordnet. Die Handhabung der Werkzeugmaschine 10 wird dadurch erleichtert. Die Handgriffanordnung umfasst beispielsweise einen oberen Handgriff 19 sowie einen in einer Arbeitsrichtung AR vorderen Handgriff 20. Der Bediener kann also die Handgriffe 19, 20 umgreifen und dadurch die Werkzeugmaschine 10 entlang der Arbeitsrichtung AR an einem Werkstück W führen, sowie gegebenenfalls in eine Schrägstellposition bezüglich eines Führungselementes 30 verstellen.

Das Arbeitswerkzeug 15 ist unter einer Schutzabdeckung oder Abdeckungseinrichtung 21 zumindest partiell eingehaust. Insbesondere dann, wenn die Antriebseinheit 11 bezüglich des Führungselements 30 eine obere Stellposition SO oder Grundposition einnimmt, ist das Arbeitswerkzeug 15 im Wesentlichen vollständig unter der Abdeckungseinrichtung 21 aufgenommen.

Die Abdeckungseinrichtung 21 begrenzt zugleich einen Staubabfuhrkanal 22, der sich sozusagen um den oberen Abschnitt des Arbeitswerkzeugs 15 oder den Abschnitt des Arbeitswerkzeugs 15, der in die Abdeckungseinrichtung 21 eintaucht, herum erstreckt. Der Staubabfuhrkanal 22 mündet in einen Absauganschluss 23 aus, an den beispielsweise ein Sauggerät 100 oder eine sonstige Absaugeinrichtung anschließbar ist. An den Absauganschluss 23 ist beispielsweise ein Saugschlauch 101 anschließbar, der den Absauganschluss 23 mit dem Sauggerät 100 bezüglich einer Strömung verbindet, also eine Strömungsverbindung herstellt.

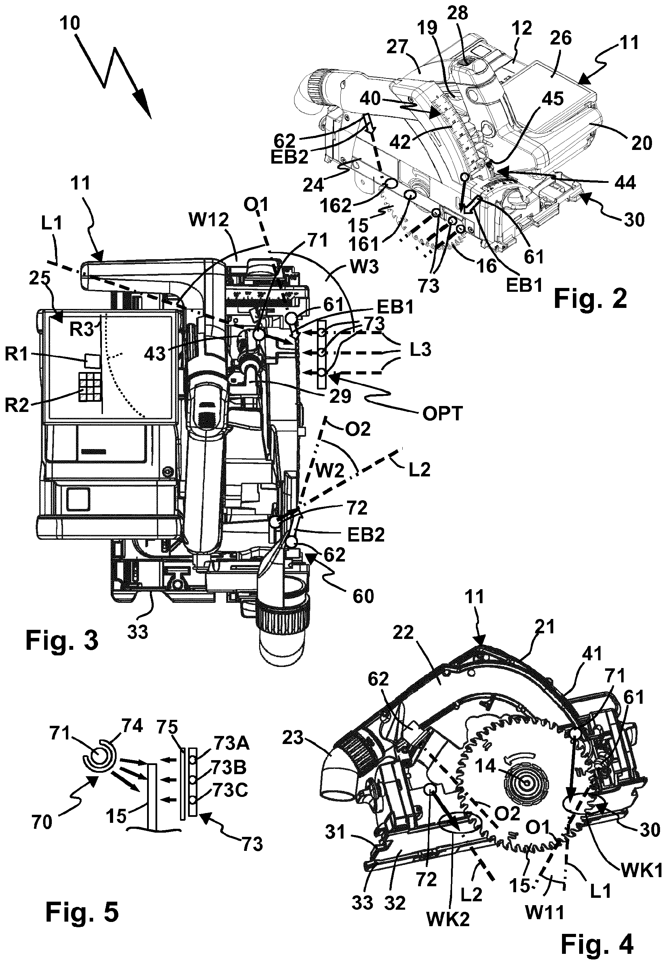

Der Staubabfuhrkanal 22 und/oder die Abdeckungseinrichtung 21 sind durch einen Deckel 24 abgedeckt. Der Deckel 24 ist abnehmbar, was man beispielsweise in den Figuren 3 und 4 erkennen kann.

An einer dem Bediener zugewandten Oberseite der Werkzeugmaschine 10 oder der Antriebseinheit 11 befindet sich eine Anzeigeeinrichtung 25, mit der Funktionen der Werkzeugmaschine 10 überwachbar und/oder steuerbar sind. Die Anzeigeeinrichtung 25 umfasst beispielsweise ein Display 26, insbesondere einen Bildschirm. Das Display 26 kann einfarbig / monochrom sein, aber auch mehrfarbig. Insbesondere enthält das Display 26 eine Vielzahl von graphisch ansteuerbaren Bildpunkten oder Pixeln. Die Bildpunkte oder Pixel sind beispielsweise in einer X-Richtung nebeneinander und einer Y-Richtung übereinander angeordnet und insbesondere individuell ansteuerbar.

Der Antriebsmotor 13 kann mit einem elektrischen Antriebsschalter 27, dessen Bedienelement in der Zeichnung sichtbar ist, eingeschaltet und ausgeschaltet werden, insbesondere auch hinsichtlich seiner Drehzahl verstellt werden. Das Bedienelement oder der Antriebsschalter 27 befinden sich an einem oberen, dem Bediener zugewandten Abschnitt des Handgriffs 19, so dass der Bediener, wenn er den Handgriff 19 umgreift, beispielsweise mit seinem Zeigefinger das Bedienelement 27 betätigen kann.

Ebenfalls ergonomisch günstig befindet sich nahe beim Handgriff 19 ein Bedienelement 28 für eine Tiefeneinstelleinrichtung 40. Mit dem Bedienelement 28 kann die Tiefeneinstelleinrichtung 40 entriegelt werden, so dass die Antriebseinheit 11 aus der Stellposition S0 in beispielhaft dargestellte Stellpositionen S1 und S2 verstellbar ist.

Das Führungselement 30 bildet beispielsweise einen Sägetisch. Das Führungselement 30 ist plattenartig. Beispielsweise umfasst das Führungselement 30 eine Führungsplatte 31. An der von der Antriebseinheit 11 abgewandten Unterseite des Führungselementes 30 ist eine Führungsfläche 32 vorgesehen, mit der die Werkzeugmaschine 10 an einem Untergrund, beispielsweise dem Werkstück W oder einer Führungsschiene 50 entlang geführt werden kann. Die Führungsfläche 32 ist vorzugsweise eine Planfläche.

An der Führungsfläche 32 können Vertiefungen und/oder eine Führungsnut 33 vorgesehen sein, in die ein Führungsvorsprung 52 der Führungsschiene 50 eingreifen kann. Selbstverständlich ist die kinematische Umkehrung möglich, d.h., dass an dem Führungselement 30 ein Führungsvorsprung zum Eingreifen in eine Vertiefung der Führungsschiene 50 (nicht dargestellt) vorgesehen ist.

Die Antriebseinheit 11 ist bezüglich des Führungselementes 30 anhand einer Lageranordnung 35 verstellbar, vorliegend verschwenkbar. Ohne weiteres wäre aber auch eine Verschiebung möglich, um verschiedene Tiefeneinstellpositionen oder Stellpositionen S0-S2 einzustellen. Das ist beispielsweise bei einer Oberfräse mit entsprechenden Führungssäulen so zu realisieren.

Die Lageranordnung 35 umfasst insbesondere ein Tiefeneinstelllager 36. Das Tiefeneinstelllager 36 ist in Arbeitsrichtung AR hinten, wobei bei einer Ausgestaltung der Werkzeugmaschine 10 als Pendelhaubensäge oder als kombinierte Pendelhauben-Tauchsäge auch ein Tiefeneinstelllager in Arbeitsrichtung vorne ohne weiteres möglich ist. Mit dem Tiefeneinstelllager 36 sind die Stellpositionen S0-S2 sowie dazwischen liegende Stellpositionen einstellbar.

Weiterhin kann eine Gehrungslage oder Schrägstelllage der Antriebseinheit 11 bezüglich des Führungselements 10 eingestellt werden, wofür ein Schrägstelllager 37 vorhanden ist. Das Schrägstelllager 37 umfasst Lagerelemente 38, die in Arbeitsrichtung AR vorn und hinten an der Antriebseinheit 11 sowie dem Führungselement 30 angeordnet sind. Die Antriebseinheit 11 ist zwischen den Lagerelementen 38 angeordnet.

Anhand des Tiefeneinstelllagers 36 kann die Antriebseinheit 11 um eine Tiefeneinstellachse TS verschwenkt werden. Anhand des Schrägstelllagers 37, insbesondere des Gehrungslagers, kann die Antriebseinheit 11 bezüglich einer Schrägstellachse SA bezüglich des Führungselementes 30 verstellt werden. Die Schrägstellachse SA verläuft parallel zur Arbeitsrichtung AR, die Tiefeneinstellachse SA quer, insbesondere rechtwinklig quer, zur Arbeitsrichtung AR.

Eine gewünschte Tiefeneinstellung kann der Bediener an der Werkzeugmaschine 10 mit einer Tiefeneinstelleinrichtung 40 vorgeben. Die Tiefeneinstelleinrichtung 40 umfasst eine als Führung ausgestaltete Haltekontur 41, beispielsweise an einer Oberseite oder Vorderseite der Abdeckungseinrichtung 21. Die Führung oder Haltekontur 41 umfasst weiterhin eine Skala 42, anhand derer der Bediener eine jeweilige Tiefeneinstelllage oder Stellposition S0-S2 sowie Zwischenpositionen ablesen kann.

An der Führung oder Haltekontur 41 ist ein Anschlagelement 43 beweglich gelagert, welches der Bediener in der gewünschten Tiefeneinstellposition bzw. Stellposition S0-S2 festlegen kann. Beispielsweise ist am Anschlagelement 43 eine Rasteinrichtung oder Klemmeinrichtung vorgesehen, mithin also eine Fixiereinrichtung 44 vorgesehen, mit der das Anschlagelement 43 in verschiedenen Tiefeneinstellpositionen an der Führung oder Haltekontur 41 festlegbar ist. Beispielsweise ist ein Bedienelement 45 an dem Anschlagelement 43 vorgesehen, mit dem die Fixiereinrichtung 44 aus einer Rastposition und/oder Klemmposition in eine Löseposition verstellbar ist, in der das Anschlagelement 43 bezüglich der Führung oder Haltekontur 41 verstellbar ist. In einer jeweiligen Tiefeneinstellposition des Anschlagelementes 43 schlägt ein Anschlag 29 an der Antriebseinheit 11 an dem Anschlagelement 43 an, so dass dadurch die jeweilige Stellposition S0-S2 oder Tiefeneinstellposition einstellbar ist.

Die Führungsschiene 50 bildet eine Führungseinrichtung 50A zum Führen der Werkzeugmaschine 10 entlang einer Arbeitsrichtung AR.

Die Führungsschiene 50 weist eine Oberseite 51 ein, an der das Führungselement 30 entlang gleiten kann. Vor die Oberseite 51 steht der Führungsvorsprung 52 vor, beispielsweise in der Art einer Führungsrippe. Die Führungsschiene 50 hat eine langgestreckte Gestalt, so dass die Werkzeugmaschine 10 entlang der Längserstreckung der Führungsschiene 50 und somit in der Arbeitsrichtung AR führbar ist. Dadurch sind in bekannter Weise besonders exakte und geradlinige Sägeschnitte in das Werkstück W möglich.

Eine Unterseite 53 der Führungsschiene 50 dient zum Auflegen auf das Werkstück W oder einen sonstigen Untergrund. Seitlich, d.h. quer zur Längserstreckung der Führungsschiene 50, erstreckt sich eine Schmalseite 54 der Führungsschiene 50, an der das Arbeitswerkzeug 15 vorbei in Richtung des Werkstücks W bewegbar ist. Zwischen der Oberseite 51 und der Schmalseite 54 erstreckt sich eine obere Kante 55. Der Bediener kann also die auf der Führungsschiene 50 befindliche Werkzeugmaschine 10 bequem vom Längsende 56 der Führungsschiene 50 bis zu deren Längsende 57 verfahren.

Die Werkzeugmaschine 10 verfügt über eine Sensoranordnung 60, die mehrere Sensoren umfasst. Beispielsweise sind Werkzeugsensoren 61, 62 in Gestalt von Kameras vorgesehen. Der Werkzeugsensor 61 ist in Arbeitsrichtung AR vorn, der Werkzeugsensor 62 in Arbeitsrichtung AR hinten bezüglich des Arbeitswerkzeugs 15 angeordnet. Die Werkzeugsensoren 61, 62 dienen zur Erfassung von Werkstückkontaktteilbereichen WK1, WK2, in denen das Arbeitswerkzeug 15 in Kontakt mit dem Werkstück W ist, beispielsweise in das Werkstück W einschneidet.

Beide Werkzeugsensoren 61, 62 sind sozusagen im Staubraum oder Schmutzraum der Werkzeugmaschine 10 angeordnet, nämlich im Bereich der Abdeckungseinrichtung 21. Dies hat den Vorteil, dass die Werkzeugsensoren 61, 62 abgesehen von dem typischen Staubeintrag oder sonstigen Verschmutzungen nicht Umwelteinflüssen ausgesetzt sind. Insbesondere können die Werkzeugsensoren 61, 62 optimal bezüglich ihrer jeweiligen Bilderkennung, auf die noch eingegangen wird, angeordnet sein.

Nun sorgt allein schon die Staubabfuhr über den Absauganschluss 23 dafür, dass die Erfassungsbereiche oder Messbereiche der Werkzeugsensoren 61, 62 weitgehend von Partikeln P, die bei der Bearbeitung des Werkstücks W durch das Arbeitswerkzeug 15 entstehen, frei geblasen wird. Dennoch sind selbst bei einer optimalen Partikelabfuhr oder Staubabfuhr Partikel P, insbesondere Späne, Staub oder dergleichen, im Erfassungsbereiche der Werkzeugsensoren 61, 62 vorhanden, die eine Bilderfassung beeinträchtigen oder gar verhindern können. Um dieser Problematik zu begegnen, sind Optimierungsmittel OPT vorgesehen, die zur Verringerung der Auswirkung der in den Erfassungsbereichen der Werkzeugsensoren 61, 62 befindlichen Partikel P auf ein Werkzeugsensorsignal dieser Werkzeugsensoren 61, 62 verringern oder gar vorzugsweise eliminieren.

Die Optimierungsmittel OPT umfassen beispielsweise eine geeignete winkelige Anordnung von optischen Achsen der Werkzeugsensoren 61, 62 zu einer Beleuchtung der Erfassungsbereiche der Werkzeugsensoren 61, 62.

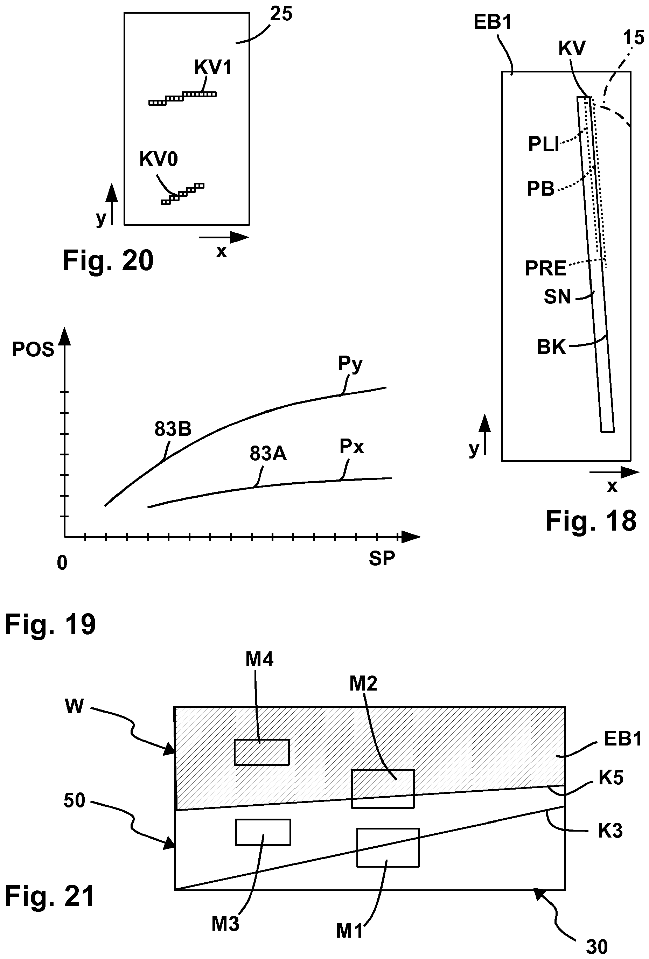

Eine optische Achse O1 des Werkzeugsensors 61 verläuft beispielsweise in einem Winkel von ca. 60-90° bezüglich der Führungsfläche 32. Der Werkzeugsensor 61 ist zu einer insbesondere etwa tangentialen Erfassung des Arbeitswerkzeugs 15 ausgestaltet und/oder vorgesehen. Eine Blickrichtung bzw. eine Ausrichtung des Erfassungsbereiches des Werkzeugsensors 61 ist beispielsweise in Figur 18 angedeutet.

Eine optische Achse 02 des in Arbeitsrichtung AR hinteren Werkzeugsensors 62 ist ebenfalls steilwinkelig bezüglich der Führungsebene 32 und somit auch ebenfalls etwa tangential zum Arbeitswerkzeug 15. Der Werkzeugsensor 62 dient zur Erfassung einer hinteren Schnittkante, die sich beim Einschneiden des Arbeitswerkzeugs 15 in ein Werkstück W einstellt.

Die Werkzeugsensoren 61, 62 befinden sich sozusagen in einem dunklen Raum. Sie sind durch die Abdeckungseinrichtung 21 im Wesentlichen abgedeckt. Die Erfassungsbereiche der Werkzeugsensoren 61, 62 befinden sich also in einem vor Fremdlichteinflüssen geschützten Raum, insbesondere dann, wenn die Führungsfläche 32 auf dem Werkstück W aufliegt.

Allerdings müssen die Werkzeugsensoren 61, 62 dennoch nicht hoch sensibel sein oder für lichtschwache Umgebungen geeignet sein, sondern können eine optimale Erfassung leisten. Dazu ist eine Beleuchtungseinrichtung 70 vorgesehen, die mehrere Lichtquellen 71, 72 sowie eine Reihenanordnung mehrerer Lichtquellen 73, also eine Lichtquellenanordnung 73, umfassen.

Zur Adaption der Helligkeit der Beleuchtungseinrichtung 70 an beispielsweise eine Helligkeit der Umgebung der Werkzeugmaschine 10, kann die Beleuchtungseinrichtung 70 beispielsweise einen Helligkeitssensor 69 aufweisen, mit dem eine Helligkeit einer Umgebung der Werkzeugmaschine 10 erfassbar ist.

Die Lichtquelle 71 und die Lichtquellenanordnung 73 sind dem Werkzeugsensor 61 zugeordnet. Die Lichtquelle 71 sowie die Lichtquellenanordnung 73 beleuchten voneinander entgegengesetzten Seiten her jeweils das Arbeitswerkzeug 15 im Bereich eines Werkstückkontaktbereichs, nämlich eines Bereichs, wo das Arbeitswerkzeug 15 in das Werkstück W einschneidet.

Die Lichtquelle 72 ist dem Werkzeugsensor 62 zugeordnet und beleuchtet den Erfassungsbereich desselben.

Nun könnte es prinzipiell zu Reflexion, Spiegelungen oder dergleichen kommen, wenn die Beleuchtungseinrichtung 70 eingeschaltet ist. Um jedoch einen negativen Einfluss der Beleuchtungseinrichtung 70 auf die Bildqualität oder Erfassungsqualität der Werkzeugsensoren 61, 62 zu verkleinern, wenn nicht gar zu vermeiden, sind die optischen Achsen O1 und O2 der Werkzeugsensoren 61, 62 in Bezug auf die Haupt-Lichtachsen oder Lichtkegelachsen der Lichtquellen 71-73 in großen Winkeln orientiert.

So ist beispielsweise die Lichtkegelachse oder Hauptachse L1 der Lichtquelle 71 in einem Winkel W12 zur optischen Achse O1 des Werkzeugsensors 61 in einer zu der Führungsfläche 32 parallelen Ebene orientiert und in einem Winkel W11 in einer zu der Führungsebene oder Führungsfläche 32 vertikalen Ebene. Die Winkel W11 und W12 sind Winkel von mehr als 90°, so dass das von der Lichtquelle 71 ausgesendete Licht beispielsweise winkelig zur optischen Achse O1 auf Partikel P trifft, die bei der Werkstückbearbeitung des Werkstücks W durch das Arbeitswerkzeug 15 entstehen. Die Partikel P werden dadurch nicht in der optischen Achse O1 des Werkzeugsensors, insbesondere der Kamera, 61 angeleuchtet, so dass sie im Bild, welches der Werkzeugsensor 61 erfasst, weniger hell oder nicht stören.

Auch die Orientierung der Lichtkegelachse oder Hauptachse der Lichtquellen 73A, 73C der Lichtquellenanordnung 73 ist winkelig zur optischen Achse O1, beispielsweise etwa rechtwinkelig entsprechend einem Winkel W3 (Figur 3).

Eine ähnliche Winkeligkeit, zumindest in Bezug auf eine zu der Führungsfläche oder Führungsebene 32 parallelen Ebene, ist auch in Bezug auf den Werkzeugsensor 62 und die Lichtquelle 72 vorgesehen, beispielsweise in einem Winkel W2 zwischen der optischen Achse 02 und der Lichtkegelachse oder Hauptachse L2 der Lichtquelle 72. Der Winkel W2 beträgt beispielsweise mindestens 30 oder 40°.

Eine weitere die Bildqualität verbessernde Maßnahme stellt es dar, dass das Licht der Beleuchtungseinrichtung 60 möglichst gestreut und nicht gerichtet ausgesandt wird. Beispielsweise sind die Lichtquellen 71 und die Lichtquellenanordnung 73 jeweils hinter Streuelementen 74, 74 angeordnet. Vorteilhaft ist dies selbstverständlich auch bei der Lichtquelle 72. Die Streuelemente 74, 75 umfassen beispielsweise Streuscheiben, mattierte Scheiben oder dergleichen.

Weiterhin vorteilhaft für die Erfassung beispielsweise einer vorderen Bearbeitungskante oder einer vorderen Kante des Arbeitswerkzeugs 15 ist, wie in Figur 5 insbesondere ersichtlich, dass die Beleuchtung voneinander entgegengesetzten Seiten des Arbeitswerkzeugs 15 erfolgt. Somit werden ungünstige Schlagschatten vermieden. Man erkennt also aus den Figuren 3-5 ein optimales Beleuchtungskonzept, welches die Bildqualität der durch die Werkzeugsensoren 61, 62 erzeugten Bildsignale deutlich verbessert.

Die Sensoranordnung 60 weist noch vorteilhaft weitere Sensoren auf, beispielsweise einen Positionssensor 63, der der Tiefeneinstelleinrichtung 40 zugeordnet ist. Der Positionssensor 63 kann beispielsweise eine jeweilige Position des Anschlagelements 73 bezüglich der Führung oder Haltekontur 41 erfassen.

Ein weiterer Positionssensor 64 ist beispielsweise an dem Tiefeneinstelllager 36 angeordnet, so dass er die jeweilige Winkelposition der Antriebseinheit 11 bezüglich des Führungselements 30 erfassen kann.

Die Sensoranordnung 60 umfasst zweckmäßigerweise auch einen Neigungssensor 65, der speziell eine Winkellage oder Neigung der Antriebseinheit 11 relativ zum Führungselement 30 erfassen kann. Der Neigungssensor 65 könnte auch durch einen entsprechend eingestellten oder ausgewählten Beschleunigungssensor 66 gebildet sein, der eine Beschleunigung der Antriebseinheit 11 oder der Werkzeugmaschine 10 erfasst. Der Beschleunigungssensor 66 kann beispielsweise eine Beschleunigung der Antriebseinheit 11 in Richtung der Führungsfläche 32 erfassen, wenn die Antriebseinheit 11 um die Tiefeneinstellachse TS schwenkt. Weiterhin kann der Beschleunigungssensor 66 eine Beschleunigung parallel zur Führungsebene oder Führungsfläche 32 erfassen, so dass ein Vorschub der Werkzeugmaschine 10 relativ zum Untergrund oder Werkstück W durch den Beschleunigungssensor 66 erfassbar ist.

Weiterhin können bei der Werkzeugmaschine 10 noch andere Werkzeugsensoren vorgesehen sein, insbesondere in einer Reihenrichtung oder Reihenanordnung nebeneinander angeordnete Werkzeugsensoren. Beispielhaft sind am Deckel 24 oder der dem Deckel 24 gegenüberliegenden Seite der Antriebseinheit 11 weitere Werkzeugsensoren 161, 162 vorgesehen, insbesondere optische Sensoren, vorteilhaft Kameras. Anhand der Werkzeugsensoren 161, 162 kann ein Sägeschnitt SN, den die Werkzeugmaschine 10 in das Werkstück W einschneidet, noch genauer überwacht werden.

Ferner können aber auch außerhalb des Staubabfuhrraums, d. h. außerhalb der Abdeckungseinrichtung 21, Werkzeugsensoren vorgesehen sein, beispielsweise Werkzeugsensoren 261, 262, die insbesondere unmittelbar neben den Lagerelementen 38 an dem Führungselement 30 angeordnet sind. Die Erfassungsbereiche der Werkzeugsensoren 261, 262, die vorteilhaft durch Kameras gebildet sind, aber auch andere sensorische Konzepte realisieren können, sind beispielsweise frontal von vorn und von hinten auf das Arbeitswerkzeug 15 gerichtet.

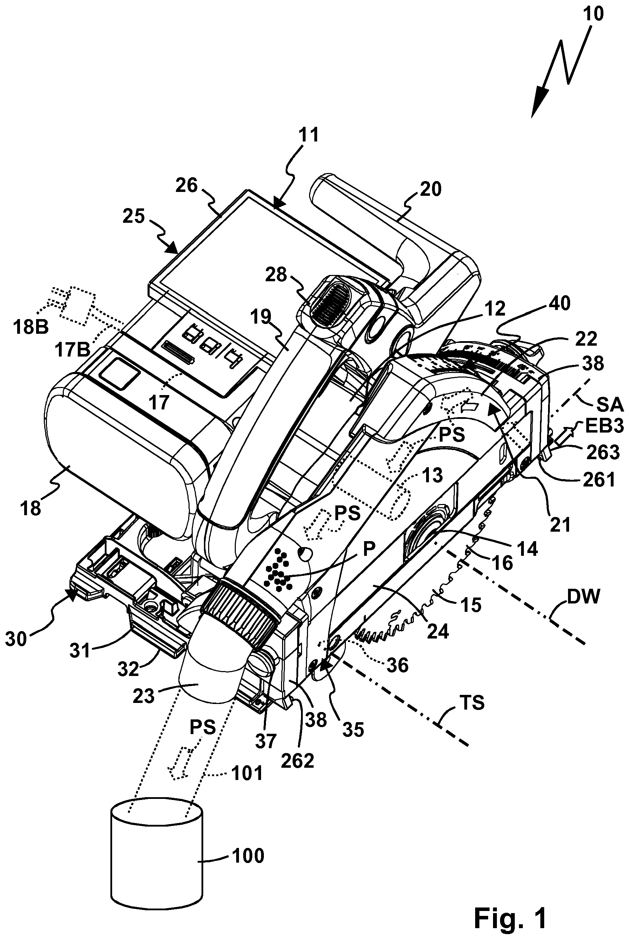

Es ist vorteilhaft, wenn ein in Arbeitsrichtung AR orientierter Werkzeugsensor vorgesehen ist, der sozusagen in Blickrichtung nach vorn auf das Werkstück orientiert ist. So ist beispielsweise ein Erfassungsbereich EB3 eines Werkzeugsensors 263 (Figur 1) in Arbeitsrichtung AR nach vorn orientiert. Die Werkzeugsensoren 261, 263 können an ein und demselben Halteelement angeordnet sein, wobei der eine Werkzeugsensor 261 in Arbeitsrichtung AR nach hinten, zum Arbeitswerkzeug 10 hin, der andere Werkzeugsensor 263 in Arbeitsrichtung AR nach vorn orientiert ist.

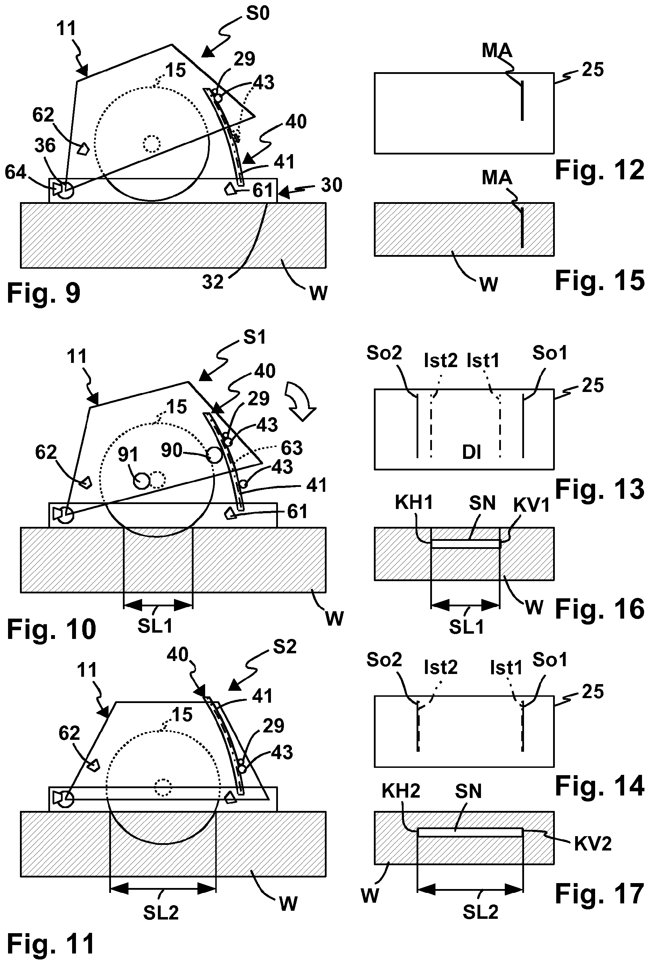

Anhand der Figuren 9-17 soll nachfolgend ein optimales Konzept zum Abgleich einer tatsächlich durch das Arbeitswerkzeug 15 erzeugten Bearbeitungskante oder mehrerer Bearbeitungskanten in dem Werkstück W und dem Positionssignal POS des Positionssensors 63 erläutert werden. Der Positionssensor 63 umfasst beispielsweise einen Widerstandsmessstreifen, der an der Führung 61 angeordnet ist und durch das Anschlagelement 43 beeinflusst wird. Alternativ oder ergänzend wäre aber auch eine optische Erfassung, eine Distanzmessung oder dergleichen des Anschlagelementes 43 relativ zur Führungsfläche 32 möglich.

Ausgehend von der Stellposition S0 (Figur 9), wird die Antriebseinheit 11 über eine oder mehrere Zwischenpositionen S1 in die untere Stellposition S2 verstellt (Figur 11), bei der das Arbeitswerkzeug 15 in maximalem Maße in die Oberfläche des Werkstücks W einschneidet und/oder am weitesten vor die Führungsfläche 32 vorsteht. In der Stellposition S0 befindet sich der Anschlag 43 beispielsweise noch in der obersten Position (Figur 9). An der Anzeigeeinrichtung 25 wird bislang noch kein Sägeschnitt angezeigt. Gleichwohl kann der Werkzeugsensor 61, 62 auch schon gewisse Arbeitsbereiche darstellen, was aber aus Gründen der Vereinfachung nicht in der Zeichnung dargestellt ist. Ebenso ist das Werkstück W noch unbearbeitet, weist also gemäß Figur 15 eine gleichmäßige, "unzerstörte" Oberfläche auf.

Wird nun die Antriebseinheit 11 um die Tiefeneinstellachse TS verschwenkt, nimmt der Anschlag 29 das Anschlagelement 43, so lange es noch nicht ortsfest an der Führung oder Haltekontur 41 fixiert ist, mit, bis es die in Figur 11 dargestellte untere Stellung erreicht. Zugleich ändert sich das Positionssignal POS, welches der Positionssensor 63 ausgibt.

In der Stellposition S1 (Figuren 10, 13, 16) erstreckt sich ein Sägeschnitt SN, der durch das Arbeitswerkzeug 15 in das Werkstück W eingeschnitten ist, zwischen einer vorderen Bearbeitungskante KV1 und einer hinteren Bearbeitungskante KH1. Der Sägeschnitt SN hat eine Schnittlänge SL1. Der Positionssensor 64 zeigt entsprechend der vorderen und hinteren Schnittkante KV1, KH1 ein Ist-Positionssignal IST1 und IST2 für die beiden Bearbeitungskanten an. Entsprechend einer in Figur 11 dargestellten unteren Position des Anschlagelementes 43 kann aber die Antriebseinheit 11 die Soll-Stellposition S2 einnehmen (wenn das Anschlagelement 43 nach ganz unten verstellt ist / Figur 11), was an der Anzeigeeinrichtung 25 durch Soll-Markierungen SO1 und SO2 für die vordere und hintere Schnittkante KV und KH angedeutet ist.

Bei der weiteren Stellbewegung um die Schwenkachse TS nähern sich die Ist-Markierungen IST1 und IST2 schließlich bis zur Deckung an die Soll-Markierungen SO1 und SO2 an. Dann hat der Sägeschnitt SN eine Schnittlänge SL2 und erstreckt sich von seiner vorderen Schnittkante KV2 zu seiner hinteren Schnittkante KH2.

Bei der Darstellung gemäß Figuren 9-17 wird also eine optimal eingestellte Konfiguration zugrunde gelegt, die aber zuvor "kalibriert" werden muss. Dies wird nachfolgend anhand der Figuren 18-20 deutlicher:

Figur 18 zeigt schematisch einen Erfassungsbereich EB1 des Werkzeugsensors 61. Innerhalb des Erfassungsbereiches 61 identifiziert eine Auswerteeinrichtung 80 der Werkzeugmaschine 10 beispielsweise einen Prüfbereich PB, innerhalb dessen die vordere Bearbeitungskante KV zu ermitteln ist. Die vordere Bearbeitungskante KV oder Schnittkante wird durch das Arbeitswerkzeug 15, welches schematisch angedeutet ist, eingeschnitten. An dieser Stelle sei erwähnt, dass das Arbeitswerkzeug 15 beim Betrieb, d.h., wenn es durch den Antriebsmotor 13 angetrieben ist, ohnehin unscharf erscheint, weshalb die gestrichelte Linie 15 auch das relativ undeutlich erkennbare Arbeitswerkzeug 15 repräsentiert. Jedenfalls bildet sich die vordere Bearbeitungskante KV aus, welche von der Auswerteeinrichtung 80 nur innerhalb des Prüfbereiches PB identifiziert wird. Die Bearbeitungskante KV liegt in der Abbildung gemäß Figur 18 ein wenig vor dem Außenumfang des Arbeitswerkzeugs 15, der nämlich im Bild unscharf erscheint. Die Abbildung gemäß Figur 18 ist recht nahe an der Realität. Man erkennt nämlich, dass die vordere Bearbeitungskante KV im Erfassungsbereich EB1 oder Prüfbereich PB nur sehr klein oder schmal ist. Der größte Bereich der Bearbeitungskante KV wird nämlich durch das Arbeitswerkzeug 15 verdeckt, ist also durch den Werkzeugsensor 61 gar nicht erfassbar.

Vorzugsweise ist der Prüfbereich PB im Wesentlichen auf den Bereich der vorderen Bearbeitungskante KV eingegrenzt.

Anhand von Figur 19 soll nachfolgend deutlicher werden, wie anhand des Positionssignals POS des Positionssensors 63 sozusagen eine eingestellte Tiefeneinstellposition der Antriebseinheit 11 relativ zum Führungselement 30 kalibriert oder zugeordnet wird. In einer Achse SP sind die Positionen von Anzeigepixeln an der Anzeigeeinrichtung 25 aufgetragen, in einer Achse POS das Positionssignal POS des Positionssensors 63. Wenn nun das Anschlagelement 43 von dem Anschlag 29 bei einer Tauchbewegung oder Stellbewegung der Antriebseinheit 11 relativ zum Führungselement 30 mitgenommen wird, d.h. in Richtung der Führungsfläche 32 verstellt wird (siehe Figuren 9-11), nimmt das Positionssignal POS sozusagen zu. Gleichzeitig werden die Bildpunkte der Bearbeitungskante KV als Positionswerte PX und PY ermittelt.

In Figur 20 ist das Resultat davon deutlich überhöht, damit es anschaulicher wird, dargestellt. So ist beispielsweise die Schnittkante oder Bearbeitungskante KV0 unmittelbar beim Einschneiden des Arbeitswerkzeugs 15 in das Werkstück W relativ schräg verlaufend. Beispielsweise wäre ein idealer Verlauf oder eine ideale Orientierung der Bearbeitungskante KV0 im Wesentlichen horizontal bzw. in X-Richtung, wenn der Werkzeugsensor 61 optimal ausgerichtet ist und die Bewegungen quasi parallel verlaufen. Die Bearbeitungskante KV0 bewegt sich bei der Herstellung des Sägeschnittes in Y-Richtung. Bei der Stellposition S1 bildet sich die Bearbeitungskante KV1 aus, die schon deutlich horizontaler verläuft als die Bearbeitungskante KV0 bzw. deren Abbildung auf der Anzeigeeinrichtung 25.

Eine analoge Vorgehensweise ist ohne weiteres auch anhand des Signals des Positionssensors 64 zur Erfassung der Schwenkposition oder Stellposition der Antriebseinheit 11 relativ zum Führungselement 10 möglich.

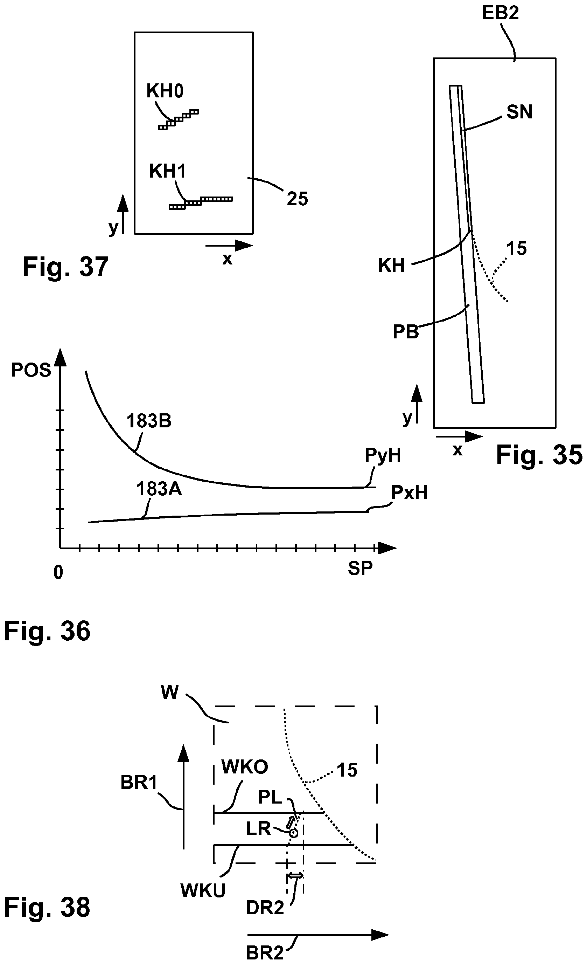

In den Figuren 35-37 ist die Situation im Bereich der hinteren Bearbeitungskante KH vergleichbar mit der Darstellung gemäß Figuren 18-20 für die vordere Bearbeitungskante KV dargestellt. Man erkennt, dass die hintere Bearbeitungskante KH innerhalb des vereinfacht ebenfalls als Prüfbereich PB bezeichneten Prüfbereichs sozusagen nach hinten unten wandert (Figur 35). Auf der Anzeigeeinrichtung 25 werden dementsprechend Verläufe der Bearbeitungskante KH ausgehend von einer Bearbeitungskante KH0 unmittelbar beim Einschneiden in das Werkstück W bis zur Bearbeitungskante KH1 in der Stellposition S1 dargestellt.

Die Auswerteeinrichtung 80 ist auch zu einer Ermittlung ausgestaltet, ob die Werkzeugmaschine 10 mit oder ohne Führungsschiene 50 betrieben wird. Die vorgenannte Kalibrierung wird nämlich zweckmäßigerweise einmal mit Führungsschiene 50 und einem ohne Führungsschiene 50 ausgeführt, so dass eventuelle Toleranzen, die sich durch die Lage des Führungselementes 30 bezüglich der Führungsschiene 50 und/oder die Führungsschiene 50 selbst ergeben, ermittelt werden, so dass mit und ohne Führungsschiene 50 eine optimale Anzeige einer jeweiligen Soll-Position SO1 und SO2 möglich ist. Wenn nämlich die Kalibrierung gemäß Figuren 19 und 20 vorgenommen ist, kann der Bediener das Anschlagelement 43 auf eine gewünschte Sägetiefe oder Bearbeitungstiefe einstellen. An der Anzeigeeinrichtung 25 wird die jeweilige Soll-Markierung SO1 und SO2 eingestellt, die die Bearbeitungskanten repräsentieren, die sich bei einer Verstellung der Antriebseinheit 11 bis zum Anschlagelement 43 einstellen werden. Der Bediener kann dann die Soll-Markierungen SO1 und/oder SO2 in Deckung mit einer Werkstückmarkierung MA beispielsweise an der Oberfläche des Werkstücks W bringen, so dass der Tauchschnitt oder Sägeschnitt genau dort begrenzt ist bzw. endet, wo die angezeigte Markierung SO1 und SO2 von der Anzeigeeinrichtung 25 angezeigt wird. Dadurch ist eine besonders exakte und genaue Werkstückbearbeitung möglich.

Somit ist es also vorteilhaft, wenn die Führungsschiene 50 durch den Werkzeugsensor 61, 62 und/oder die Auswerteeinrichtung 80 erkannt wird.

Zur zuverlässigen Erkennung der Führungsschiene 50 beispielsweise im Erfassungsbereich EB1 des in Arbeitsrichtung vorderen Werkzeugsensors 61 sind beispielsweise Messfelder M1-M4 vorgesehen. In den Messfeldern M1 und M2 erfasst die Auswerteeinrichtung 80 beispielsweise eine Kante K3 zwischen dem Führungselement 30 und der Führungsschiene 50, im Erfassungsbereich M2 die Kante der Führungsschiene 50 zum Untergrund, beispielsweise die Schmalseite 54 oder die obere Kante 55. Die Kante K3 kann beispielsweise durch eine Kontrastmessung und/oder anhand eines, insbesondere gradienten-basierten, Kanten-Filters, ermittelt werden. Der Kontrast zwischen der Führungsschiene 50 und dem Werkstück W wird ebenfalls herangezogen, um beispielsweise die Kante K5 zu ermitteln. Bevorzugt ist vorgesehen, dass anhand der Kante K3 oder ausgehend von der Kante K3 die Kante K5 ermittelt wird.

Eine der Kanten zu ermitteln würde allerdings auch ausreichen. So kann vorgesehen sein, dass das Vorhandensein der Führungsschiene anhand einer sonstigen Messung oder sensorischen Erfassung ermittelt wird, insbesondere einer optischen Erfassung eindeutiger Merkmale einer Führungsschiene, beispielsweise deren Struktur, Farbe, Längsverlauf oder dergleichen.

Um die Messung sozusagen besonders sicher zu machen, wird noch zudem eine Kontrastmessung mit den Messfeldern M3 und M4 durchgeführt, um den Kontrast zwischen Führungsschiene 50 und Werkstück W zu ermitteln, der als Indiz gilt, dass nicht die Werkzeugmaschine 10 auf einem Werkstück W aufliegt, das quasi die Helligkeit einer Führungsschiene aufweist.

Eine Messung in einzelnen Messfeldern ist allerdings nicht unbedingt notwendig. So kann die intelligente Auswerteeinrichtung 80 beispielsweise ermitteln, dass eine lange Kante, nämlich beispielsweise die Kante 55, vorhanden ist, um auf diese Weise auf das Vorhandensein der Führungsschiene 50 zu schließen. Wenn noch zusätzlich beidseits der bereits ermittelten Führungsschienenkante K5 eine Kontrastmessung durchgeführt wird oder eine Farbmessung oder beides, diese Farben oder Kontraste miteinander verglichen werden (entsprechend der Messung in den Feldern M4 und M3), ist dadurch eine sichere Erkennung möglich, dass die Werkzeugmaschine 10 tatsächlich auf der Führungsschiene 50 und nicht auf einem Werkstück steht.

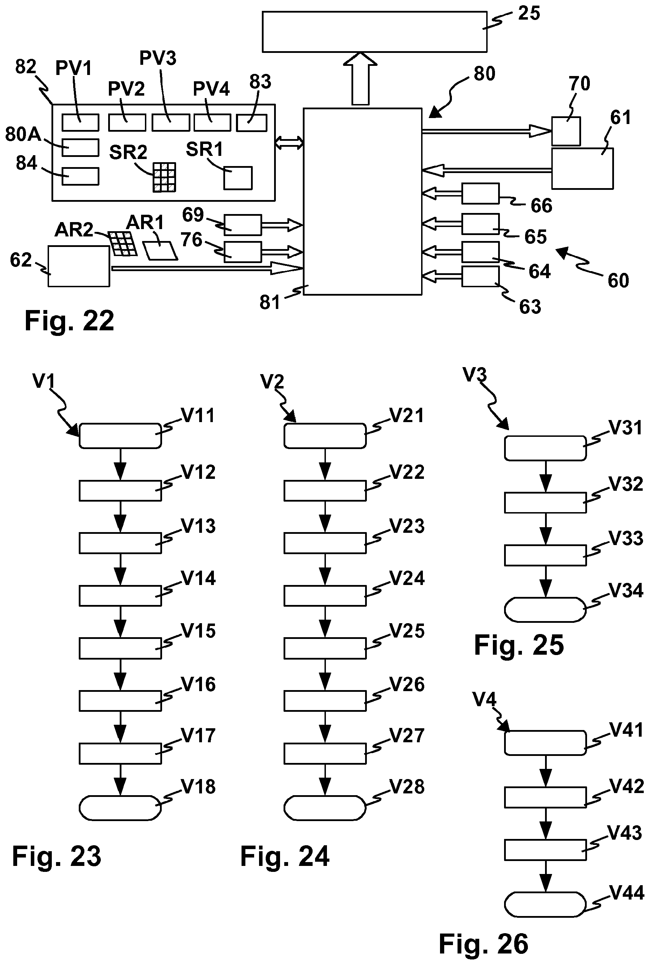

Anhand von Figur 23 wird ein Verfahren V1 zur Ermittlung von Zuordnungswerten anhand des Positionssensorsignals POS sowie der Bearbeitungskantendetektion entsprechend Figur 18 vorgestellt.

Ausgehend von einem anfänglichen Verfahrensschritt V11, bei dem beispielsweise ein Benutzer eine Kalibrierung anwählt, beginnt das Verfahren. Im Schritt V11 wählt der Benutzer beispielsweise die Kalibrierung deshalb an, weil ein Sägeblatt oder Arbeitswerkzeug und/oder die Führungsschiene ausgewechselt wurde.

In einem Verfahrensschritt V12 wird beispielsweise zunächst ermittelt, ob die Werkzeugmaschine 10 auf der Führungsschiene 50 steht oder nicht.

In einem Verfahrensschritt V13 wird das Anschlagelement 43 mit dem Anschlag 29 gekoppelt, beispielsweise verrastet, verklemmt oder dergleichen, so dass eine Tauchbewegung oder Stellbewegung der Antriebseinheit 11 gleichzeitig eine Verstellung des Anschlagelementes 43 bewirkt.

In einem optionalen Schritt V14 ermittelt der Positionssensor 64 am Tiefeneinstelllager 63 eine aktuelle Winkelposition.

In einem Verfahrensschritt V15 ermittelt der Positionssensor 63 die jeweilige Position des Anschlagelementes 43, also die eingestellte Tiefe.

In einem Verfahrensschritt V16 werden die einzelnen Bearbeitungskanten entsprechend Figur 18 durch die Auswerteeinrichtung 80 ermittelt. In einem Verfahrensschritt V17 werden die jeweiligen Positionssensorwerte POS sowie die durch die Schnittkanten oder Bearbeitungskanten ermittelten Werte PX, PY gespeichert. Dadurch kann beispielsweise die Auswerteeinrichtung 80 in einem Speicher 82 eine entsprechende Zuordnungstabelle 83 einspeichern. Alternativ oder ergänzend kann aber auch die Auswerteeinrichtung 80 aus den Werten POS, PX und PY mathematische Zuordnungsfunktionen 83A, 83B generieren, beispielsweise ein Polynom dritten Grades, vierten Grades oder dergleichen. Es genügen also eine Anzahl von Positionswerten PX, PY und POS, um entsprechende Polynome oder andere mathematische Zuordnungsfunktion 83A, 83B zu generieren. Die Genauigkeit der mathematischen Zuordnungsfunktionen 83A, 83B erhöht sich mit zunehmender Anzahl von verfügbaren Positionswerten PX, PY und POS.

Vorzugsweise wird zur Ermittlung der Zuordnungsfunktion 83A und/oder 83B eine Mittelwertbildung und/oder eine Gewichtung der Positionswerte vorgenommen. Bevorzugt ist die Verwendung der Methode der kleinsten Quadrate zur Ermittlung der Zuordnungsfunktion 83A und/oder 83B.

Der Schritt V18 stellt das Ende des Verfahrens V1 dar. In dem Schritt V18 könnten aber auch die Verfahrensschritte V27 und/oder V28 des nachfolgend beschriebenen Verfahrens V2 realisiert werden.

Die Auswerteeinrichtung 80 kann für die hintere Bearbeitungskante KH ähnlich vorgehen und dabei beispielsweise mathematische Zuordnungsfunktionen 183A, 183B anhand von Positionswerten PxH und PyH generieren.

Die Lokalisierung des Prüfbereichs PB kann bei von dem Werkstück W entferntem Arbeitswerkzeug 15 beispielsweise wie folgt geschehen. Dabei ist zu berücksichtigen, dass sich beispielsweise die Lage des Sägeschnittes SN und somit beispielsweise dessen in Arbeitsrichtung AR rechter Bearbeitungskontur BK, beispielsweise einer langgestreckten Sägekante, bezüglich der Werkzeugsensor 61, 62, also der Kameras, abhängig davon verändert, welche Höhe beispielsweise die Führungsschiene 50 aufweist, welche Breite das Arbeitswerkzeug oder Sägeblatt 15 hat, wie die Geometrie von Zähnen oder sonstigen Schnittkonturen des Arbeitswerkzeugs 15 ist und dergleichen. So kann beispielsweise zunächst der Sägeschnitt SN in das Werkstück W eingebracht werden. Anschließend erfasst die Auswerteeinrichtung 80 die Bearbeitungskante BK und ermittelt in Abhängigkeit vom Verlauf und der Orientierung der Bearbeitungskante BK im Erfassungsbereich EB1 eine in Arbeitsrichtung AR linke Grenze PLI und eine in Arbeitsrichtung AR rechte Grenze PLR, zwischen denen sich die Bearbeitungskontur BK befindet, des Prüfbereichs PB. s

Im Anschluss daran wird vorzugsweise das Verfahren V1 durchgeführt.

Die Bildverarbeitung bzw. Kantenerkennung gemäß Figur 18 kann beispielsweise anhand des nachfolgend erläuterten Verfahrens V2 erfolgen.

Bei dem Verfahren V2 wird beispielsweise das vom Werkzeugsensor 61 erfasste Bild in einem Verfahrensschritt V21 zunächst zu einem Graustufenbild gewandelt, in einem Verfahrensschritt V22 anhand einer Filterung oder Kompensationsbearbeitung nachbearbeitet. Hier bieten sich beispielsweise eine Gaußfilterung, Medianfilterung, Bilateralfilterung, Averagingfilter oder dergleichen an.

In einem Verfahrensschritt V23 wird der Prüfbereich PB ermittelt oder maskiert.

Bei Verfahrensschritt V24 wird ein Schwellwertverfahren angewendet, d.h. dass beispielsweise das bereits in Schritt V21 erzeugte Graubild in ein Binärbild gewandelt wird. Dabei wird beispielsweise die Werkstückoberfläche weiss, die Schnittkante oder Bearbeitungskante schwarz.

Die Verfahrensschritte V21, V22 und V24 umfassen beispielsweise digitale Filter.

Einer oder mehrere der Verfahrensschritte V21, V22 und V24 repräsentieren beispielsweise einen Bestandteil der Optimierungsmittel OPT.

Ein Verfahrensschritt V25 steht für eine Kantendetektion in dem in Schritt V24 erzeugten Bild.

In einem Verfahrensschritt V26 werden die Werte PX und PY ermittelt, indem beispielsweise die entsprechenden hellen und dunklen Pixel im Bild, welche im Verfahrensschritt V25 gewonnen wurden, analysiert werden.

In einem optionalen Verfahrensschritt V27 werden die Kurven PX und PY (Figur 19) ermittelt, beispielsweise die vorgenannten Polynome.

Nicht nur im Zusammenhang mit dem Verfahren V2, sondern ganz allgemein im Zusammenhang mit der Erfindung ist es vorteilhaft, wenn Sicherheitsabfragen erfolgen, dass nämlich nur Positionen tatsächlich vorhandener Schnittkanten als Pixel-Positionen gespeichert werden, sodass beispielsweise Fremdeinflüsse ausgeschlossen werden. Solche Fremdeinflüsse können beispielsweise Staub, Späne oder dergleichen andere Unschärfen oder Fremdkörper sein.

Weiterhin ist es bei einer Erfassung einer Kante im Sinne der Erfindung vorteilhaft, wenn die Plausibilität der Kante anhand beispielsweise neuronaler Netze oder dergleichen erkannt wird oder analysiert wird. Ein neuronales Netz kann beispielsweise vorab zu diesem Zweck trainiert sein oder werden.

In einem Verfahrensschritt V28 werden beispielsweise die Zuordnungstabelle 83 und/oder die Zuordnungsfunktionen 83A, 83B generiert.

Die Abfolge der Verfahrensschritte V21 und/oder V22 und/oder V23 und/oder V24 kann auch anders sein. In manchen Fällen sind auch einzelne Verfahrensschritte nicht notwendig. So kann beispielsweise zunächst der Prüfbereich PB, Verfahrensschritt V23, ermittelt werden, bevor die Verfahrensschritte V21, V22 durchgeführt werden.

Die in den Verfahren V1 und V2 gewonnenen Informationen können in den Verfahren V3 und V4 genutzt werden.

Beispielsweise kann in einem Schritt V31 des Verfahrens V3 der Nutzer eine entsprechende Tauchtiefe einstellen, indem er das Anschlagelement 53 in die gewünschte Position verstellt. In einem Verfahrensschritt V32 ermittelt die Auswerteeinrichtung 80, ob eine Führungsschiene 50 vorhanden ist oder nicht.

In einem Verfahrensschritt V33 misst der Positionssensor 63 die mit dem Anschlagelement 43 eingestellte Position.

In einem Verfahrensschritt V34 wird an der Anzeigeeinrichtung 25 die eingestellte Soll-Position SO1, SO2 angezeigt. An dieser Stelle wird deutlich, dass das Verfahren gemäß Figuren 18, 19, 20 nicht nur im Zusammenhang mit dem vorderen Werkzeugsensor 61, sondern auch mit dem hinteren Werkzeugsensor 62 durchgeführt wird, so dass der Bediener eine vordere und hintere eingestellte Soll-Bearbeitungskante an der Anzeigeeinrichtung 25 angezeigt bekommt.

Das Verfahren V4 steht für die Anzeige einer Ist-Stellposition der Antriebseinheit 11 relativ zum Führungselement 30. In einem Verfahrensschritt V41 beginnt die Verstelloperation der Antriebseinheit 11 relativ zum Führungselement 30. In einem Verfahrensschritt V41 misst der Positionssensor 64 die jeweilige Schwenkposition oder Stellposition der Antriebseinheit 11 relativ zum Führungselement 10.

In einem Verfahrensschritt V43 ermittelt die Auswerteeinrichtung 80 anhand beispielsweise der Zuordnungstabelle 83 oder der Kurven PX, PY gemäß Figur 19, welche tatsächliche Ist-Position die Antriebseinheit 11 relativ zum Führungselement 10 hat, bzw. welche Bearbeitungskante sich in der aktuellen Position einstellt.

Der Verfahrensschritt V44 steht für das Ende des Verfahrens V4. In diesem Verfahrensschritt werden beispielsweise die Markierungen IST1 und/oder IST2 angezeigt.

Die Verfahren V1-V4 werden durch die Auswerteeinrichtung 80 ausgeführt oder. Die Verfahren V1, V2, V3, V4 werden beispielsweise durch Programmmodule PV1, PV2, PV3, PV4 realisiert, die Programmcode enthalten, der durch den Prozessor 81 ausführbar ist, wobei bei der Ausführung des Programmcodes die Verfahren V1-V4 ablaufen.

Nun kann durch die Montage der Werkzeugsensoren 61, 62, durch eine Stoßbelastung der Werkzeugmaschine 10, insbesondere einem Sturz, oder dergleichen eine gewisse Ungenauigkeit entstehen, dass beispielsweise die Werkzeugsensorsignale der Werkzeugsensoren 61, 62 ein ungünstig ausgerichtetes Bild für die Anzeigeeinrichtung 25 erzeugen. Im Zusammenhang mit Figur 20 wurde schon erwähnt, dass beispielsweise die Bearbeitungskanten an sich ja parallel zu Y-Richtung angezeigt werden sollten, im Bild aber einen Schrägverlauf haben können. Weiterhin wichtig ist es, dass beispielsweise der Prüfbereich PB zuverlässig erfassbar ist. Vorteilhaft ist beispielsweise, wenn der Prüfbereich PB exakt oder möglichst exakt an der beim Eintauchen des Werkzeugs 15 in die Werkstückoberfläche entstehenden langen Schnittkante, also in der Y-Richtung, ausgerichtet ist, sodass Fehlinformationen bei der Kalibrierung vermieden oder verringert werden.

Dazu sind vorteilhafte Maßnahmen vorgesehen:
Beispielsweise ist im Bereich des Führungselementes 30 eine Referenzmarkierung R1 vorgesehen, die zur Ausrichtung des Erfassungsbereiches bzw. des angezeigten Bildbereichs des Werkzeugsensors 61 und/oder 62 geeignet ist.

Zunächst wird davon ausgegangen, dass die Kameras oder Werkzeugsensoren 61, 62 bereits intrinsisch kalibriert sind, so dass optische Fehler, beispielsweise Weitwinkel-Fehler oder dergleichen, Krümmungen, die sich durch die Optik der Werkzeugsensoren 61, 62 ergeben etc. bereits "eliminiert" sind. Anhand einer Referenzmarkierung R2 kann somit der Werkzeugsensor 61, 62 sozusagen seine Position und/oder Orientierung im Raum ermitteln bzw. kann die Auswerteeinrichtung 80 die Position des Werkzeugsensors 61, 62 im Einbauraum der Werkzeugmaschine 10 ermitteln. Somit ist beispielsweise eine sogenannte extremistische Kalibrierung des Werkzeugsensor 61, 62 möglich.

Man erkennt, dass das Referenzmuster R2 z.B. ein Schachbrettmuster ist, dessen Linien sich je nach Perspektive aufeinander zu oder voneinander weg bewegen, jedenfalls eine bestimmte Winkellage einnehmen. Dies ist die Grundlage für die Ermittlung der räumlichen Anordnung der optischen Achse O1 oder O2 des jeweiligen Werkzeugsensors 61, 62 durch die Auswerteeinrichtung 80. Als Referenzmuster eignet sich auch beispielsweise ein sogenanntes Data-Matrixmuster, ein radiales geometrisches Muster oder dergleichen. Die Auswerteeinrichtung 80 muss lediglich die unverzerrte Geometrie (Verlauf von Kanten, Länge von Kanten und dergleichen) des jeweiligen Referenzmusters kennen.

In einfachen Fällen kann aber auch eine Ausrichtung an einer geraden Linie oder an einer zweidimensionalen Markierung ausreichen, so zum Beispiel an einer Seitenkante der Führungsplatte 31 oder an der Referenzmarkierung R1.

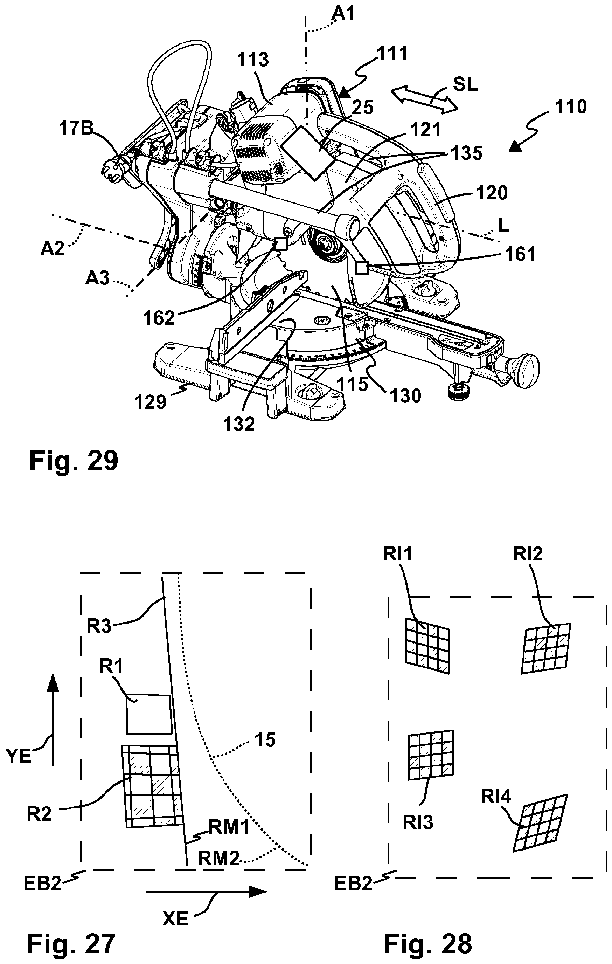

Eine weitere Referenzmarkierung R3 wird beispielsweise durch eine Seitenkante oder Kantenlinie (RM1) des Führungselements 30 und/oder einer Außenkante (RM2) des Arbeitswerkzeugs 15 repräsentiert. Man erkennt in Figur 27, dass die Referenzmarkierung R3 schräg geneigt im Erfassungsbereich EB2 liegt, nämlich schräg geneigt bezüglich einer X-Achse XE und einer Y-Achse YE des Erfassungsbereichs EB2. An sich müsste jedoch die Referenzmarkierung R3 oder die Linie R3 parallel zur Arbeitsrichtung AR verlaufen. Damit der Bediener der Werkzeugmaschine 10 dadurch nicht irritiert wird, sorgt die Auswerteeinrichtung 80 für korrekte Ausrichtung einer Abbildung des Erfassungsbereichs EB2 und/oder EB1 an der Anzeigeeinrichtung 25. Die Auswerteeinrichtung 80 ermittelt beispielsweise den Verlauf der Referenzmarkierung R3 bezüglich der X-Achse XE und/oder Y-Achse YE und korrigiert die Ausrichtung der Referenzmarkierung R3 dahingehend, dass sie parallel zur Y-Achse YE verläuft. Eine entsprechend korrigierte Abbildung ist bei der Anzeigeeinrichtung 25 in Figur 3 exemplarisch dargestellt. Selbstverständlich kann die Auswerteeinrichtung 80 darüber hinaus auch eine Entzerrung einer entsprechenden Abbildung eines Erfassungsbereichs EB1 oder EB2 an der Anzeigeeinrichtung 25 durchführen, sodass beispielsweise die Referenzmarkierung R1 und/oder R2 mit zu der Referenzmarkierung R3 parallelen bzw. orthogonalen Linien dargestellt sind. Diese Entzerrung ist allerdings in Figur 3 nur für die Referenzmarkierung R2 durchgeführt, nicht für die Referenzmarkierung R1. Man erkennt die entsprechend verzerrte Darstellung der Referenzmarkierung R1 gegenüber der Referenzmarkierung R2.

Eine weitere Möglichkeit zur Auswertung der Referenzmarkierungen R1 und/oder R2 ist beispielsweise anhand von gespeicherten Abbildungen SR1 und SR2 der Referenzmarkierung R1 und R2 möglich. Die Auswerteeinrichtung 80 kann die gespeicherten Abbildungen SR1 und SR2 mit von den Werkzeugsensoren 61, 62 ermittelten Abbildungen AR1 und AR2 vergleichen, um auf diesem Wege einen oder mehrere Korrekturwerte zu ermitteln, eine Entzerrung vorzunehmen oder dergleichen. So kann beispielsweise eine zur Entzerrung der sozusagen realen Abbildungen AR1 und AR2 ermittelte Entzerrungsfunktion oder Entzerrungstabelle zur Entzerrung von weiteren Abbildungen, die durch die Sensorsignale der Werkzeugsensor und 61, der sein 62 repräsentiert sind und beispielsweise das Arbeitswerkzeug 15 oder dergleichen zeigen, durch die Auswerteeinrichtung 80 genutzt werden. Die Abbildungen SR1 und SR2 können beispielsweise in einem Auswerteprogramm 80A, welches vom Prozessor 81 ausführbar ist, als Programmcode oder gespeicherte Informationen hinterlegt sein oder wie in der Zeichnung dargestellt im Speicher 82 gespeichert sein. Bei der Speicherung im Speicher 82 ist es möglich, die Abbildungen SR1 und SR2 als Parameterdaten in den Speicher 82 zu laden.

Anhand von Figur 28 wird eine intrinsische Kalibrierung der Werkzeugsensoren 61, 62 vorgestellt. Die bereits beispielsweise in die Werkzeugmaschine 10 eingebauten Werkzeugsensoren 61, 62 können mit ihren Erfassungsbereichen Referenzmarkierungen RI1, RI2, RI3 und RI4 erfassen, beispielsweise wenn ihr Erfassungsbereich durch die Öffnung der Abdeckungseinrichtung 21 für das Arbeitswerkzeug 15 gerichtet ist. Die Werkzeugmaschinen 10 wird in diesem Fall relativ zu den Referenzmarkierungen RI1-RI4 in mehrere Positionen gebracht, wobei die Auswerteeinrichtung 80 die jeweiligen Referenzmarkierungen RI1-RI4 erfasst und insbesondere deren Lage und Verzerrung im Raum. Anschließend kann die Auswerteeinrichtung 80 die Werkzeugsensoren 61, 62 intrinsisch kalibrieren oder deren Werkzeugsensorsignal sozusagen intrinsisch kalibriert auswerten.

Die Erfassungsbereiche EB1 und EB2 sind in der Zeichnung im Wesentlichen hinsichtlich ihrer Orientierung dargestellt. Der Erfassungsbereich EB2 des Werkzeugsensors 62 hat einen wesentlich kleineren Winkel als der Erfassungsbereich EB1. Beispielsweise ist der Erfassungswinkel des Werkzeugsensors doppelt so groß oder noch größer als der Erfassungsbereich EB2 des Werkzeugsensors 61.

Mithin ist also der Werkzeugsensor 61 sozusagen ein Weitwinkel-Sensor. Der Werkzeugsensor 61 umfasst sozusagen eine Weitwinkel-Kamera.

Anhand dieser Ausgestaltung ist es möglich, dass der Werkzeugsensor 62 nicht nur den in Richtung der vorderen Bearbeitungskante KV erfasst, sondern auch beispielsweise eine Werkstückmarkierung MA auf dem Werkstück W erfassen und anzeigen kann, was in den Figuren 12 und 15 angedeutet ist. Die Werkstückmarkierung MA ist in den Figuren 13, 14, 16 und 17 aus Gründen der Vereinfachung weggelassen, wird aber von der Anzeigeeinrichtung 25 dennoch angezeigt.

Der Bediener kann sich an der Werkstückmarkierung MA orientieren, beispielsweise die Solllinie SO1 mit der Werkstückmarkierung MA in Deckung bringen, so dass die Position der vorderen Bearbeitungskante KV2 dadurch optimal definiert ist. Aber auch ein automatisches oder halbautomatisches Konzept ist vorteilhaft. So kann beispielsweise an der Anzeigeeinrichtung 25 eine Differenzinformation DI angezeigt werden, die einen aktuellen Abstand zwischen der Ist-Bearbeitungskante, insbesondere der Markierung IST1 (Figur 13) und der Soll-Bearbeitungsposition SO1 und/oder der Position der Werkstückmarkierung MA anzeigt. Dadurch erkennt der Bediener leicht den Arbeitsfortschritt und kann entsprechend vor Erreichen der vorderen Bearbeitungskante KV1 und oder der Werkstückmarkierung MA beispielsweise die Drehzahl des Antriebsmotors 13 reduzieren und/oder die Vorschubgeschwindigkeit der Hand-Werkzeugmaschine 10 bezüglich des Werkstücks W verkleinern.

Besonders günstig ist jedoch ein automatisches oder halbautomatisches Konzept. Dabei steuert beispielsweise die Auswerteeinrichtung 80 den Antriebsmotor 13 und/oder einen Stellantrieb 90 und/oder eine Bremse 90 derart an, dass bei Erreichen oder vor Erreichen der Werkstückmarkierung MA die Bearbeitung des Werkstücks W endet. Beispielsweise erkennt die Auswerteeinrichtung 80 anhand der vorgenannten Bildbearbeitungsschritte, insbesondere einer Kantenerkennung, Grauwertbildung und dergleichen mehr, den Verlauf der Markierung MA. Wenn das Arbeitswerkzeug 15 sich bei der Werkstückmarkierung MA befindet, d.h. die vordere Bearbeitungskante KV1 die Werkstückmarkierung MA erreicht, kann beispielsweise die Auswerteeinrichtung 80 den Antriebsmotor 13 abschalten. Alternativ oder ergänzend ist es vorteilhaft, wenn gleichzeitig von der Auswerteeinrichtung 80 eine Bremse 91 aktiviert wird, so dass das Werkzeug 15 möglichst schnell anhält. Des Weiteren ist ergänzend oder alternativ auch eine Ansteuerung eines Stellantriebs 90 zweckmäßig, den die Auswerteeinrichtung 80 beispielsweise zum Austauchen bzw. Entfernen des Arbeitswerkzeugs 15 vom Werkstück W ansteuert, wenn die Bearbeitungskante KV die Werkstückmarkierung MA erreicht.

Das bereits erläuterte erfindungsgemäße Konzept kann nicht nur bei mobilen, relativ zum Werkstück verstellbaren oder führbaren Maschinen realisiert werden, sondern auch bei halbstationären Maschinen, wie beispielsweise bei einer Werkzeugmaschine 110. Die Werkzeugmaschine 110 weist eine Antriebseinheit 111 mit einem Antriebsmotor 113 auf, der zum Antrieb einer Werkzeugaufnahme 14 für ein Arbeitswerkzeug 115, beispielsweise ein Sägeblatt, dient. Die Antriebseinheit 11 ist relativ zu einer Maschinenbasis 129 verstellbar, die auf einem Untergrund abstellbar ist. Beispielsweise ist an der Maschinenbasis 129 ein Führungselement 130, beispielsweise ein Drehtisch, drehbar um eine Achse A1 gelagert. Die Achse A1 steht horizontal zu einer Führungsfläche 132 des Führungselementes 130. Weiterhin ist am Führungselement 130 ein turmartiger Aufbau 134 vorgesehen, von dem Führungsschienen oder Führungselemente 135 abstehen. Die Führungsschienen oder Führungselemente 135 erlauben eine Längsverstellung oder Schiebeverstellung SL entlang einer Schiebeachse A2, so dass das Sägeblatt oder Arbeitswerkzeug 115 sozusagen an einem auf der Führungsfläche 132 aufliegenden Werkstück W entlang linear verstellt werden kann.

Zudem kann die Arbeitseinheit 111 um eine Schwenkachse A3 verschwenkt werden, so dass das Arbeitswerkzeug 115 in unterschiedlichen Tiefen in das Werkstück eindringt.

Der Bediener kann die Antriebseinheit 11 beispielsweise an einem Handgriff 120 ergreifen und bezüglich des Führungselementes 130 in Bezug auf eine oder mehrere der Achsen A1-A3 verstellen.

Auch die Werkzeugmaschine 110 kann mit einer Anzeigeeinrichtung 25 versehen werden, die beispielsweise Sensorsignale oder Werkzeugsensorsignale von Werkzeugsensoren 161, 162 anzeigt, die aneinander entgegengesetzten Seiten des Arbeitswerkzeugs 15, vorzugsweise in oder unterhalb einer Abdeckungseinrichtung 121 für das Arbeitswerkzeug 15, angeordnet sind. An der Anzeigeeinrichtung 25 können dementsprechend ebenfalls sich Ist-Bearbeitungskanten oder Soll-Bearbeitungskanten angezeigt werden.

Dabei ist es möglich, dass bei einer Vorschubbewegung entlang der Achse A2 zunächst ein hinterer, vom Werkzeugsensor 162 stammender Bildausschnitt, anschließend ein vorderer, vom Werkzeugsensor 161 erzeugter Bildausschnitt an der Anzeigeeinrichtung 125 angezeigt werden. In diesem Fall ist eine zeitliche Bedingung maßgeblich, d. h. dass beispielsweise beim Einschalten des Antriebsmotors 113 zunächst der vom Werkzeugsensor 162 erzeugte oder bereitgestellte Bildausschnitt an der Anzeigeeinrichtung 125 angezeigt werden.

Dasselbe Prinzip ist auch bei der Werkzeugmaschine 10 vorteilhaft vorgesehen, sodass beispielsweise durch eine Umschalteinrichtung 84 gesteuert Bildausschnitte angezeigt werden, die anhand der Werkzeugsensorsignale der Werkzeugsensoren 61, 62 erzeugt oder erzeugbar sind.

Die Umschalteinrichtung 84 umfasst beispielsweise ein entsprechendes Programmmodul oder wird dadurch gebildet, welches von dem Prozessor 81 ausführbaren Programmcode enthält.

Ferner kann die Umschalteinrichtung 84 beispielsweise anhand des Neigungssensors 65 und/oder des Beschleunigungssensors 66 ermitteln, ob das Werkzeugsignal des Werkzeugsensors 61 oder das Werkzeugsignal des Werkzeugsensors 62 an der Anzeigeeinrichtung 25 anzuzeigen ist. Ferner kann die Umschalteinrichtung 84 beispielsweise die Werkzeugsignale der Werkzeugsensoren 61, 62 an der Anzeigeeinrichtung 25 entsprechend einer zeitlichen Bedingung anzeigen, beispielsweise abwechselnd nacheinander, zu Beginn eines Betriebs zunächst das Werkzeugsignal des einen Werkzeugsensors, dann das des anderen Werkzeugsensors oder dergleichen.

Schließlich ist noch vorteilhaft, wenn ein manuelles Betätigungselement 76, beispielsweise ein Tastschalter, einen Helligkeitssensor, der durch den Bediener betätigbar ist, oder dergleichen dazu vorgesehen und/oder ausgestaltet ist, die Umschalteinrichtung 84 zum Umschalten zwischen den Werkzeugsignalen der Werkzeugsensor und 61 und 62 anzusteuern.

An dieser Stelle sei erwähnt, dass die Anzeigeeinrichtung 25 eine berührungssensible Anzeigeeinrichtung sein kann, beispielsweise einen sogenannten Touchscreen aufweisen oder als ein solche ausgestaltet sein kann. Durch Betätigen eines vorbestimmten Feldes oder Bereiches der Anzeigeeinrichtung 25 und/oder durch eine vorbestimmte Betätigungsgestik, zum Beispiel eine Wischbewegung oder dergleichen, kann der Bediener Steuerbefehle für die Werkzeugmaschine 10 erzeugen. Der Bediener kann an der Anzeigeeinrichtung 25 beispielsweise ein Steuersignal zur Ansteuerung der Umschalteinrichtung 84 erzeugen, sodass diese beispielsweise simultan beide Werkzeugsignale der Werkzeugsensor und 61 und 62 oder nur eines davon anzeigt.

Beim Eintauchen des Arbeitswerkzeugs 15 in das Werkstück W wird vorzugsweise zunächst das Werkzeugsensorsignal des Werkzeugsensors 62 angezeigt, bei einer anschließenden Vorschubbewegung, die der Beschleunigungssensor 66 erfassen kann oder auch der Neigungssensor 65 durch eine entsprechende Erfassung der Tiefeneinstellposition S1, S2 oder dergleichen, wird das Werkzeugsensorsignal des Werkzeugsensors 61 anschließend angezeigt, so dass der Bediener die vordere Bearbeitungskante angezeigt bekommt. Es ist aber auch eine Zeitsteuerung möglich, dass nämlich zunächst bei Inbetriebnahme der Werkzeugmaschine 10 das Signal des Werkzeugsensors 62, nach einer vorbestimmten oder einstellbaren Zeit das Signal des Werkzeugsensors 61 angezeigt wird.

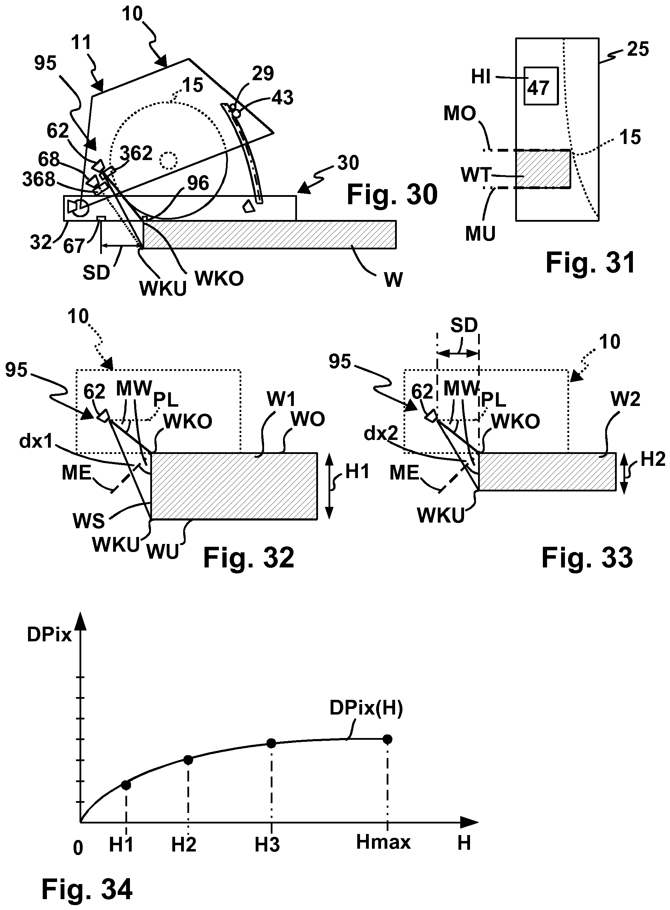

Nachfolgend werden anhand der Figuren 30-34 Funktionen einer Höhenmessung näher erläutert. Eine Höhenmessung hat insbesondere im Zusammenhang mit einer Anzeige einer zu erwartenden Bearbeitungskante große Vorteile. Es ist nämlich vorteilhaft, wenn das Arbeitswerkzeug 15 in einer optimalen Eindringtiefe in das Werkstück W eindringt, wobei dazu die Höhe des Werkstücks bekannt sein sollte. Die optimale Eindringtiefe ist an der Tiefeneinstelleinrichtung 40 einstellbar oder anhand des Stellantriebs 90 einstellbar. Wenn dann noch die sich bei der jeweiligen Tiefeneinstellung oder Relativposition der Antriebseinheit 11 relativ zu dem Führungselement 30 ergebende Bearbeitungskante oder zu erwartende Bearbeitungskante an der Anzeigeeinrichtung 25 angezeigt wird oder sozusagen auch noch automatisch überwacht wird, indem nämlich beispielsweise der Stellantrieb 90 oder die Bremse 91 betätigt werden, ist ein für den Bediener komfortables Konzept erzielt.

Die Höhenmessung der Werkzeugmaschine 10 wird in unterschiedlichen Varianten nachfolgend erläutert:
Eine Höhenmesseinrichtung 95 der Werkzeugmaschine 10 nutzt beispielsweise den hinteren Werkzeugsensor 62. Man erkennt, dass der Erfassungsbereich des Werkzeugsensors 62 optimal auf eine in Arbeitsrichtung hintere Stirnseite des Werkstücks W gerichtet ist, so dass eine Werkstückoberkante WKO und eine Werkstückunterkante WKU im Erfassungsbereich des Werkzeugsensors 62 liegen. Dabei ist die Werkzeugmaschine 10 mit einem Großteil der Führungsfläche 32 auf dem Werkstück W abgestützt, so dass die entsprechende Höhenmessung der Höhenmesseinrichtung 95 bei optimalen Randbedingungen erfolgt.

Im Zusammenhang mit der Höhenmessung wird beispielsweise an dem Display oder Anzeigeeinrichtung 25 das in Figur 31 dargestellte Bild eingeblendet, bei welchem der Bediener einerseits das Arbeitswerkzeug 15 zumindest als Kontur, vorzugsweise aber real, sieht, andererseits aber auch zumindest eine Teilabbildung WT des Werkstücks W, beispielsweise die Stirnseite WS sowie einen Teilabschnitt der Werkstückoberseite WO und die beiden Werkstückkanten WKU, WKO. Zudem werden dem Bediener zweckmäßigerweise Markierungen MO und MU für die Werkstückoberkante WKO und die Werkstückunterkante WKU an der Anzeigeeinrichtung 25 angezeigt.

Die Höhenmessung anhand der Höhenmesseinrichtung 95 kann in verschiedener Weise erfolgen:
Bei einer ersten Variante wird beispielsweise die Werkzeugmaschine 10 so ausgerichtet, dass die Markierung MO für die Werkstückoberkante WKO in Deckung mit der real angezeigten Abbildung des Werkstücks W entsprechend Figur 13 gebracht wird. Sodann kann die Höhenmesseinrichtung 95 beispielsweise aufgrund einer Kontrastmessung oder dergleichen anderen Maßnahmen die untere Werkstückkante WKU erkennen und blendet die Markierung MU ein. Dabei wird bekannt vorausgesetzt, dass ein Messwinkel MW, mit dem die Kamera oder der Werkzeugsensor 62 sozusagen auf die obere Werkstückkante WKO blickt oder indem der Werkzeugsensor 62 zur oberen Werkstückkante WKO steht, wenn die Markierung MO in Deckung mit der im Bild der Anzeigeeinrichtung 25 angezeigten Abbildung des Werkstücks W ist. Der Messwinkel MW ist zwischen einer zu der Führungsfläche 32 parallelen Parallelebene PL und einem Strahl vorgesehen, der sich zwischen der Werkstückoberkante WKO und dem Werkzeugsensor 62 erstreckt. Der gleiche Winkel MW ist auch zwischen einer Messebene ME und der Stirnseite WS des Werkstücks W vorhanden. Somit besteht ein linearer Zusammenhang zwischen einer Höhe H, beispielsweise der Höhe H1 in Figur 32, und einer Distanz dx1 in der Messebene ME, beispielsweise entsprechend einer Anzahl von Pixeln an der Anzeigeeinrichtung 25. Dies wird insbesondere durch den Vergleich der Figuren 32 und 33 deutlich. Bei dem in Figur 32 dargestellten Werkstück W1 ist eine Höhe H1 vorhanden, die sich als Distanz dx1 in der Messebene ME auswirkt. Beim Werkstück W2 hingegen, welches eine Höhe H2 aufweist, ist zwischen einem sich zwischen dem Werkzeugsensor 62 und der Werkstückunterkante WKU erstreckenden Strahl und dem Strahl, der der Werkstückoberkante WKO zugeordnet ist, eine entsprechend kürzere Distanz dx2, die proportional zur Höhe H2 ist, vorhanden.

Die jeweilige Werkstückhöhe wird zweckmäßigerweise an der Anzeigeeinrichtung 25 als eine Höhenangabe HI angezeigt, insbesondere in Zahlenwerten. Bei der Höhenangabe HI in der Zeichnung ist beispielsweise eine Höhe des Werkstücks W von 47 mm angezeigt.

Ein alternatives Messprinzip sieht vor, dass die Höhenmesseinrichtung 95 sich zunächst oder in einem ersten Schritt an der unteren Werkstückunterkante WKU zur Messung der Werkstückhöhe orientiert. Dies kann beispielsweise dadurch geschehen, dass der Bediener die Werkzeugmaschine 10 entsprechend am Werkstück W positioniert oder, bei einem automatischen Verfahren, dass die Höhenmesseinrichtung 95 bei einer Relativbewegung von Werkzeugmaschine 10 und Werkstück W die untere Werkstückkante WKU in einem ersten Schritt ermittelt.

Die manuelle Ausrichtung der Werkzeugmaschine 10 und des Werkstücks W in Bezug auf die untere Werkstückkante wie KU hat den Vorteil, dass der Bediener die in der Regel schwere erkennbare untere Werkstückkante WKU mit seinem genauen Auge selbstständig finden kann. Bei der unteren Werkstückunterkante WKU ist nämlich in der Regel ein geringerer Kontrast zu beobachten, nämlich zwischen dem Werkstück und der Umgebung.

In Bezug auf die Ermittlung der oberen Werkstückkante WKO hingegen tut sich die Höhenmesseinrichtung 95 sozusagen leichter. Beispielsweise ist im Bereich der oberen Werkstückkante WKO ein höherer Kontrast zu beobachten. Der Kontrast wird beispielsweise dadurch hergestellt, dass die Werkstückkante von der Werkzeugmaschine 10 her beleuchtet wird, insbesondere anhand der Beleuchtungseinrichtung 70. Des Weiteren kann die Höhenmesseinrichtung 95 eventuell an der Werkstückstirnseite WS vorhandene Holzmaserungen oder sonstige Querstrukturen als nicht valide Strukturen, die keine Werkstückkante repräsentieren, ausfiltern, weil nämlich die sozusagen letzte Querkontur unterhalb der Führungsfläche 32 als obere Werkstückkante eindeutig identifizierbar ist.

Bei diesem Verfahren ist jedoch kein linearer Zusammenhang vorhanden, sondern in der in Figur 34 angedeutete Verlauf. Dort ist nämlich eine Pixeldistanz DPIX zwischen die Werkstückunterkante WKU und die Werkstückoberkante WKO repräsentierenden Pixeln an der Anzeigeeinrichtung 25 dargestellt, die sich bei verschiedenen Werkstückhöhen H1, H2, H3 sowie HMAX einstellt.

Daraus kann die Auswerteeinrichtung 80 beispielsweise eine Kurve DPIX (von H), d.h. eine Pixeldistanz in Abhängigkeit von einer Werkstück-Höhe, ermitteln. Der Bediener legt also beispielsweise nach und nach Referenz-Werkstücke unter an die Führungsfläche 32 an, um die Kurve DPIX(H) zu ermitteln. Sodann kann die Höhenmesseinrichtung an der Anzeigeeinrichtung 25 beispielsweise die Markierungen MO und MU analog zur Werkstück-Höhe einblenden. Die Kurve DPIX (von H) ist jedoch zweckmäßigerweise bereits vorprogrammiert oder in sonstiger Weise gespeichert.

Anstelle der Ausrichtung der Werkzeugmaschine 10 anhand der optischen Markierung MO ist es aber auch denkbar, dass der Bediener eine sozusagen mechanische oder körperliche Markierung 96, beispielsweise eine Linienmarkierung an dem Führungselement 30, an der Werkstückoberkante WKO ausrichtet.

Die vorgenannten Verfahren sind sozusagen statisch, d.h. der Bediener richtet die Werkzeugmaschine 10 zur Höhenmessung am Werkstück W aus. Wesentlich einfacher sind die nachfolgend erläuterten Maßnahmen, bei denen der Bediener die Werkzeugmaschine 10 und das Werkstück W lediglich relativ zueinander bewegen muss und die Höhenmesseinrichtung 95 sozusagen automatisch die Höhe H des Werkstücks W ermittelt.

So kann beispielsweise eine optische Bilderkennung der Werkzeugmaschine 10 bei einem relativen Verstellen von Werkstück W und Werkzeugmaschine 10 erkennen, wenn die Werkstückoberkante WKO oder die Werkstückunterkante WKU eine Referenzposition bezüglich des Werkzeugsensors 62 einnehmen, beispielsweise die in den Figuren 30, 32 und 33 dargestellte Position. Dazu ist beispielsweise eine Kantenerkennung denkbar oder möglich. In diesem Moment ermittelt die Höhenmesseinrichtung 10 zudem die Position der jeweils anderen Werkstückkante, nämlich der Werkstückoberkante WKO oder der Werkstückunterkante WKU, so dass im Messzeitpunkt beide Werkstückkanten WKO und WKU von der Höhenmesseinrichtung erfasst sind. Es ist möglich, dass die Höhenmesseinrichtung 35 sozusagen einen Schnappschuss dieser Referenzsituation erstellt, d.h. ein Bild, in welchem beide Werkstückkanten WKU und WKO sichtbar sind, wenn die Referenzposition, beispielsweise die in den Figuren 30, 32, und 33 dargestellte Position, beim Relativverstellen von Werkstück W und Werkzeugmaschine 10 eintritt.

Zur Ermittlung einer jeweiligen Referenzposition kann auch eine Referenzlichtquelle 68 genutzt werden. Die Referenzlichtquelle 68 leuchtet sozusagen auf die etwa parallel zum Erfassungsbereich des Werkzeugsensors 62. Wenn die Werkzeugmaschine 10 noch weit vom Werkstück 10 entfernt ist (in Figur 30 also noch nach links verstellt ist) strahlt der Lichtstrahl der Referenzlichtquelle 68, beispielsweise einem Laserstrahl oder Laserpointer, am Werkstück W vorbei. Wird dann die Werkzeugmaschine 10 relativ zum Werkstück W nach vorn verstellt, beispielsweise in die in Figur 30 dargestellte Position, streift das Licht der Referenzlichtquelle 68 die untere Werkstückkante WKU. Die Kamera oder der Werkzeugsensor 62 erkennt die Reflexion an der Werkstückunterkante WKU als ein Triggersignal, beispielsweise um das bereits erläuterte Bild, in welchem die Werkstückunterkante WKU und die Werkstückoberkante WKO sichtbar sind, zu erfassen. Es ist auch möglich, dass der Werkzeugsensor 62 bzw. die Höhenmesseinrichtung 95 in dieser Situation durch Bilderkennung oder andere Maßnahmen die obere Werkstückkante WKO ermittelt, um letztlich aus den Informationen über die Werkstückunterkante WKU und die Werkstückoberkante WKO die Höhe H des Werkstücks W zu ermitteln.

In Figur 38 ist eine entsprechende Vorgehensweise angedeutet. Beispielsweise ist das vom in Arbeitsrichtung hinteren Werkzeugsensor 62 erfasste Bild in Figur 38 dargestellt. Beispielsweise wird die Werkzeugmaschine 10 entlang einer Bewegungsrichtung BR1 über das Werkstück W bewegt. Dabei wandert eine Lichtreflexion LR, die durch ein Referenzlicht erzeugt ist, welches anhand der Referenzlichtquelle 68 auf das Werkstück W projiziert wird, sozusagen von der unteren Werkstückkante WKU zur oberen Werkstückkante WKO und wandert sozusagen entlang eines Weges PL. Bevor das Referenzlicht die untere Werkstückkante WKU erreicht, wird es von der Umgebung des Werkstücks W nahezu nicht reflektiert, was der Werkzeugsensor 62 entsprechend erfasst. Wenn das Referenzlicht über die obere Werkstückkante WKO hinweg bewegt ist, bleibt die Lichtreflexion LR relativ zu beispielsweise dem Arbeitswerkzeug 15 ortsfest. Die Lichtreflexion LR bewegt sich zum einen mit einer Bewegungskomponente parallel zur Bewegungsrichtung BR1, zum andern aber auch quer dazu in einer Bewegungsrichtung BR2. Anhand der Distanzen, die die Lichtreflexion LR in Bezug auf eine oder beide der Bewegungsrichtungen BR1, BR2 durchläuft, beispielsweise der Distanz DR2 in der Bewegungsrichtung BR2, kann die Höhenmesseinrichtung 95, z.B. anhand beispielsweise der in Figur 34 dargestellten Zuordnungsfunktion, die Höhe H des Werkstücks W ermitteln.

Dem Werkzeugsensor 62 und/oder der Referenzlichtquelle 68 können Filter 362, 368 (Figur 30) vorgeschaltet sein, beispielsweise Polarisationsfilter, Farbfilter oder dergleichen. Bevorzugt sind die Filter 362, 368 aufeinander abgestimmt, sodass beispielsweise das Licht der Referenzlichtquelle 68 durch den Filter 368 auf ein vorbestimmtes Farbspektrum eingeschränkt wird, auf welches der Werkzeugsensor 62 anhand des Filters 362 besonders sensibel oder ausschließlich reagiert. Weiterhin ist es möglich, dass der Filter 368 als ein Polarisationsfilter das Licht der Referenzlichtquelle 68 polarisiert, d. h. in einer vorbestimmten Ausrichtung passieren lässt und der Filter 362 als entsprechend ebenfalls ausgerichteter Polarisationsfilter nur Licht mit der Ausrichtung entsprechend der Filterung durch den Filter 362 zur Kamera oder zum Werkzeugsensor 62 durchlässt.

Vorteilhaft ist es aber auch, wenn nur einer der Filter 362, 368 vorhanden ist. So können beispielsweise bei einer Ausgestaltung des Filters 362 als Polarisationsfilter Spiegelungen oder dergleichen, insbesondere durch Einfluss von Fremdlicht oder aufgrund der Referenzlichtquelle 68, ausgefiltert werden. Wenn der Werkzeugsensor 62 für eine bestimmte Lichtfarbe besonders sensibel ist, genügt beispielsweise der Filter 368 zur Beschränkung eines Farbspektrums der Referenzlichtquelle 68 auf diese Lichtfarbe.

Eine kontinuierliche Ermittlung der Werkstückhöhe, indem nämlich ein Längsabstand des Werkzeugsensors 62 und mithin der Höhenmesseinrichtung 95 von der Stirnseite WS erfasst wird, ist beispielsweise anhand eines Abstandssensors 67 möglich.

Der Abstandssensor 67 ist beispielsweise ein Lasersensor, ein Ultraschallsensor oder dergleichen.

## Patentansprüche

1. Mobile Werkzeugmaschine (10), nämlich Hand-Werkzeugmaschine oder halbstationäre Werkzeugmaschine, zur Bearbeitung eines Werkstücks (W), wobei die Werkzeugmaschine (10) ein insbesondere plattenartiges Führungselement (30) mit einer Führungsfläche (32) zum Führen der Werkzeugmaschine (10) an dem Werkstück (W) oder des Werkstücks (W) an der Werkzeugmaschine (10) aufweist, wobei die Werkzeugmaschine (10) eine Antriebseinheit (11) mit einem Antriebsmotor (13) zum Antreiben einer an der Antriebseinheit (11) angeordneten Werkzeugaufnahme (14) zur Aufnahme eines Arbeitswerkzeugs (15) aufweist, wobei die Werkzeugmaschine (10) einen Werkzeugsensor (61, 62) aufweist, dessen Erfassungsbereich (EB1, EB2) zumindest teilweise durch Partikel belastet ist, die bei einer Bearbeitung eines Werkstücks (W) anhand des Arbeitswerkzeugs (15) erzeugt werden, **dadurch gekennzeichnet, dass** sie mindestens ein Optimierungsmittel (OPT) zur Verringerung der Auswirkung der im Erfassungsbereich (EB1, EB2) befindlichen Partikel auf ein Werkzeugsensorsignal des Werkzeugsensors (61, 62) aufweist.

2. Werkzeugmaschine (10) nach Anspruch 1, **dadurch gekennzeichnet, dass** das mindestens eine Optimierungsmittel (OPT) ein digitales Signalverarbeitungsmittel zur Verarbeitung des Werkzeugsensorsignals oder Bildung des Werkzeugsensorsignals umfasst oder dadurch gebildet ist.

3. Werkzeugmaschine nach Anspruch 2, **dadurch gekennzeichnet, dass** das digitale Signalverarbeitungsmittel mindestens einen digitalen Filter zur Filterung von durch die Partikel erzeugten Bildpunkten umfasst oder dadurch gebildet ist und/oder dass das digitale Signalverarbeitungsmittel einen Rangordnungsfilter, insbesondere einen Medianfilter, und/oder einen Histogrammfilter und/oder einen Histogramm-Ausgleich und/oder einen Helligkeitsfilter und/oder einen Gauss-Filter und/oder einen Bilateral-Filter und/oder einen Mittelwert-Filter oder Averaging-Filter umfasst oder dadurch gebildet ist.

4. Werkzeugmaschine nach einem der vorhergehenden Ansprüche, **dadurch gekennzeichnet, dass** das mindestens eine Optimierungsmittel (OPT) eine Beleuchtungseinrichtung (70) aufweist.

5. Werkzeugmaschine nach Anspruch 4, **dadurch gekennzeichnet, dass** die Beleuchtungseinrichtung (70) zu einer diffusen Ausleuchtung des Erfassungsbereichs (EB1, EB2) ausgestaltet ist und/oder dass die Beleuchtungseinrichtung (70) zur Beleuchtung des Erfassungsbereichs (EB1, EB2) des Werkzeugsensors (61, 62) voneinander entgegengesetzten Seiten angeordnet ist und/oder dass die Beleuchtungseinrichtung (70) zur, insbesondere ausschließlichen, Beleuchtung des Erfassungsbereichs (EB1, EB2) in einem Winkel quer zu einer optischen Achse des Werkzeugsensors angeordnet ist, wobei vorteilhaft vorgesehen ist, dass der Winkel mindestens 30°, vorzugsweise mindestens 45°, insbesondere mindestens 60°, besonders bevorzugt mindestens 80° bis 120°, insbesondere etwa 90°, beträgt.

6. Werkzeugmaschine nach einem der vorhergehenden Ansprüche, **dadurch gekennzeichnet, dass** sie eine Abdeckungseinrichtung (21) zur Abdeckung des Erfassungsbereichs (EB1, EB2) gegenüber Fremdlicht-Einflüssen aufweist, wobei vorteilhaft vorgesehen ist, dass der Erfassungsbereich (EB1, EB2) durch die Abdeckungseinrichtung (21) und das Werkstück (W) beim Betrieb der Werkzeugmaschine gegenüber Fremdlicht-Einflüssen abgedeckt ist und/oder dass die Abdeckungseinrichtung (21) eine Schutzabdeckung für das Arbeitswerkzeug (15) bildet, die das Arbeitswerkzeug (15) zumindest partiell einhaust oder abdeckt.

7. Werkzeugmaschine nach einem der vorhergehenden Ansprüche, **dadurch gekennzeichnet, dass** der Werkzeugsensor (61, 62) an oder in einem Staubluftkanal zur Abfuhr von mit Partikeln beladener Staubluft der Werkzeugmaschine angeordnet ist.

8. Werkzeugmaschine nach einem der vorhergehenden Ansprüche oder dem Oberbegriff des Anspruchs 1, **dadurch gekennzeichnet, dass** der Werkzeugsensor (61, 62) unter einer das Arbeitswerkzeug (15) zumindest partiell abdeckenden und/oder einhausenden Abdeckungseinrichtung (21) oder Schutzabdeckung angeordnet ist, wobei vorteilhaft vorgesehen ist, dass der Erfassungsbereich (EB1, EB2) des Werkzeugsensors (61, 62) aus Abdeckungseinrichtung (21) oder Schutzabdeckung heraus, insbesondere auf einen Werkstückkontaktbereich, in welchem das Arbeitswerkzeug (15) in Kontakt mit dem Werkstück (W) ist oder gelangen kann, gerichtet ist.

9. Werkzeugmaschine nach einem der vorhergehenden Ansprüche, **dadurch gekennzeichnet, dass** der Werkzeugsensor (61, 62) eine Kamera umfasst oder durch eine Kamera gebildet ist.

10. Werkzeugmaschinen nach einem der vorhergehenden Ansprüche, **dadurch gekennzeichnet, dass** der Erfassungsbereich (EB1, EB2) des Werkzeugsensors (61, 62) mindestens 45°, vorzugsweise mindestens 60°, insbesondere mindestens 70° beträgt und/oder dass der Werkzeugsensor (61, 62) ein Weitwinkel-Objektiv aufweist und/oder dass der Erfassungsbereich (EB1, EB2) des Werkzeugsensors (61, 62) von Spülluft, insbesondere von einem Saugstrom und/oder einem Kühlluftstrom des Antriebsmotors (13), durchströmt ist und/oder dass an einer dem Erfassungsbereich (EB1, EB2) zugewandten Frontseite des Werkzeugsensors (61, 62) eine transparente Abdeckung, insbesondere eine Frontlinse oder ein Filter, angeordnet ist, wobei die transparente Abdeckung mit einer Gleitbeschichtung versehen ist.

11. Werkzeugmaschine nach einem der vorhergehenden Ansprüche, **dadurch gekennzeichnet, dass** mindestens eine Optimierungsmittel (OPT) einer Spülluft, insbesondere einem Saugstrom oder Kühlluftstrom, separates Mittel ist.

12. Werkzeugmaschine nach einem der vorhergehenden Ansprüche oder dem Oberbegriff des Anspruchs 1, **dadurch gekennzeichnet, dass** sie ein Verschmutzungsprüfmittel zur Prüfung einer Verschmutzung des Werkzeugsensors (61, 62) durch Partikel aufweist, wobei die Werkzeugmaschine (10) zur Verarbeitung des Werkzeugsensorsignals in Abhängigkeit von einem Verschmutzungsgrad des Werkzeugsensors (61, 62) und/oder zur Ausgabe einer Warnung in Abhängigkeit von einem Verschmutzungsgrad des Werkzeugsensors (61, 62) ausgestaltet ist, wobei vorteilhaft vorgesehen ist, dass das Verschmutzungsprüfmittel zur Ermittlung des Verschmutzungsgrads mindestens einen Helligkeitswert in dem Werkzeugsensorsignal und/oder einem für die Ermittlung des Werkzeugsensorsignals vorgesehenen Ausgangssignal des Werkzeugsensors (61, 62) ausgestaltet ist und/oder dass das Verschmutzungsprüfmittel mindestens eine Lichtquelle zur Beleuchtung einer Frontseite des Werkzeugsensors (61, 62) und mindestens einen Lichtsensor zur Ermittlung einer Reflexion der Frontseite des Werkzeugsensors (61, 62) in Abhängigkeit von einer Verschmutzung der Frontseite des Werkzeugsensors (61, 62) durch Partikel aufweist.

13. Werkzeugmaschine nach einem der vorhergehenden Ansprüche, **dadurch gekennzeichnet, dass** der Erfassungsbereich (EB1, EB2) des Werkzeugsensors (61, 62) einen Werkstückkontaktbereich, in welchem das Arbeitswerkzeug (15) in Kontakt mit dem Werkstück (W) ist, insbesondere eine durch die Bearbeitung des Werkstücks anhand des Arbeitswerkzeugs (15) entstandene oder entstehende Bearbeitungskante (KV, KH) umfasst und/oder dass der Erfassungsbereich (EB1, EB2) des Werkzeugsensors (61, 62) einen in einer Arbeitsrichtung, entlang derer die Werkzeugmaschine (10) an dem Werkstück (W) oder das Werkstück (W) an der Werkzeugmaschine entlang führbar ist, vorderen Bereich umfasst und/oder dass der Werkzeugsensor (61, 62) zur Erfassung einer an dem Werkstück angeordneten Werkstückmarkierung (MA) ausgestaltet und/oder ausgerichtet ist.

14. Werkzeugmaschine nach einem der vorhergehenden Ansprüche, **dadurch gekennzeichnet, dass** sie zur Bereitstellung mindestens einer Funktion in Abhängigkeit von einer Erfassung einer an dem Werkstück (W) angeordneten Werkstückmarkierung (MA) ausgestaltet ist, wobei vorteilhaft vorgesehen ist, dass die mindestens eine Funktion eine Anzeige eines Abstands einer aktuellen Bearbeitungskante (KV, KH) von der Werkstückmarkierung (MA) und/oder eine Ansteuerung der Antriebseinheit (11) und/oder ein Abbremsen des Arbeitswerkzeugs (15) und/oder eines Stellantriebs (90) der Werkzeugmaschine (10) zum Verstellen der Antriebseinheit (11) relativ zu der Führungseinheit in Abhängigkeit von einem Erreichen der Werkstückmarkierung (MA) umfasst.

15. Werkzeugmaschine nach einem der vorhergehenden Ansprüche, **dadurch gekennzeichnet, dass** sie mindestens einen Werkzeugsensor (61, 62) an einer von der Antriebseinheit (11), insbesondere dem Antriebsmotor (13), abgewandten Seite, insbesondere freien Stirnseite, des Arbeitswerkzeugs (15) oder der Werkzeugaufnahme (14) und/oder mindestens einen Werkzeugsensor (61, 62) an einer der Antriebseinheit (11), insbesondere dem Antriebsmotor (13), zugewandten Seite des Arbeitswerkzeugs (15) aufweist und/oder dass der Werkzeugsensor (61, 62) außerhalb eines Abstands zwischen der Führungsfläche (32) und einer Drehachse (DW) des Arbeitswerkzeugs (15), zumindest wenn das Arbeitswerkzeug (15) vor die Führungsfläche (32) vorsteht, angeordnet ist.
